Europäisches Patentamt

European Patent Office

Office européen des brevets

(11) Publication number: 0 366 318
A2

# (12) EUROPEAN PATENT APPLICATION

(21) Application number: 89310561.9

(22) Date of filing: 13.10.89

(51) Int. Cl.5: G06F 7/48

(30) Priority: 26.10.88 US 263112

(43) Date of publication of application:
02.05.90 Bulletin 90/18

(84) Designated Contracting States:
DE FR GB

(71) Applicant: APOLLO COMPUTER INC.
330 Billerica Road
Chelmsford Massachusetts 01824(US)

(72) Inventor: Flahive, Barry J.
2 Parker Circle
Westford Massachusetts 01886(US)
Inventor: Manton, John
112 Denoncourt Street
Marlboro Massachusetts 01752(US)
Inventor: Kahaiyan, Michael
394 Cedar Street
E. Bridgewater Massachusetts 02333(US)

(74) Representative: Arthur, Bryan Edward et al
Withers & Rogers 4 Dyer's Buildings Holborn
London EC1N 2JT(GB)

(54) Floating point pipeline processor.

(57) Apparatus and method for providing a floating point pipeline processor wherein selected operations are advanced at least one half clock cycle before other operation. The floating point processor according to the present invention starts the multiplication process half a clock cycle ahead of the arithmetic logic unit instructions, and internal processes are double cycled at twice the processor clock frequency so that all necessary floating point operands are available at the appropriate pipeline process cycle time.

EP 0 366 318 A2

## FIELD OF THE INVENTION

The present invention relates to pipeline processors, and in particular to split pipeline floating point pipeline processors.

## BACKGROUND OF THE INVENTION

Due to pin limitations, different technologies, limited ports on the register file and double precision computations, implementation of a high speed pipeline floating point processor is difficult. If the pipeline is split into three separate pipelines, the IO pipeline, the arithmetic logic unit (Alu) pipeline and the multiplier (Mul) pipeline, there will not be enough ports on the register file circuit chip or enough pins on the floating point register (FRF) circuit chip to supply double precision operands to the Mul and Alu chips. Secondly, the Mul instructions may execute in different time periods than the Alu instructions. Thus, practical and economical implementation are not available.

## SUMMARY OF THE INVENTION

The floating point processor of the present invention comprises a floating point control (FPC) chip, two FRF chips, a Mul chip and an Alu chip. The floating point processor dispatches a memory reference, an Alu instruction and a Mul instruction every cycle. The processor starts the Mul instruction half a clock cycle earlier than the Alu instruction. The register file is double cycled so that the Mul instruction operands are read in the first half of the register file read cycle, and the Alu operands are read in the second half. The operands are sent to the Mul or Alu chip by multiplexing the 64 bits of each double precision operand of data onto the 32 bit operand buses. (Single precision is a simple case).

Moreover, the present invention avoids the problem that multiple pipeline implementation cannot simultaneously feed multiple results into a single register file. Because the register file according to the present invention is double cycled, the result of the Mul data associated with the Load is multiplexed.

## BRIEF DESCRIPTION OF THE DRAWINGS

These and further features of the present invention will be better understood by reading the following detailed description taken together with the drawing, wherein:

Fig. 1 is a block diagram of a one embodiment of the floating point processor according to the present invention; and

Fig. 2 is a timing diagram showing the signal timing of the embodiment shown in Fig. 1.

Further details of one embodiment of the present invention are provided in Appendix I.

## DETAILED DESCRIPTION OF THE INVENTION

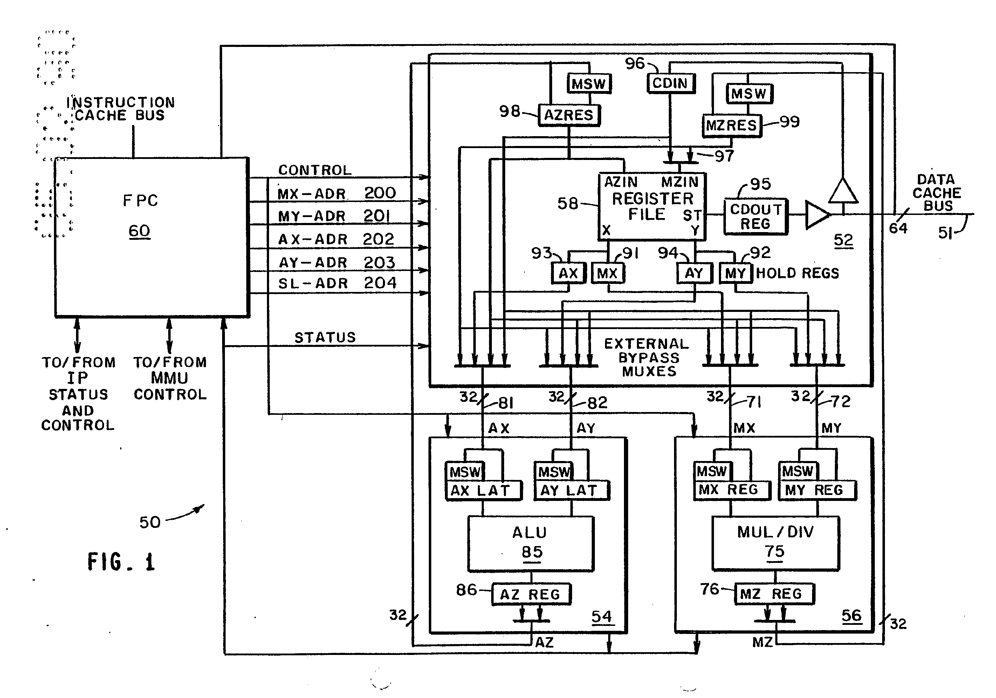

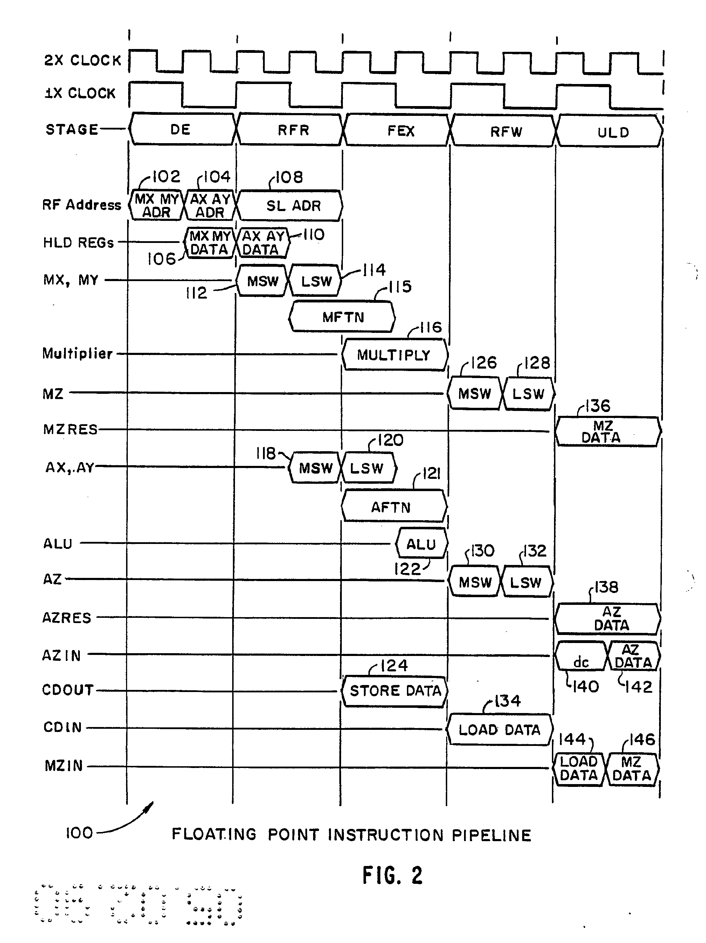

The Floating Point pipeline according to the present invention includes five distinct stages: Decode (DE), Register File Read (RFR), Floating Point Execute (FEX), Register File Write (RFW) and Unload (ULD), shown in the timing diagram 100 of Fig. 2 and operable in the apparatus exemplified in the block diagram 50 of Fig. 1. The Floating Point (FP) instruction is decoded in the Decode stage. Any interactions with previous instructions still in execution are determined and, if conflicts exist, execution of the new instruction is stalled until the conflicts no longer exist.

The MX and MY addresses are sent from the FPC 60 to FRF 58 in the first half cycle (102) on leads 200 and 201, respectively. During the second half cycle (104), the AX and AY addresses are sent from FPC to FRF on leads 202 and 203, respectively. Also during the second half cycle (106), the data at locations MX and MY are read out of the register file 58 into the MX and MY HLD registers 91 and 92, respectively.

During the Register File Read stage (RFR), SL_ADR for a Load or Store is sent (108) to the FRF 52 in leads 204. The most significant word (MSW) of the Mul's source operands (which are in the MX and MY HLD registers) is transferred (112) from FRF 52 to the Mul chip in the first half cycle, and the data at locations AX and AY are read out (11) of the register file 58 into the AX and AY HLD registers 93 and 94, respectively. During the second half cycle, while the MSW in the AX and AY HLD REGs is transferred from FRF to the Alu chip (118), at least significant word (LSW) in the MX and MY HLD REGs is transferred (114) from FRF to the Mul chip 56. Because a Mul instruction (116) will start at the beginning of the next cycle, the Mul's opcode (MFTN) is sent (115) from FPC to the Mul chip.

During the Execute stage (FEX) of the instruction, the results are calculated in the Alu and/or Mul chips 54 and 56. All Mul instructions finish executing in this stage, except DIVs and SQRTs which take longer. All Alu instructions finish executing in the second half cycle. The LSW in the AX and AY HLD REGs is transferred from FRF to the Alu chip in the first half cycle (120). Also, the Alu's opcode (AFTN) is sent (121) from FPC (60) to the Alu chip 54. For a Load, the Data Bus 51 has valid data. For a Store (124), the FRF drives the CDOUT register 95 onto the Data Cache Bus 51.

During the Register File Write cycle (RFW), the MSWs in the AZ and MZ registers are transferred from the Alu and Mul chips to the FRFs' AZ MSW and MZ MSW registers in the first half cycle (130, 126 respectively). In the second half cycle, the LSWs are transferred from the Alu and Mul chips (132, 128 respectively) to the low half of the FRFs' AZRES and MZRES registers while the MSWs are moved internally from the FRFs' AZ MSW and MZ MSW registers to the high half of the AZRES and MZRES registers. For a Load, the Data Bus is read (134) into the CDIN register 96.

The final operation is the Unload (ULD) cycle. For a Load, the CDIN REG 96 is multiplexed 97 with the Mul's result (136). In the first half cycle, the Load data (96) is clocked into the register file 58 MZIN register (144). In the second half cycle, contents of the AZRES and MZRES registers 98, 99 are transferred to the AZIN and MZIN registers (142, 146 respectively) while the Load is considered written into the register file 58. At the end of this cycle, the AZIN and MZIN registers (142, 146) are written into the register file 58.

Further details of related apparatus are more fully described in APOLL-105XX, entitled METHOD AND APPARATUS FOR CONCURRENT DISPATCH OF INSTRUCTIONS TO MULTIPLE FUNCTIONAL UNITS, FILED October 7, 1988, and APOLL-109XX, entitled METHOD AND APPARATUS FOR EXCEPTION HANDLING IN PIPELINE PROCESSORS HAVING MISMATCHED INSTRUCTION PIPELINE DEPTHS, filed October 19, 1988, both incorpcrated herein by reference. Other modifications and substitutions made by one of ordinary skill in the art according to the teachings of the present invention are considered to within the scope of the present invention which is not to be limited except by the claims which follow.

## Claims

1. A floating point processor, comprising:
means for providing a first arithmetic process means requiring a first number of clock cycles to execute;
means for providing a second arithmetic process means requiring a second number of clock cycles to execute, including
means for providing a selected number of said arithmetic cycles at a clock rate being a multiple of said first arithmetic process clock rate.

2. The floating point processor of claim 1, wherein:
said first process means includes an arithmetic logic unit; and
said second process means includes an operand multiple means, wherein
at least one cycle of said operand multiple means operates at a clock rate being a multiple of said arithmetic logic unit clock rate.

3. A method of providing floating point processing of data, comprising the steps of:
providing a first floating point process operable at a first clock cycle rate;
providing a second floating point process operable at least at said first clock rate and having at least one cycle operable at a second clock cycle rate, wherein
said second clock cycle rate is a multiple of said first clock cycle rate.

4. The process of claim 3, wherein said first floating point process includes an arithmetic logical operation and said second floating point process includes a floating point multiple operations, and said multiple is two.

FIG. 1

100 — FLOATING POINT INSTRUCTION PIPELINE

FIG. 2

APPENDIX I

**AT
Floating
Point Control
Functional Specification**

**REV 4**

**18 FEB, 1988**

**apollo computer inc.**
330 Billerica Road
Chelmsford, MA 01824

# AT FLOATING POINT CONTROL FUNCTIONAL SPECIFICATION

1.0  Overview of Floating Point Unit

2.0  Mul & Alu Pipeline Control

3.0  FPU IO

4.0  FP Instruction Architecture

5.0  Stalls, Exceptions & Traps

6.0  Floating Point Processor Registers

7.0  Signal Description

8.0  FP Opcodes

9.0  Register File Chip

10.0 Timing Considerations

Apollo Confidential                    1-1                    Feb 18, 1988

# 1. OVERVIEW OF FLOATING POINT UNIT

The AT Floating Point Unit is a five chip co-processor which provides the registers, data paths and control necessary to implement the instructions described in the "Specification of the AT Floating Point Architecture" as well as part of some instructions described in the "AT Instruction Set" (LOAD, STORE, MxPR, BR). The floating point unit operates synchronous to the Integer Processor (IP) and relies upon the IP for most control in dispatching instructions and loading and storing of data. The floating point unit hardware does not have the capability to implement the full architecture requirements by itself, so an "Interlude Handler" will supplement the hardware and export to the *user* all functionality required by the architecture.

This specification will concentrate on describing the Floating Point Control chip, and Floating Point Register File chip as a prelude to their design.

## 1.1 FLOATING POINT UNIT COMPONENTS

The FPU consists of five components as follows:

1. The Floating Point Control chip (a.k.a. **FPC**), a 257-pin 13K gate array (ICS 10130).

2. The Floating Point Register File chip (upper) (a.k.a. **FRF**). This handles the msw of a longword. It is a 257-pin 22K gate array with GPR (ICS 10220G).

3. The Floating Point Register File chip (lower) (a.k.a. **FRF**). This handles the lsw of a longword. It is a 257-pin 22K gate array with GPR (ICS 10220G). This is the same gate array used as the Floating Point Register File chip (upper)—the design is sliced and is position independent.

4. The Floating Point Arithmetic and Logic Unit (a.k.a. **ALU**), a 169 pin pga. This is a standard vendor part.

5. The Floating Point Multiplier (a.k.a. **MUL**), a 169 pin pga. This is a standard vendor part.

FIG 1.1 shows an overview block diagram of the FPU showing the major components. In general, the FPC observes the instruction stream as it is fetched by the IP; identifies instructions involving the FPU; and dispatches appropriate control to the FRF, ALU and MUL to complete the instruction. The FRF contains a register file and the data paths necessary for moving data between the data cache bus and the register file; as well as data paths for moving data between the register file and the ALU and MUL. The ALU provides data paths for Add/Subtract/Move/Compare type instructions (both integer and floating). The MUL provides data paths for Multiply (integer and floating), Divide (floating), and Square Root (floating).

**FIG 1.1**

**FPU OVERVIEW BLOCK DIAGRAM**

An additional component of the FPU is the "FP Trap PC Queue" which is located in the MMU chip in order to save pins on the other chips of the FPU. The FP Trap PC Queue saves the program counter address of instructions dispatched into the FPU in order to

allow restart of instructions in the shadow of an instruction which encounters an FP Exception (more on this in Chapter 6).

Figure 1.2 is a block diagram of the major functional units of the FPU with each block shaded to identify its physical location.

As instructions are fetched by the IP the contents of the Instruction Cache are registered on the FPC in the FP Instruction Register (FP IR). Sixteen bits of the instruction fetched by the IP--plus 32 additional bits--are held in the FP IR. The sixteen bits are used to identify if the additional 32 bits need to be interpreted as an FP instruction, as well as identifying loads, stores and MxPRs to the FPU registers and branches on FP condition codes. The additional 32 bits, when valid, identify operations to be performed by the ALU and/or MUL as well as source and destination registers for the data in the register file. All of this information is then used to form instructions which are placed on one of three parallel control pipelines--one each for ALU operations; MUL operations; and I/O operations (i.e. LOAD/STORE/MxPR). Three pipelines are used since the AT architecture provides the ability to dispatch operations for all three (or any one) in only one instruction. Before information is dispatched into the control pipelines all data and control interlocks are resolved such that once dispatched a control pipeline can, in general, complete in a straightforward fashion without stalling.

The control pipelines provide control information to the FRF, and as appropriate, to the ALU and MUL. In addition, the control pipelines provide the information to identify data and control interlocks. The ALU and MUL control pipelines are described in Chapter 2. The I/O control pipeline is described in Chapter 3.

The 64-by-32 register file is implemented as an eight-port structure capable of reading five 64-bit registers and writing three 64-bit registers every 50 nS cycle. The actual register file has only three read ports and two write ports--with two of the read ports and one of the write ports double cycled. The five registers which are read from the register file are supplied to the ALU (two registers) the MUL (two registers) and the Data Cache (one register). The three registers which are written come from the ALU, the MUL, and the Data Cache. This structure allows the complete independence between the ports required by the independent control pipelines.

Providing eight 64-bit ports on the FRF chips is both impractical and unnecessary. Load and Store data to the data cache share one 64-bit port (though because of the pipeline it may be necessary to both read and write cache data into the register file in the same cycle). Both the ALU and MUL require three 32-bit ports to the FRF chips--when a 64-bit quantity is transfered, the 32-bit port is double cycled.

The ALU and MUL have a common architecture consisting of three input registers--for two operands and a command; a processing unit; a pair of output registers--for a result operand and status; as well as some internal control registers.

**FIG 1.2**

**FPU MAJOR FUNCTION BLOCK DIAGRAM**

Result status from the ALU and MUL is returned to the FPC where it is used to update bits in a Processor Status Word (PSW) and a Status/Control register.

## 1.2 FLOATING POINT UNIT OPERATION

The Floating Point Unit operates concurrently with the Integer Processor, but because of the complexity of Floating Point operations as well as the large physical size of the FPU (streching across six chips) it is necessary for the FPU to have a deeper pipeline than the IP. This deeper pipeline results in FP instructions completing substantially later than an IP instruction dispatched at the same time—thus exceptions from FP instructions can be delivered several instructions after the corresponding IP instruction completes. (The only alternative to this aproach is to postpone IP completion until FP catches up—this would result in substantial sacrifice of both integer and floating performance.) When an FP exception is encountered there may be a number of instructions in the FP pipeline. These instructions must be restarted by an "Interlude Handler" before processing can resume. Examples of FP exceptions are numbers which underflow the normalized number range and must be specially processed in the ALU and/or MUL—these exceptions are not visible to the user—they correspond to limitations on the hardware which must be exceeded to implement the AT architecture. The FPU pipeline is discussed in Chapter 2 and in Chapter 5.

Data is written to or read from memory using an FP LOAD or an FP STORE instruction. FP LOAD/STORE is executed in conjunction with the Integer Processor who supplies the address while the FPU sources or receives the data. Any exceptions (E_STALL or E_TRAP) associated with the LOAD or STORE are handled, for the most part, outside the FPU—on an E_STALL, the FPU simply waits until the E_STALL is finished to again source or receive the data. An E_TRAP aborts the LOAD or STORE's in the pipe. The FPU I/O pipeline and the E_STALL and E_TRAP conditions are discussed in Chapter 3, and in Chapter 5.

Control and status registers internal to the FPU are written and read using MTPR and MFPR instructions respectively. The MxPR instructions are done in conjunction with the Integer Processor in a similar manner to the LOAD and STORE. The MxPR instructions are also used to move data between the integer register file (in the IP) and the FPU register file.

Timing in the FPU is more complex than in the rest of the CPU since several parts of the FPU must operate at twice the frequency of the IP—while at the same time processing of divides and square roots can substantially increase the latency through the processing unit in the MUL chip. Thus the FPU must deal with the CPU's steady 50 nS beat; the up-tempo double cycle of the register file and the interfaces to the ALU and MUL; as well as the occasional syncopation of a long processing step. Clocks inside the FPU are generally labeled 50EVEN (CKE), 50ODD (CKO), or CK25 (see Figure 1.3). CK25 contains a rising edge every 25 nS (i.e. it is a 40 MHz square wave). CKE contains a rising edge every 50 nS—this is the same as the clock used in the rest of the CPU. CKO contains a

FIG 1.3
FPU CLOCKS

rising edge every 50 nS also, but is 180 degrees out of phase with CKE--that is, CKO has a rising edge at the time that CKE (and the rest of the CPU) has a falling edge. CKO (and in some cases CKE) are not actually produced but rather they are effected by distributing CLK25 to the flip-flops and using a phasing circuit connected into the enable of the flip-flop. CKE may also be effected by using the normal 50 nS clock of the CPU. Chapter 10 has additional discussion of the FPU clocking.

## 1.3 FLOATING POINT CONTROL CHIP

The FPC handles all the signalling to and from the FPU to the IP and MMU gate arrays, and issues the appropriate signals to the FRF slices, FALU and FMPY chips to execute the instructions. The FPC is responsible for handling all stalls, traps and exceptions that are encountered. FIG 1.4 shows a block diagram of the FPC with additional details of the signals passed both within the function blocks on FPC as well as the signals with which FPC communicates with the rest of the FPU and the CPU.

## 1.4 FLOATING POINT REGISTER FILE

There are two identical Floating Point Register File chips which together form a 64 location by 32 bit file. The FRF contains all of the operand bypassing circuitry and the 64 bit IO interface to the data cache bus. The register file will be read or written in a 25ns time period to obtain the required data bandwidth. Fig. 1.5 shows a simplified block diagram of the register file chips. The two chips are identical designs and are wired into the circuit such that one chip provides the low sixteen bits of the interface to the ALU and MUL

**FIG 1.4**

**FPC BLOCK DIAGRAM**

chips, while the other chip provides the upper sixteen bits of interface (i.e. the AX, AY, AZ, MX, MY, and MZ). In order to correctly connect to the Cache Data Bus, the two chips connect to the corresponding bits, within 32-bit longwords of the Cache Data Bus. That is, the chip which supplies the low sixteen bits of AX,... connects to bits (47:32) and bits (15:0) of the Cache data bus.

The FRF architecture is selected for maximum performance on double precision data access. The file structure is thirty-two 64-bit words. Every access to the file accesses a 64-bit word—in those cases where single precision data is accessed, the available data

1-8 Feb 18, 1988

−15−

**FIG 1.5**

**FRF PAIR -- SIMPLIFIED BLOCK DIAGRAM**

bandwidth is not fully used. The multiplexing of double precision data onto 32-bit interfaces to the ALU and MUL makes handling of single precision data straightforward in most cases. Because single precision quantities may have arbitrary longword alignment in memory, a rotator function must be inserted between the register file and the Data Cache Bus.

The FRF includes internal bypassing to decrease the number and duration of data interlocks encountered when recently produced or loaded data is required for processing or for storing. Bypass paths, outside the GPR, are from the data cache bus interface (CDIN REG) to AX, AY, MX, and MY; and from the AZRES and MZRES registers to the MX and MY outputs. Bypassing, internal to the GPR, is from the AZ and MZ input registers of the GPR (inside the register file block of FIG 1.5) to the the AX , AY, MX and MY

outputs, and from the CDIN REG to the CDOUT REG.. Bypassing to the Cache Data Bus is not required from the AZ and MZ inputs, since exception conditions do not settle sufficiently to allow releasing the data to the Data Cache until a time when the data is stable in the file.

See Chapter 9 for more details on the FRF bypassing.

## 1.5 FLOATING POINT ALU AND MULTIPLIER

The ALU and MUL are bipolar chips which use ECL for internal paths and a TTL I/O structure. FIG. 1.6 shows a block diagram of the ALU and MUL which includes only those functions which are used in the FPU. The ALU and MUL share a common architecture with a function unit prefaced by an input section and followed by an output section.

The input section consists of operand paths which demultiplex the X and Y inputs by means of MSW latches (XB and YB) and hold the 64-bit operands in a register/latch (XA and YA) while the function unit processes the operands. The input section also contains an instruction register/latch (INSTR) which is loaded whenever the XA or YA is loaded. The signal "R/L1" controls whether XA, YA, and INSTR act as registers or as latches.

The function unit is designed to be treated as a combinational path. The function unit also contains three registers which control its operation and hold the status of the most recently completed operation. These registers are the Mode register the Interrupt register and the Flag register. The mode register controls such things as rounding modes and data formats. The flag register is loaded with the status of an operation as the result is clocked into the output of the MUL or ALU. The interrupt register holds control bits which allow an 'interrupt' signal to be asserted if certain flags are asserted—the FPU uses the interrupt signal to abort writes to the register file when an operation encounters an exception. Additional information on the mode, flag and interrupt registers can be found in Chapter 6.

The output section consists of a register/latch (ZA) and a multiplexer for placing the parts of the 64-bit result onto the 32-bit Z port. Similar to the input section the register or latch function of ZA is contolled by the signal R/L2 (which also controls similar function of the mode, flag and interrupt registers). The output section clock is independent of the input section clock.

The XA, YA, INTR, ZA, and mode, flag and interrupt registers are connected to a scan path. No boundary scan is available on these chips.

### 1.5.1 Special considerations for the ALU and MUL

There are several characteristics of the ALU and the MUL which limit their ability to implement the full requirements of the AT architecture. Some of the more important characteristics are:

**FIG 1.6**

**ALU/MUL ARCHITECTURE**

**Handling of denormalized results:** the ALU and MUL do not produce denormalized numbers when a calculation underflows the normalized number range. Rather they produce "wrapped" numbers which must be "unwrapped" before calculations can proceed.

**Handling of denormalized inputs:** the MUL cannot handle denormalized inputs. Whenever the MUL must process a denormalized number, the number must first be "wrapped".

**Sense of Signaling/Quiet Not-a-Numbers:** the ALU and MUL interpret the most significant fraction bit of a NaN to mean signaling when set. The AT architecture requires that the most significant fraction bit mean signaling when it is cleared. (This has been chosen to be consistent with the 68881 format.)

In each of these cases the FPU will have to generate an exception so that the interlude handler can provide the correct results. This is not believed to cause substantial performance penalty since the frequency of occurrence of denormalized numbers and NaNs is vanishingly small.

## 2. Multiply Pipeline Control & Alu Pipeline Control

The Mul and Alu Pipeline Control keeps track of all FP register to register instructions and generates the control signals to the FRF chips, the Mul & Alu chips, and itself. The basic pipeline model for the FPU during floating point register–register instructions consists of 5 distinct stages. FIG 2.1 shows control signal generation as an FP instruction progresses through the Mul and Alu Pipeline Control. FIG 2.7 illustrates the stages of a 5 Operand Double Precision instruction, and FIG 2.8 illustrates a stream of 5 Operand Double Precision instructions. Single Precision instructions are derived by treating the MSW blocks as don't cares. The following basic example describes a 5 Operand Double Precision instruction. Remember that the FPU's operation is conditioned on the state of the Mul & Alu chips' registers as defined in Chapter 6. Other nonportable code such as the Interlude Handler may change these registers' state which will alter the FPU's behavior.

### 2.1 Basic Mul & Alu Pipeline Control

**Instruction Fetch             (IF)**

The first stage is identical to that for the integer machine and is the instruction fetch from memory. In this stage an instruction pointed to by the Current PC in the integer machine is transferred from main memory to the FP Instruction Register.

**Decode               (DE)**

The second stage is the decode stage where the FP instruction in the FP IR is decoded. The Mul and Alu pipelines share the FP IR. Any interactions with previous instructions still in execution are determined and if no conflicts exist, the decode stage generates the control signals to the FRF chips for the source addresses. If conflicts do exist, execution of the new instruction is Istalled until the previous conflicting instructions have completed.

Further detail in FIG 2.1 and 2.7 shows the MX & MY addresses sent from the FPC to FRF in the first 25ns. During the second 25ns, the AX & AY addresses are sent from FPC to FRF. If the instruction is a 5 Operand one, FRD & FRE are muxed over as the source addresses for the Alu half. Also during the second 25ns, the data at locations MX & MY are read out of the GPR into the MX & MY HLD REGs. The LSW_SEL is simply the lsb of the source address ORed with Double Precision.

**Register File Read         (RFR)**

The third stage is the Register File Read of the source operands. All instructions take on 50 ns cycle in the Register File Read Stage. In the RFP stage, the pipelines split. The Mul's pipeline is composed of the MRFR, MFEX, MRFW and MULD registers. And the Alu's pipeline is composed of the ARFR, AFEX, ARFW and AULD registers. If the

instruction is a Mul, then the MRFR register is clocked as valid with the appropriate control signals, and ARFR is clocked as invalid. The converse is true if it's an Alu instruction. If it's a 5 OP instruction, then both MRFR & ARFR are clocked as valid with the appropriate control signals. Because Mul instructions are started earlier than Alu instructions, we have to send MFTN, the Mul's opcode, sooner than AFTN.

Further detail in FIG 2.1 and 2.7 shows the MSW in the MX & MY HLD REGs is transfered from FRF to the Mul chip in the first 25ns, and the data at locations AX & AY are read out of the GPR into the AX & AY HLD REGs. During the second 25ns, while the MSW in the AX & AY HLD REGs is transfered from FRF to the Alu chip, the LSW in the MX & MY HLD REGs is transfered from FRF to the Mul chip. Also, the Mul's opcode (MFTN) is sent from FPC to the Mul chip. The FP PC Queue is signaled to load at the end of this cycle if there's a valid FP instruction in this stage.

**FP Execute** (FEX)

The fourth stage is the instruction's FP Execute Stage in the Alu and/or Mul chips. All instructions except DIVs & SQRTs take one 50 ns cycle. Because DIV & SQRT have longer FP Execute Stages, they cannot be pipelined. The control data in MRFR is clocked into MFEX and similarly for the Alu side.

Further detail in FIG 2.1 and 2.7 shows the 50ns FP Execute Stage in the Mul chip. The Mul chip needs to deassert MPLEN in order to hold the operands and opcode during DIVs and SQRTs because they have an FEX cycle longer than 50ns. The cycle times for DIV & SQRT are in the chart below. In the first 25ns, the LSW in the AX & AY HLD REGs is transfered from FRF to the Alu chip. Also, the Alu's opcode (AFTN) is sent from FPC to the Alu chip. In the second 25ns, FIG 2.7 shows the 25ns FP Execute Stage in the Alu chip.

**Register File Write** (RFW)

The final operation is the write cycle to the Register File, FP CSR and FP PSW. All instructions take one 50 ns cycle in the Register File Write Stage. The control data in MFEX is clocked into MRFW and similarly for the Alu side.

Further detail in FIG 2.1 and 2.7 shows the MSWs in the AZ & MZ registers are transfered from the Alu & Mul chips to the FRFs' AZ MSW & MZ MSW registers in the first 25ns. In the second 25ns, the LSWs are transfered from the Alu & Mul chips to the low half of the FRFs' AZIN & MZIN registers while the MSWs are moved internally from the FRFs' AZ MSW & MZ MSW registers to the high half of the AZIN & MZIN registers. In the case of a single precision result, the MSW is an exact copy of the LSW. We take advantage of this fact by not muxing from the AZ & MZ registers to the high half of the AZIN & MZIN registers. Instead, we use the data in the AZ MSW & MZ MSW registers.

The destination addresses and write enables are sent from FPC to the FRF chips. M_IN-TRPT and A_INTRPT are sent from the Mul & Alu chips to FPC and FRF. An FP Exception Trap will assert M_INTRPT, A_INTRPT or possibly both during a 5 OP where both halves generated an FP Exception. These two signals inhibit writes to the GPR. When the Mul & Alu chips execute an FP Integer instruction, the M_INTRPT & A_INTRPT signals could be asserted due to overflow. Because the model for FP Integer instructions is that they never produce exceptions, we need a signal which tells the RFR chips to ignore M_INTRPT & A_INTRPT and always write the result into the GPR according to the WREN bits. That signal is called ALLOW_RFW. Therefore the enable equation inside the FRF chips is WREN * (ALLOW_RFW + not M_INTRPT * not A_INTRPT).

AULD & MULD are not stages but they hold registered signals for the MMU to unload the oldest valid entry in the FP PC Queue. An FP Exception Trap will inhibit unloading.

```
       1     2     3     4     5
     |     |     |     |     |     |
     | IF  | DE  | RFR |FEX |RFW |
     |     |     |     |     |     |

     any instruction but DIV or SQRT


       1     2     3     4  . ...   n    n+1
     |     |     |     |     |     |     |     |
     | IF  | DE  |RFR |FEX |  ... |FEX |RFW |
     |     |     |     |     |     |     |     |

              DIV or SQRT
```

The chart below lists the cycle times for single, double and integer operations. The values represent the number of 50 ns cycles it takes the instruction to do the DE, RFR, FEX and RFW stages, all with no stalls. See Chapter 8 for further details as to which FP opcodes are considered single, double and integer operations.

| Operation | Single | Double | Integer |
|-----------|--------|--------|---------|
| Alu       | 4      | 4      | 4       |
| Mul       | 4      | 4      | 4       |
| DIV       | 7      | 9      | 16      |
| SQRT      | 9      | 15     |         |

### 2.1.1 Mul & Alu Pipeline Control Registers

FIG 2.2 shows the details of the Mul & Alu Pipeline Control Registers. Only the major pieces are shown. Each RFR, FEX & RFW register contains the instruction's Function Code, the C bit which sets condition codes if set, and a valid bit. The destination address has a format bit called DP (SP = 0 and DP = 1), and a valid bit. Each source address has

a format bit and a valid bit. Conversions between formats need the format bits to reflect the format of the respective address. For example, CVT.sd will have an SP source and a DP destination. And some FP instructions have sources but no destination, and visa versa which explains why each address needs a valid bit. The format and valid bits are also used in the Match Logic. Both ULD registers need only a valid bit for unloading the FP PC Queue.

The Function Code is generally the opcode sent to the Mul and Alu chips. One exceptional case is 5 OPs where the Function Code must be messaged before it is shipped. Another rule breaker is UNWRAP. Before issuing an UNWRAP, the Alu chip's flag register must be updated with the correct Inexact and Roundup bits. If an UNWRAP opcode is invalidated in the pipes, we must send the NOP opcode to the Alu chip so that the Inexact and Roundup bits are preserved. The C bit is taken directly from the FP IR. The Valid bit is not set if the logic detects any of the illegal instructions described in Chapter 6, or if the logic invalidates the instruction going into the RFR stage as described in section 2.3. On the Mul side FRC, FRB & FRA are taken directly from the FP IR. On the Alu side, the destination can be FRC if the instruction is not a 5 OP or it can be FRE if it is a 5 OP. Similarly for FRB and FRA. The destination address has a format bit decoded from the logic, and a valid bit which is bit 29 in the FP IR except for 5 OPs. The source address has a format bit decoded from the logic, and a valid bit which is bit 28 in the FP IR except for 5 OPs.

### 2.1.2 Divide/Square Root Control

FIG 2.3 shows the DIV/SQRT Control State Machine for generating MPLEN. Remember that the Mul chip needs to deassert MPLEN in order to hold the operands and opcode during DIVs and SQRTs because they have an FEX cycle longer than 50ns. For example, if the MFEX stage has any FP Mul opcode besides a DIV or SQRT, then MPLEN will be asserted because the instruction needs only one 50ns cycle in the FEX stage. If it's a DIV.s, then MPLEN will be deasserted for 3 cycles and the Mul chip will have 4 cycles for executing the DIV.s. In order to preserve sequentiality, the DIV/SQRT Control stalls any valid FP instructions in the FP IR if there is a floating point DIV or SQRT in MRFR or States 1 through A, or if there's a DIV.i in Stages 2 through 13.

Integer divide is more complicated than the other DIV/SQRT instructions because the Mul chip doesn't have an integer divide opcode. The logic issues a CVT.id for the dividend, issues a second CVT.id for the divisor while saving the DP dividend result in the Register File. Next the sequencer issues a DIV.d in the Mul chip, and it completes by issuing a CVT.di on the DP quotient in the Alu chip. See the top of FIG 2.3 and FIG 2.9. The top of FIG 2.3 shows the extra hardware for implementing DIV.i. (The pipeline control registers are shown for reference, they are not duplicated.) The stages correspond to the numbered cycles in FIG 2.9. During the DE stage, or Stage 1, FRB is sent to the FRF chips to start the first CVT.id. In Stage 2, FRA is sent for the second CVT.id. We must only load the PC into the PC Queue once, so the first CVT.id does the load. When the DIV.i is past

EP 0 366 318 A2

Stage 2 (the RFR stage), an Estall or Etrap won't stall or abort it. Stage 3 sends the CVT.id opcode to the Alu chip for the FRB operand (the dividend), and Stage 4 sends the CVT.id opcode again for the FRA operand (the divisor). Both converts can't write to the Register File when they are valid in the ARFW register, and they can't unload the PC Queue. Stage 5 is needed to wait for the second CVT.id to complete, and to tell the FRF chips to hold the dividend in the MX HLD register via the DIV_MODE_SEL signal. The logic muxes the control data into the Mul pipeline. Stage 6 can't tell the PC Queue to load either. Stage 6 sends a DIV.d opcode to the Mul chip. Stage 7 starts the DIV.d. Stages 8, through 12 correspond to States 8,9,A,B & 0 respectively in the DIV/SQRT Control State Machine. Stage 13 prevents any writes to the Register File, and doesn't unload the PC Queue. The logic muxes the control data back into the Alu pipeline for Stage 14. Stage 15 issues the CVT.di opcode. Stages 16 & 17 behave basically like a CVT.di except for the fact that this is really an integer instruction which cannot update FP Status (the low 13 bits of FP CSR) and FP PSW.

The DIVI state machine sequence is shown in TABLE 2.1. It is started when a DIVI_VALID signal is detected in the RFR stage and there is no E_STALL or ETRAP. When stage 6 is reached, a START_DIVI_D signal is asserted to the DIV/SQRT state machine. The DIV/SQRT machine controls the DP divide and then signals the DIVI state machine to proceed (FINISH_DIV_D). The convert from DP to integer is then completed and the result is written to the appropriate FP register.

## 2.2 Other Mul & Alu Pipeline Control

### 2.2.1 FP CSR

FIG 2.4 illustrates other needed Mul & Alu Pipeline control and registers. At the end of an FP instruction's RFW stage, FP Status (the low 13 bits of FP CSR), and the Accrued Inexact Exception bit in FP PSW are updated. These bits represent the exception data of the last FP instruction. The model for FP Exception Traps is that FP Floating Point instructions, which excludes FP Integer instructions, always trap on BRUN, NAN, Operand Error, Overflow, Underflow and Divide by Zero, afterwhich the Interlude Handler will determine whether the appropriate trap is enabled or not and update the FPU's state appropriately. To improve performance, Inexact Traps will be taken only when the Inexact Trap is enabled.

The M bit is set if M_INTRPT is asserted and the instruction is not an FP Integer instruction. Unfortunately, FP Integer instructions can generate overflow but they are documented not to take FP Exception Traps. Similarly for the A bit, and it can't take an FP Exception Trap during a CLASS operation either. The B bit is set when there's an Unaware Branch with the NAN Condition Code set, the M and A bits are reset, and there's no valid FP instructions in the pipes. Because the B bit can only be set when the pipelines are empty, the M or A bit will never be set with the B bit set. Similarly, the B bit will never be set with the M or A bit set.

When an FP Mul instruction takes an FP Exception Trap, the Mul's exception data is updated into FP Status. Similarly for an FP Alu instruction except that a CLASS instruction clears all the Exception bits. 5 OPs are a little different. The model is that when a 5 OP takes an FP Exception Trap, the Mul half is arbitrarily chosen to finish first, so the Mul's exception data and not the Alu's exception data is updated into FP Status. If the 5 OP doesn't take an FP Exception Trap, then effectively FP Status is cleared because the Mul's exception data bits are all zeros. The Inexact Exception bit and Accrued Inexact Exception bit are more complicated. If the 5 OP takes an FP Exception Trap, then the Mul's Inexact bit is muxed to the Inexact Exception bit in FP Status, and the Accrued Inexact Exception bit in FP PSW is inhibited. If the 5 OP doesn't take an FP Exception Trap, then the the Mul's Inexact bit is ORed with the Alu's Inexact bit, and the result is muxed to both the Inexact and Accrued Inexact Exception bits. This mechanism helps performance during Inexact exceptions when the Inexact Trap is disabled!

Whenever an FP instruction is going to take an FP Exception Trap, the FPU will inhibit FP instructions from updating FP Status in the following cycles in order to save the exception data of the excepting FP instruction for the Interlude Handler. DIVG, FNOP and any FP Integer instruction will inhibit itself from updating FP Status. Whenever FP Status is inhibited, the Accrued Inexact Exception bit in FP PSW is inhibited too. That bit is also inhibited if the FP instruction is about to take an FP Exception Trap. FP CSR is further detailed in Chapter 6.

PRIN & PROUT are registers which are needed to make Data Bus timing. PRIN is a 32 bit register which reads data from the Data Bus and writes it into FP CSR or FP PSW during an MTPR. PROUT is a 32 bit register which reads data from FP CSR, FP PSW or PRIN and writes it onto the Data Bus during an MFPR.

### 2.2.2 FP PSW

The second page of FIG 2.4 shows the FP PSW. At the end of an FP instruction's RFW stage, the upper sixteen bits of FP PSW are updated. FP PSW 31:16 holds the Graphic Clip Bits and the four FP Condition Code bits. The Graphic Clip Bits are updated only when a CMPG completes. The FP Condition Code bits are updated whenever an FP instruction finishes which sets the FP condition codes. The logic selects the appropriate condition code data from the Mul or Alu chip and updates FP PSW 31:16. Whenever an FP Mul instruction is going to take an FP Exception Trap, the FPU will inhibit that instruction from updating FP PSW 31:16. If any FP Alu instruction except CLASS is going to take an FP Exception Trap, the FPU will inhibit that instruction from updating FP PSW 31:16. CLASS is documented to never take an FP Exception Trap. But because the Alu chip uses the Level 2 PASSX opcode which can assert A_INTRPT, CLASS will inhibit A_INTRPT. Other conditions which inhibit loading FP PSW 31:16 are if the M or A bit is set, or if the instruction's C bit is reset. FP PSW is further detailed in Chapter 6.

### 2.2.3 FP Istall

Needless to say, the FPU asserts FP_ISTALL for many reasons. The first reason is if there's an FP instruction other than an FNOP or MxPR in the DE stage and there's a floating point DIV or SQRT in either the MRFR stage, State 1, State 2, State 3, State 4, or State 5, or if there's an FP instruction other than an FNOP or MxPR in the DE stage and there's a DIV.i in Stages 2 through 11. The FPU Istalls if there's any FP Branch predicate waiting for FP Condition Codes. It also Istalls if there's an FP Unaware Branch with the NAN bit set and there's any valid FP Instruction in the pipelines because the Exception bits in FP CSR must be reported sequentiality before the FP Unaware Branch takes a BRUN Exception Trap. Also, the FPU Istalls if there's a resource conflict detected in the Match Logic. The Match Logic determines if any conflicts exist with the FP instruction we wish to start in the Pipelines and any other previously issued FP instructions in the FP. If conflicts do exist, the FP IR is Istalled until the conflict stops. The control for bypassing operands is in the FRF chips to save pins.

Another reason to Istall is when there's an MxPR with FP CSR or FP PSW in the DE stage and any FP instructions are in the pipes. If this MxPR started before the FP instruction finished, the FP instruction could take an FP Exception Trap but the MxPR would have finished out of order. The IO MxPR Conflict causes a 1 cycle Istall when an MxPR with FP CSR or FP PSW is directly followed by an MxPR with FP CSR or FP PSW. The IO also generates the bypassing control. Whenever FP_EXCEP is asserted, the FPU Istalls for 1 cycle. Similarly for FP_ITRAP. An FP Owner Violation or Illegal FP instruction is detected in the DE stage, and is signaled as an FP_ITRAP. For FP Owner violations in the IO pipe, the logic looks at the muxed output of the following three addresses: the IO Trap Register address, the LOAD/STORE address, and the MxPR address.

### 2.2.4 Match Logic

The Match Logic is detailed in FIG 2.5. Only the major pieces are shown. The Alu's Match Logic isn't shown but it's identical to the shaded regions. The Match Logic determines all the resource conflicts listed in the upper sixteen squares of the Stall Chart in Chapter 5. The IO Control Logic will generate the address, format bit and valid bit for all FP LOADs, FP STOREs and MxPRs with the FP Register File. The IO address comes directly from either the LOAD/STORE address or the MxPR address, not muxed with the IO Trap Register address, to help timing. It's an understatement that many cases exist for the Match Logic to Istall the FPU which creates a timing problem for generating FP_IS-TALL.

Each Match Logic Box has inputs from the top and side. The inputs from the top are instructions past the DE stage still in the pipelines. The side inputs are the instruction at the DE stage. In order to understand what is inside the Match Logic box, assume that we're comparing two 6 bit adresses called A5:0 & B5:0. A5 is XNORed with B5, A4 is XNORed with B4, etcetera down to A1 XNOR B1. The Match equates to the ANDing of those 5 terms, ANDed with [(A0 XNOR B0) + A_Double_Precision + B_Double_Precision] ANDed with (A_Valid * B_Valid).

### 2.3 Mul & Alu Pipeline Enabling

As FIG 2.6 illustrates, an Istall holds the FP IR, but the rest of the pipelines continue to clock. An Istall, not MMU_IVALID, IP_NOP or MMU_ETRAP will invalidate the dispatched FP instruction (the one going into the RFR stage). An Estall holds the FP IR, ARFR and MRFR registers, but the rest of the pipelines continues to clock. An Estall is caused by a LOAD, STORE or MxPR in the EX cycle and MMU_EASRC_BUSY, or it's caused by a LOAD or STORE in the WL cycle with not MMU_EVALID. An Estall or MMU_ETRAP also invalidates the FP instruction going from the RFR stage into the FEX stage. Notice that MMU_ETRAP releases an Estall.

## MUL & ALU PIPELINE CONTROL

FIG 2.1

CKE = 50 ns
CKO = CKE delayed by 25 ns
Black Box = Combinatorial Logic

## MUL & ALU PIPELINE CONTROL REGISTERS FIG 2.2

CKE = 50 ns
Black Box = Combinatorial Logic

V = Valid bit

0 -> invalid
1 -> valid

## DIV/SQRT CONTROL

FIG 2.3

Pipeline control registers are shown for reference.

DIV/SQRT Control State Machine

= Valid Bit

-> invalid instruction
-> valid instruction

KO = CKE delayed by 25 ns

EP 0 366 318 A2

TABLE 2.1   DIVI CONTROL

| STAGE | STATE S3,S2,S1,S0 | | | | DIVI PROG | ST DIVI _D- | DIS WREN | DIV MODE SEL | SEL CVT ID1- | SEL CVT ID2- | SEL CVT DI- | CVT DI DLY | COMMENTS |
|---|---|---|---|---|---|---|---|---|---|---|---|---|---|
| 1 | 0 | 0 | 0 | 0 | 0 | 1 | 0 | 0 | 1 | 1 | 1 | 0 | DIVI VALID IN DEC STAGE |
| 2 | 0 | 0 | 0 | 0 | 1 | 1 | 0 | 0 | 0 | 1 | 1 | 0 | DIVI VALID IN RER STAGE |
| 3 | 0 | 0 | 0 | 1 | 1 | 1 | 1 | 0 | 1 | 0 | 1 | 0 | |
| 4 | 0 | 0 | 1 | 1 | 1 | 1 | 1 | 1 | 1 | 1 | 1 | 0 | |
| 5 | 0 | 0 | 1 | 0 | 1 | 1 | 1 | 1 | 1 | 1 | 1 | 0 | |
| 6 | 0 | 1 | 1 | 0 | 1 | 0 | 1 | 1 | 1 | 1 | 1 | 0 | ISSUE START DIVI D  TO DIV/SQRT STATE MACHINE |
| 7 | 0 | 1 | 1 | 1 | 1 | 1 | 1 | 1 | 1 | 1 | 1 | 0 | STALL |
| 8 | 0 | 1 | 1 | 1 | 1 | 1 | 1 | 1 | 1 | 1 | 1 | 0 | STALL |
| 9 | 0 | 1 | 1 | 1 | 1 | 1 | 1 | 1 | 1 | 1 | 1 | 0 | STALL |
| 10 | 0 | 1 | 1 | 1 | 1 | 1 | 1· | 1 | 1 | 1 | 1 | 0 | STALL |
| 11 | 0 | 1 | 1 | 1 | 1 | 1 | 1 | 1 | 1 | 1 | 1 | 0 | STALL |
| 12 | 1 | 1 | 1 | 1 | 1 | 1 | 1 | 1 | 1 | 1 | 1 | 0 | RECEIVE FINISH DIVD FROM DIV/SQRT STATE MACHINE |
| 13 | 1 | 1 | 1 | 0 | 1 | 1 | 1 | 0 | 1 | 1 | 1 | 0 | |
| 14 | 1 | 1 | 0 | 0 | 0 | 1 | 1 | 0 | 1 | 1 | 0 | 0 | |
| 15 | 0 | 0 | 0 | 0 | 0 | 1 | 0 | 0 | 1 | 1 | 1 | 0 | |
| 16 | 0 | 0 | 0 | 0 | 0 | 1 | 0 | 0 | 1 | 1 | 1 | 1 | |
| 17 | 0 | 0 | 0 | 0 | 0 | 1. | 0 | 0 | 1 | 1 | 1 | 0 | |

SIGNAL EXPLANATION:-

DIVI_PROG - IF ASSERTED, AND A VALID FP INSTR IS IN THE DECODE STAGE THEN AN FP_ISTALL WILL OCCUR.

ST_DIVI_D- -WHEN ASSERTED FORCES THE DIVD OPCODE AND ALSO STARTS THE DIV/SQRT  STATE MACHINE.

DIS_WREN - WHEN ASSERTED, CREATES AN FEX  STALL THAT HOLDS PIPELINE INFORMATION.
ALSO CONTROLS WRITE INFORMATION TO THE FRF.

DIV_MODE_SEL - DURING A DIVI, INDICATES TO THE FRF WHEN TO CONTROL BYPASS PATHS.

SEL_CVT_ID1- - FORCES OP CODE TO ALU FOR INTEGER TO DP CONVERSION. (FIRST OPERAND).

SEL_CVT_ID2- - FORCES OP CODE TO ALU FOR INTEGER TO DP CONVERSION. (SECOND OPERAND).

SEL_CVT_DI- - FORCES OP CODE TO ALU FOR DP TO INTEGER CONVERSION. (RESULT).

CVT_DI_DLY - FORCES INTEGER MODE SO PSW AND CSR ARE NOT UPDATED.

Apollo Confidential                    2-12                    Feb 18, 1988

-31-

## OTHER MUL & ALU PIPELINE CONTROL    FIG 2.4

**FP CSR**

Enable FP STATUS = (Q + !M*!A*!B) !DIVG !FNOP !INTEGER !AMIRO + MTPR CSR
+ Unaware Branch * NAN CC * no valid FPOP in pipes

FP CSR

M_INTRPT
not CLASS * A_INTRPT
Unaware Branch * NAN CC * no valid FPOP in pipes*BRUN Trap Enabled

M
A
B

FP_EXCEP

not Q*not R

not CLASS*ALU EXC
MUL EXC

ALU 3 OP

PRIN
MUL EXC

PRIN SEL

3 OP

EXCEPTION BITS

not Q * M
not Q * A
not Q * B
DIVG
FNOP
INTEGER
AMIRO

en

CKE

Disable FP STATUS

FP STATUS = FP CSR 12:00
AMIRO = Alu or Mul Internal Reg Ops
CKE = 50 ns

**FP PSW 00**

ALU INEX
MUL INEX

ALU 3 OP

MUL INEX
ALU INEX+MUL INEX

M_INTRPT+A_INTRPT

3 OP

PRIN

FP PSW

PRIN SEL

en

CKE

Accrued Inexact

not Q * M_INTRPT
not Q * A_INTRPT
Disable FP STATUS

Disable ACCRUED INEXACT

Enable Accrued Inexact = (Q + !M*!A*!M_INTRPT*!A_INTRPT) !DIVG !FNOP !INTEGER !AMIRO + MTPR PSW
= (Q + !M*!A) (Q + !M_INTRPT*!A_INTRPT) !DIVG !FNOP !INTEGER + MTPR PSW

**PRIN & PROUT**

FP CSR
FP PSW
PRIN

CKE

PROUT

DATA 31:00

PRIN

CKE

2-13    Feb 18, 1988

-32-

## OTHER MUL & ALU PIPELINE CONTROL (cont.)   FIG 2.4

FP PSW 31:16

Enable PSW 31:28 = (Q + !M*!A*!M_INTRPT*!A_INTRPT + !M*!A*!M_INTRPT*Class) CC    + MTPR PSW
Enable PSW 27:16 = (Q + !M*!A*!M_INTRPT*!A_INTRPT + !M*!A*!M_INTRPT*Class) CC*CMPG    + MTPR PSW

Black Box = Combinatorial Logic

## MATCH LOGIC FIG 2.5

Shaded regions are duplicated for the Alu Pipeline

## MUL & ALU PIPELINE ENABLING

FIG 2.6

valid bit
___

0 -> invalid instruction
1 -> valid instruction

EX Cycle = LOAD, STORE or MxPR in EX cycle
WL Cycle = LOAD or STORE in WL cycle

CKE = 50 ns

| | | | | |
|---|---|---|---|---|
| 40 MHz | | | | |
| 20 MHz | | | | |
| Stage | FETCH 0 | DE 0 | RFR 0 | FEX 0 | RFW 0 |

RF Address — MX MY ADDRESS, AX AY ADDRESS

HLD REGs — MX MY RF Lookup, AX AY RF Lookup

MX,MY — MSW, LSW

Multiplier — MULTIPLY

MZ — MSW, LSW

AX,AY — MSW, LSW

ALU — ALU-OP

AZ — MSW, LSW

Register File — MZ AZ RF Write

**Double Precision 5-operand Instruction**

FIG 2.7

**Stream of Double Precision 5-operand Instructions**   FIG 2.8

EP 0 366 318 A2

40 MHz

20 MHz  | 1 | 2 | 3 | 4 | 5 | 6

Stages  DECODE  RFR  FEX  FEX  FEX  FEX

RF Address  AX AY ADDRESS  AX AY ADDRESS

HLD REGs  AX AY RF Lookup  AX AY RF Lookup

MX,MY

Multiplier

MZ  MSW

AX,AY  MSW  LSW  MSW  LSW

ALU  I32 ->DP  I32 ->DP

AZ  MSW  LSW  MSW  LSW

Register File Write  NO-OP  NO-OP

**Integer Divide Flow (sheet 1 of 3)**   FIG 2.9

Feb 18, 1988

40 MHz

20 MHz    6    7    8    . . .    12    13

I CACHE    Successor instruction — FETCH 0

Stages    FEX    FEX    FEX    . . .    FEX    FEX

RF Address

HLD REGS

MX,MY

Multiplier    MSW   LSW   Divide 1    Divide 2    . . .    Divide 6

MZ    MSW

AX,AY

ALU

AZ

Register File Write

**Integer Divide Flow (sheet 2 of 3)**     FIG 2.9

EP 0 366 318 A2

| | 13 | 14 | 15 | 16 | 17 | 18 |
|---|---|---|---|---|---|---|

**40 MHz**

**20 MHz**

**I Cache** — FETCH 0 — DECODE 0 — Successor instruction

**Stages** — FEX — FEX — FEX — RFW

**RF Address** — MX MY ADDRESS — AX AY ADDRESS

**HLD REGs** — MX MY RF Lookup — AX AY RF Lookup

**MX,MY** — MSW — LSW

**Multiplier** — MULTIPLY

**MZ** — MSW — LSW — MSW — LSW

**AX,AY** — MSW — LSW — MSW — LSW

**ALU** — DP -->I32 — ALU-OP

**AZ** — MSW — LSW — MSW — LSW

**Register File Write** — AZ Write — MZ AZ RF Write

## Integer Divide Flow (sheet 3 of 3)    FIG 2.9

EP 0 366 318 A2

# 3.0 FPU IO

## 3.1 FPU LOAD AND STORE OPERATION

### 3.1.0 GENERAL DESCRIPTION

The FP LOAD and STORE instruction is treated as an integer instruction with the integer processor creating the effective address and the FPU supplying or storing the data to or from the FP register file (FRF).

The pipeline structure allows consecutive LOAD or STORE's in any mixture to be executed one every machine cycle. This assumes there are no traps or stalls. The IO CTL register pipeline is shown in FIG 3.1.0. Each pipeline stage has in parentheses the equivalent IP stage. Note that the IO CTL pipeline is split between the FPC and the FRF.

The basic pipeline model for the floating point unit during a floating point LOAD or STORE instruction consists of the following distinct stages:

**Instruction Fetch**         **(IF)**

The first stage is identical to that for the integer machine and is the instruction fetch from memory. In this stage an instruction pointed to by the Current PC in the integer machine is transferred from main memory to the FP Instruction Register.

**Decode**         **(DE)**         **equivalent to (OF)**

The second stage is a decode stage where the instruction is decoded and any interactions with previous instructions still in execution are determined. If no resource conflicts exist, the decode stage generates the control signals for th IO CTL pipe. If conflicts do exist, execution of the new instruction is stalled until the previous conflicting instructions have completed. The instruction is considered dispatched if moved out of this stage.

**Register File Read**         **(RFR)**         **equivalent to (EX)**

For a LOAD, the RFR stage is when the IP computes the effective address. For a STORE, this stage fetches the data from the Register File to write into the CDOUT Register. This is the stage where MMU_EASRC_BUSY is checked for assertion to determine an Execute Stall. This is done for M*PR's as well as LOAD and STORE.

This is the stage that address, write enables and store valid bits are sent to the FRF.

Apollo Confidential         3-1         DEC 9, 1987

IP_INST 31,29:21,14:12          DATA 31:0

TRAP LAST REG

(OF) or (DEC)          FP IR REG          TRAP REG

RFR CTL REG

(EX)          CSR SEL          SL_ADR   LD_WREN   ST_V   MEMR_V          MPR_V

DC CTL REG

(DC)          MPR_V     MEMR_V   CSR SEL          SL_ADR   LD_WREN   ST_V   MEMR_V     MPR_V

WL CTL REG

(WL)          MEMR_V     CSR WRITE          SL_ADR   LD_WREN   ST_V   MEMR_V   MPR_V

C

RF

| | |
|---|---|
| ST_V 1:0 | – valid STORE or MFPR |
| SL_ADR 5:1 | – address of M*PR or LD or STORE |
| LD_WREN 1:0 | – valid LOAD or MTPR |
| MEMR_V | – valid LOAD or STORE |
| MPR_V | – valid M*PR |
| CSR SEL | – FPC control or status reg selected |
| CSR WRITE | – Selected FPC control or status reg to be written |

3 3 1.0          ━━━  EXTERNAL SIGNALS

CTL PIPE

Data Cache            (DC)            equivalent to (DC)

For a STORE, the FPU drives the CDOUT REG data onto the Cache Data Bus. If the data is single precision, the data in the ms 32bits is identical to the data in the ls 32 bits.

        For a LOAD the data is read from the cache location addressed by the IP (assuming a cache hit) and placed on the Cache Data Bus. The data is rotated if necessary and clocked into the CDIN REG. If single precision the 64 bit CDIN REG will have the upper 32 bits identical to the lower 32 bits.

Register File Write       (WL)            equivalent to (WL)

For a LOAD, the data in CDIN REG is written into the Register File. If the data is single precision, the low order address bit of the destination address (ST_ADR 0) is used to encode the LD_WREN 1:0 bits. These bits determine whether the upper (msw) or lower (lsw) 32 bits are to be written, i.e. SP0 or SP1.
For a STORE, this is the state after the CDOUT REG contents were placed on the Cache Data Bus.
This is the also the stage where MMU_EVALID is checked for deassertion to determine a WL Stall. Note that M*PR's do not stall at this point.

From the FPU's perspective, MTPRs are the same as LOADs, and MFPRs are the same as STOREs. The only exceptions are M*PRs to the FPU CSR, PSW, TRAP and TRAP LAST regs.. These regs are in the FPC chip and their functions are described in Chapter 6. Note also that a PROBE will look like an IP STORE to the FPU.

```
   1    2    3    4    5                1    2    3    4    5
      | OF | EX | DC | WL|                 | OF | EX | DC | WL|
   | IF | DE |RFR| DC | WL |           | IF | DE |RFR| DC |    |
         LOAD or MTPR                          STORE or MFPR
```

## 3.1.1 IO PIPE CONTENTS

        The IO pipe contains information that is required to control each stage of an IO operation. These contents are as follows:-

| | |
|---|---|
| SL_ADR 5:1 | Destination or source adr of FP load/store or FP M*pr. |
| LD_WREN 1:0 | Write enable for FP load or FP MTPR to register file |
| ST_V 1:0 | Valid FP store or FP MFPR from register file. |
| MEMR_V | FP or IP Memory ref valid. Used in E STALL logic |
| MPR_V | FP or IP M*PR ref valid. Used in E STALL logic |

STAT REG SEL     STACTL REG in FPC selected for read or write.
USRSTAT REG SEL          USRSTAT REG in FPC selected for read or write.
PSW REG SEL          PSW REG in FPC selected for read or write.
TRAP REG SEL          TRAP and TRAP LAST regs in FPC to be written.
MTPR_V          Qualifies the selected register for a write.

## 3.1.2 REQUIREMENTS OF THE FRF CHIPS

The FRF chips use a 32 deep by 32 bit register file organization. The two chips then form a 32 deep by 64 bit register file. Therefore a 64 bit double precision operand can always be written to or read from the register file in one 25ns period. The register file has 2 write ports and 3 read ports. The register file writes or reads in 25ns and therefore, to use this bandwidth to have a third write port, the MZ port is time shared between MPY and LOAD operations. 5 read ports are needed so the 3 read ports are expanded to 5 by sharing the X and Y ports between an ALU an MUL operation in one 50ns cycle.
The writing of a single precision result is controlled by the write enable signals.

FIG. 3.1.2 shows a diagram of the IO path in the FRF chip.

3.1.2.1 SIGNALS FOR FP LOAD or MTPR from FPC
SL_ADR[5:1]   destination reg. file address
LD_WREN[1:0]          dest reg. file write enable

3.1.2.2 SIGNALS FOR FP STORE or MFPR from FPC
SL_ADR[5:1]          source reg. file address
ST_V[1:0]     validates the msw and/or the lsw 32 bits depending on SP
or DP operation. Used in data rotation and tri_state enable
for CDOUT REG.

3.1.2.3 SIGNALS FOR E_STALL IF AN FP OR IP MEMORY REF OR M*PR.
MEMR_V          valid FP or IP load or store in EX stage.
MPR_V          valid FP or IP MTPR or MFPR in EX stage.

3.1.2.4 BYPASS PATHS FOR LOAD/STORE AND M*PR's
The bypass paths in the FRF are activated by comparing a valid register file address that will be updating the register file against a source address. If the match occurs then the appropriate bypass paths will be activated. For more detail see chapter 9 on the FRF. There is a bypass path in the FPC for a MTPR followed by an MFPR to the

FIG. 3.1.2

| | |
|---|---|
| ———— | INTERNAL SIGNALS |
| **———** | EXTERNAL SIGNALS |

ₑ Iℂ SECTION

CK25 = 25NS
CKE = 50NS
CKO = CKE DLYD 25NS

FPC STATCTL, or PSW.

### 3.1.3 EXECUTE STALLS

Execute Stalls occur when a LOAD, STORE, MTPR or MFPR cannot continue due to a resource unavailable .

There are two conditions that the FPU checks to determine if an Execute Stall is being entered.

1. If a STORE/LOAD or M*PR is in it's Execute (EX) stage and MMU_EASRC_BUSY is asserted. This means the MMU has taken control of the cache data bus. e.g. IO invalidate.

2. If a STORE or LOAD is in it's WL stage and MMU_EVALID is deasserted. This means that the MMU is signalling that the data on the cache data bus in the previous cycle is invalid. e.g. a TB miss or write buffer full on a STORE, or a TB miss or cache miss on a LOAD, or a PA SRC address bus collision on an IO cache invalidate.

E_STALL is the 'OR' of items 1 and 2.
WL_STALL is item 2.

For an E_STALL all the pipes are frozen in the IO pipe if condition 2 is encountered. Note that the MUL/ALU pipe only freezes it's DEC and RFR stage, any operations past the RFR stage complete. If condition 1 is encountered, then any LOAD, STORE or M*PR in it's DC or WL stage will complete. Note that the MUL/ALU pipe again only freezes it's DEC and RFR stage.

For an E_STALL or a WL_STALL, the FPU will FETCH STALL. i.e. inhibit loading the FP Instruction Register.

Note that the above action will take place whether it's a FP LOAD/STORE or M*PR, or an IP LOAD/STORE or M*PR. This is because the FPU and IP operate in conjunction for these operations.

Stalls are covered in more detail in CHAPTER 5.

### 3.1.4 FETCH STALLS

In addition to the Fetch Stall caused by an E_STALL, the FPU will require a Fetch Stall for an internal FPU resource conflict. The FPU will assert FP_ISTALL to the IP to ensure that the stall is done by both units. The IP will assert IP_ISTALL to the FPU whenever it has a resource conflict.

An FP_ISTALL, for IO operations, is created whenever a LOAD/STORE

or M*PR uses a register file address that is currently in use by an instruction, or needs to be used by a following instruction. These stalls are determined by comparing valid addresses in the match logic. See Chapter 5 for details.

If an MTPR is followed by an MFPR to the STATCTL or PSW registers, then FP_ISTALL will be asserted for one cycle. These stalls are determined by comparing the valid register sel bit in the RFR stage of the IO pipe with that in the decode stage.

## 3.1.5 FLOATING POINT LOAD

The LOAD can be single or double precision, both taking the same number of clock cycles. The double precision LOAD clocks 64 bits off the DATA bus, through data rotators, and into CDIN REG. The data rotator is controlled by EASRCBD 2 and IP_OPSIZE 0, these signals are normally issued by the the IP, and in the event of a cache miss are sourced by the MMU. If the operation is a SP LOAD, the appropriate msw or lsw 32 bits are duplicated in CDIN REG. The data is written into the register file address selected by SL_ADR 5:1. The SP write is determined by LD_WREN 1:0 = 1 or 2, and the DP write by LD_WREN 1:0 = 3.

Fig. 3.1.0 shows the IO register pipeline necessary to send control signals in the appropriate time sequence to the FRF chips. Note that the SL_ADR 5:1 is the register file address for the source of a STORE or MFPR and the destination of a LOAD or MTPR. The address is validated for a STORE or MFPR with ST_V 1:0, and is validated for a LOAD or MTPR with LD_WREN 1:0.

Each control register in the IO pipe contains information about the instruction in it's appropriate stage. i.e. (DC), (WL) etc. There is a pipeline enable on each register stage that is used to freeze the pipe on an E_Stall or WL_STALL. i.e. EX_PLEN and WL_PLEN.

Load Valid bits (LD_WREN[1:0]) are set if the LOAD or MTPR is dispatched, i.e. moved from the FP IR REG into the RFR CTL REG. The Load Valid bits are to validate the destination address. Thus to invalidate a LOAD in the case of an E_TRAP, the Valid bits are cleared.

## 3.1.5.1 FP LOAD WITH CACHE HIT

FIG. 3.1.5.1 shows a pipeline flow diagram of back to back LOAD's having a cache hit. The diagram shows when the signals from the FPC to FRF chips have to be valid and also when the contents of various registers in the FRF chip are valid.

Note that the register file MZIN port registers are time shared every 25ns with MUL results.

The diagram shows LOAD 1 being written to the register file while LOAD 4 is in the FP

IR i.e. the decode stage.

## 3.1.5.2 FP LOAD WITH CACHE MISS

FIG. 3.1.5.2 shows a pipeline flow diagram of back to back LOAD's with LOAD 1 experiencing a cache miss. The cache miss is detected by the FPC and FRF monitoring MMU_EVALID and MEMR_V when the LOAD is in it's WL stage. This will cause an E_STALL.

### 3.1.5.2.1 ACTION ON ENTERING CACHE MISS

1. EX_PLEN and WL_PLEN are inhibited, leaving the register file being continuously written to the LOAD 1 destination address.

2. EX_PLEN, WL_PLEN in the FRF and FPC being inhibited, freezes the FPU pipeline. The CDIN REG must however, keep clocking and loading data from the DATA bus in anticipation of the correct data arriving from main memory.

3. The IP and FP do an EXECUTE STALL and a FETCH STALL in tandem.

### 3.1.5.2.2 ACTION ON EXITING CACHE MISS

1. The MMU recirculates the EASRCBD 2 and IP_OPSIZE 0 signals for the correct data rotation.

2. MMU_EVALID is asserted by the MMU control to indicate the correct data requested is in the CDIN REG. WL_PLEN is allowed which writes the LOAD 1 data in the CDIN REG to the register file pointed to by SL_ADR, and advances the DC and WL pipeline stages. The register file is now being continuously written to the LOAD 2 destination address. A NOP is inserted at the DC stage. i.e. all valid and write enable bits are set to zero. Note that EX_PLEN stops the EX stage from advancing and also keeps the FPU doing a Fetch stall.

3 MMU_EVALID is deasserted again because the cache allocation is continuing i.e. the FPU wanted the first word of the refill. WL_PLEN is disabled again stopping the DC and WL pipe stages.

4. MMU_EASRC_BUSY is deasserted, but the pipe remains frozen with LOAD 2 in it's WL stage and MMU_EVALID deasserted. MMU_EVALID is asserted again indicating LOAD 2 was correctly written and the pipe proceeds.
i.e. EX_PLEN and WL_PLEN are asserted.

PC SRC ADR

PC ADR

FP IR  (OF)

EA SRC ADR  (EX)

EA ADR  (DC)

FPC IO CTL PIPE CONTENTS VALID

RFR CTL REG  (EX)

DC CTL REG  (DC)

WL CTL REG  (WL)

VALID INPUTS TO FRF CHIPS

SL_ADR 5:1
LD_WREN 1:0  L1  L2  L3  L4  L5

EASRCBD 2
IP_OPSIZE 0  L1  L2  L3  L4  L5

FRF REG CONTENTS VALID

DC SL CTL REG  (DC)  L1  L2  L3  L4  L5

WL SL CTL REG  (WL)  L1  L2  L3  L4  L5
CDIN REG

MZIN ADR REG
MZIN DAT REG  L1 M1 L2 M2 L3 M3 L4 M4 L5 M5

NOTE:– L1 indicates the information for LOAD 1 transferred in a 25ns time slot.
M1 indicates the information for a MUL operation that is paired with LOAD 1
and transferred in ι 25ns time slot.

FIG 3.1.5.1

BACK TO BACK LOADS WITH CACHE HIT

PC SRC ADR ① ② ③ ④ ⑤ ⑥ FETCH STALL ⑥ ⑥ ⑦

PC ADR ① ② ③ ④ ⑤ ⑤ ⑤ ⑥

FP IR (OP) ① ② ③ ④ ④ ④ ⑤

EA SRC ADR (EX) ① ② REFILL ③ ③ ④

EA ADR (DC) ① ② REFILL ② ③ ③

FPC IO CTL PIPE CONTENTS VALID

RFR CTL REG (EX) ① ② ③ FREEZE PIPE ③ ③ ③ ④

DC CTL REG (DC) ① ② ② nop nop ③

WL CTL REG (WL) ① ① ② ② nop

VALID INPUTS TO FRF CHIPS

L_ADR 5:1
LD_WREN 1:0 (EX) L1 L2 L3 L3 L3 L3 L4

EASRCBD 2
IP_OPSIZE 0 (EX) L1 L2 L3 L3 L3 L3 L4

FRF REG CONTENTS VALID

WL_PLEN

EX_PLEN

CDIN REG (WL) L1 REFILL L1 L2 L3

MZIN ADR REG
MZIN DAT REG L1 REFILL M1 L1, M1 L2, M2 L2, M2

MMU_EASRCBUSY CACHE MISS ON ①

MMU_EVALID

indicates valid data
loaded in CDIN REG

FIG 3.1.5.2

BACK TO BACK LOADS WITH CACHE MISS

## 3.1.6.0 FLOATING POINT STORE

The STORE can be single or double precision, both taking the same number of clock cycles. The STORE reads 64 bits of data, from the double precision register or single precision register pair pointed to by SL_ADR 5:1, through the data rotator into the CDOUT REG. The data rotator is controlled by ST_V 1:0. For a single precision operation the msw and lsw 32 bits of CDOUT REG will be identical. The contents of the CDOUT REG are asserted on the DATA bus under control of ST_V 1:0. i.e. either bit set asserts the tri-state enable.

FIG. 3.1.1 shows the IO register pipeline necessary to send control signals, in the appropriate time sequence, to the FRF chips in order to synchronize asserting data from CDOUT REG on the DATA bus, with the IP supplying the address for the data cache write.

Store Valid bits are set (ST_V 1:0), if the STORE is dispatched, and flows through the pipe. The tri-state enable of CDOUT REG is also controlled by the MMU via the MMU_EASRCBUSY signal which is registered inside the FRF. When MMU_EASRCBUSY is asserted, indicating the MMU wants to use the DATA bus, the next clock will turn off the CDOUT tri-state drivers.

## 3.1.6.1 FP STORE WITH CACHE HIT

FIG 3.1.6.1 shows a pipeline flow diagram of back to back STORES having a cache hit. The control signals are issued to the pipeline every machine cycle, and data is asserted on the DATA bus whenever CDOUT REG is valid. The diagram shows STORE 1 data being asserted on the DATA bus for the cache write while STORE 3 is in the decode stage.

## 3.1.6.2 FP STORE WITH CACHE MISS

FIG. 3.1.6.2 shows a pipeline flow diagram of back to back STORE's with STORE 1 experiencing a cache miss. The MMU asserts MMU_EASRCBUSY and the FPU has a memory reference in the EX stage (STORE 3).

### 3.1.6.2.1 FPU ACTION ON ENTERING A CACHE MISS

1. The data for STORE 1 and STORE 2 is written into the cache and the write buffer in the BUS IC.

2. EX_PLEN is de-asserted freezing the pipeline in the DEC and RFR stages. The DC and WL stages continue and NOP's are inserted at the DC stage.

FIG 3.1.6.1

BACK TO BACK STORES WITH CACHE HIT

FIG 3.1.6.2

BACK TO BACK STORES WITH CACHE MISS

3. The IP and FPU do an EXECUTE STALL and FETCH STALL.

4. NOTE that if STORE 3 was a NOP, i.e. no memory reference in it's EX stage when MMU_EASRCBUSY asserted, then no stall would be necessary.

## 3.1.6.2.2 ACTION ON EXITING A CACHE MISS

1. MMU_EASRCBUSY is deasserted after the cache tag has been updated for STORE 1 and EA_SRC_ADR has been issued by the MMU to deter mine the status of STORE 2 i.e. TB MISS or CACHE MISS etc. The EA_SRC_ADR bus is given back to the IP which was stalled with the EA for STORE 3.

2. The MMU checks to see if STORE 2 is a TB MISS, if it is then the action in 3.1.6.3 is taken. If not then STORE 2 is checked for a cache hit. If not a cache hit then the action is the same as 3.1.6.2.

3. The PLEN's are enabled and the FPU pipeline is unfrozen.

## 3.1.6.3 FP STORE WITH TB MISS

FIG. 3.1.6.3 shows a pipeline flow diagram of back to back STORE's with STORE 1 experiencing a TB miss. The MMU asserts MMU_EASRCBUSY and deasserts MMU_EVALID. STORE 1 is in it's WL stage and the pipeline will freeze.

## 3.1.6.3.1 ACTION ON ENTERING A STORE TB MISS

1. The data for STORE 1 is written into the cache and the data for STORE 2 is held in CDOUT REG.

2. The FPU IO pipeline is frozen in all stages by inhibiting the PLEN's.

3. The IP and FPU do an EXECUTE STALL and FETCH STALL.

4. NOTE that if STORE 3 was a NOP, the pipeline would still stall because STORE 1 is in it's WL stage with MMU_EVALID deasserted.

## 3.1.6.3.2 ACTION ON EXITING A STORE TB MISS

1. MMU_EASRCBUSY is deasserted and MMU_EVALID is asserted by the MMU to indicate that the EA_SRC_ADR and EA_ADR pipe has been restored and the EA_SRC_ADR bus is being given back to the IP.

2. The MMU checks to see if STORE 1 is a cache hit. If not then the action is the same as 3.1.6.2. Note that the FPU does not supply data.

3. The MMU checks to see if STORE 2 is a TB MISS, if it is then 3.1.6.3.1 is repeated. If not then STORE 2 is checked for a cache hit. If not a cache hit then the action is the same as 3.1.4.2. Note that the FPU supplies the data for STORE 2.

4. The PLEN's are enabled and the FPU pipeline is unfrozen.

sourced by MMU
**FIG 3.1.6.3**

BACK TO BACK STORES WITH E_STALL AND WL_STALL

### 3.1.6.4 FP STORE WITH MMU_EVALID DE-ASSERTED.

MMU_EVALID can be de-asserted if the STORE data on the last cycle could not be accepted. e.g.A write buffer full condition that can occur when the write buffer in the Bus interface chip cannot hold anymore data.
The FPU must Execute stall waiting for the resource to become available.

FIG 3.1.6.4 shows a resource allocation diagram of the MMU_EVALID case.

### 3.1.7.0 FP STORE/LOAD COMBINATION
### 3.1.7.1 FP LOAD/STORE/LOAD WITH CACHE HIT

FIG 3.1.7.1 shows a pipeline flow diagram of LOAD/STORE/LOAD all with a cache hit.

### 3.1.7.2 FP STORE/LOAD/STORE WITH CACHE MISS ON STORE

FIG 3.1.7.2 shows a pipeline flow diagram of a STORE/LOAD/STORE with the STORE having a cache miss.

The action on entering a cache miss is the same as the STORE cache miss case. The second instruction is LOAD 2 whose data is loaded into CDIN REG and then written to the register file, i.e. the DC and WL stages continue with NOP's being inserted at the DC stage. The DEC and RFR stages are frozen because STORE 3 is in it's EX stage with MMU_EASRC_BUSY being asserted.

When MMU_EASRC_BUSY is deasserted, then the DEC and RFR stages progress.

### 3.1.7.3 FP STORE/LOAD/STORE WITH TB MISS ON STORE

FIG 3.1.7.3 shows a pipeline flow diagram of a STORE/LOAD/STORE with the STORE having a TB MISS.

The action on entering a TB MISS is the same as the STORE TB MISS case. The second instruction is a LOAD that freezes in it's DC stage and thus will not be written to the register file.

The LOAD will be redone when the MMU recirculates it's EA SRC ADR.

**ALU/MUL PIPE**

| | | | | | | | | | | | | | | | |
|---|---|---|---|---|---|---|---|---|---|---|---|---|---|---|---|
| IF | R1 | R2 | R3 | R4 | R5 | R6 | R6 | R6 | R7 | R8 | | | | | |
| DE | | R1 | R2 | R3 | R4 | R5 | R5 | R5 | R6 | R7 | | | | | |
| RFR | | | R1 | R2 | R3 | R4 | R4 | R4 | R5 | R6 | | | | | |
| EXC | | | | R1 | R2 | R3 | NOP | NOP | R4 | R5 | | | | | |
| RFW | | | | | R1 | R2 | R3 | NOP | NOP | R4 | | | | | |

**IO PIPE**

| | | | | | | | | | | | | | | | |
|---|---|---|---|---|---|---|---|---|---|---|---|---|---|---|---|
| IF | S1 | S2 | S3 | S4 | S5 | S6 | S6 | S6 | S7 | S8 | | | | | |
| DE (OP) | | S1 | S2 | S3 | S4 | S5 | S5 | S5 | S6 | S7 | | | | | |
| RFR (EX) | | | S1 | S2 | S3 | S4 | S4 | S4 | S5 | S6 | | | | | |
| CDOUT (DC) | | | | S1 | S2 | S3 | S3 | S3 | S4 | S5 | | | | | |
| WL | | | | | S1 | S2 | S2 | S2 | S3 | S4 | | | | | |

MMU_EVALID

↑ FREEZE PIPE    ↑ UNFREEZE PIPE

S1 = STORE 1 etc.        R1 = FP Register to register op. 1 etc.

**STORE WITH WL_STALL**

**FIG 3.1.6.4**

3–17                DEC 9, 1987

?C SRC ADR

?C ADR

FP IR (QP)

EA SRC ADR (EX)

EA ADR (DC)

FPC IO CTL PIPE CONTENTS VALID

RFR CTL REG (EX)

DC CTL REG (DC)

WL CTL REG (WL)

/ALID INPUTS TO FRF CHIPS

_ADR 5:1
_WREN 1:0        L1        L3    L4    L5

[_V 1:0        S2

FRF REG CONTENTS VALID

CDIN REG (WL)        L1        L3    L4    L5

CDOUT REG (DC)        S2

MZIN ADR REG        L1, M1    M2 L3, M3 L4, M4 L5, M5

IG 3.1.7.1        LOAD/STORE/LOAD WITH CACHE HIT

FIG 3.1.7.2  STORE/LOAD/STORE – CACHE MISS ON 1ST STORE

PC SRC ADR

PC ADR   FETCH STALL

FP IR   (OP)

EA SRC ADR   (EX)   TABLE WALK

EA ADR   (DC)   TABLE WALK

FPC IO CTL PIPE CONTENTS VALID

RFR CTL REG   (EX)   FREEZE PIPE

DC REG   (DC)

CDIN CTL REG   (WL)

VALID INPUTS TO FRF CHIPS

L_ADR 5:1   S1   S3   S3   S3   S3   S4   S5
T_V 1:0

X_PLEN
/L_PLEN

D_WREN 1:0   L2

FRF REG CONTENTS VALID

CDOUT REG   (DC)   S1   S3   S3   S3   S3   S4   S5

CDIN REG   (WL)

MZIN ADR REG
MZIN DAT REG   M1   M1   M1   M1   L2, M2   M3

sourced by MMU   MMU_EASRCBUSY   TB MISS ON

MMU_EVALID

FIG 3.1.7.3

CORE/LOAD/STORE WITH TB MISS ON 1ST STORE

3-20

DEC 9, 1987

-60-

## 3.2 FP STORE/LOAD – RR PAIRS

The Floating Point instruction is 64 bits, with the IP looking at the even longword and the FP looking at the odd longword. SEE Chapter 4 for more details. A common operation is a FP LOAD or STORE in the even longword, paired with a FP RR operation in the odd longword. The FP RR can be single or double precision.

## 3.2.1 FP STORE/LOAD WITH SP FP RR

FIG 3.2.1 shows a resource allocation diagram of a FP LOAD with Single Precision Register to Register operations running concurrently and the LOAD experiences a cache miss. Note that the DP operation is similar.

## 3.3 FLOATING POINT MTPR AND MFPR OPERATION

### 3.3.0 GENERAL DESCRIPTION OF FP MTPR/MFPR

The MTPR/MFPR instructions are used to read and write data from the IP to the FPU using the DATA bus. These fall into the following catagories:–

1. FP register file to and from IP register file.
2. FPC gate array control and status registers to and from IP register file.

The FP M*PR is a concurrent pair as described in Chapter 4 i.e. INST_INT 31=1. This means that the even longword contains an FNOP with the 12 lowest bits containing the register address, and the odd longword containing the complete instruction. The source or destination address is also an immediate field embedded in the complete instruction.

A FP or IP M*PR will cause an execute stall if MMU_EASRCBUSY is asserted whilst in it's EX stage.

Note that an M*PR will always complete if it has passed the RFR (EX) stage. Thus if an E_TRAP occurs when an M*PR is in it's DC or WL stage, then it will complete.

### 3.3.1 MTPR

The MTPR instruction is performed in tandem with the IP and treated as a LOAD for IP register file to FP register file transfers. The FPC gate array control register load from the IP register file is treated as a LOAD but the data is sourced by the IP and written in the FPC STATCTL reg. for example.

### 3.3.2 MFPR

The MFPR instruction is performed in tandem with the IP and treated as a STORE for FP register file to IP register file transfers.

**ALU/MUL PIPE**

| IF | R1 | R2 | R3 | R4 | R5 | R5 | R5 | R5 | R5 | R6 | R7 | | | | |
|---|---|---|---|---|---|---|---|---|---|---|---|---|---|---|---|
| DE | | R1 | R2 | R3 | R4 | R4 | R4 | R4 | R4 | R5 | R6 | | | | |
| RFR | | | R1 | R2 | R3 | R3 | R3 | R3 | R3 | R4 | R5 | | | | |
| EXC | | | | R1 | R2 | NOP | NOP | NOP | NOP | R3 | R4 | | | | |
| RFW | | | | | R1 | R2 | NOP | NOP | NOP | NOP | R3 | | | | |
| | | | | | | | | | | | | | | | |

**IO PIPE**

| IF | L1 | L2 | L3 | L4 | L5 | L5 | L5 | L5 | L5 | L6 | L7 | | | | |
|---|---|---|---|---|---|---|---|---|---|---|---|---|---|---|---|
| DE (OF) | | L1 | L2 | L3 | L4 | L4 | L4 | L4 | L4 | L5 | L6 | | | | |
| RFR (EX) | | | L1 | L2 | L3 | L3 | L3 | L3 | L3 | L4 | L5 | | | | |
| (DC) | | | | L1 | L2 | L2 | L2 | NOP | NOP | L3 | L4 | | | | |
| WL | | | | | L1 | L1 | L1 | L2 | L2 | NOP | L3 | | | | |

MMU_EVALID

MMU_EASRCBUSY

↑ FREEZE IO PIPE AND DE AND RFR STAGE OF ALU/MUL PIPE

↑ UNFREEZE PIPE FOR DC AND WL STAGE IN IO PIPE

↑ UNFREEZE ALL PIPES

NOTE:– The IF,DE and RFR stages of all pipes are frozen on E_STALL.
The DC and WL stages of the IO pipe only, are frozen on WL_STALL.

**LOAD WITH SP OR OP RR**
**FIG 3.2.1**

## 3.4.0 FP LOAD/STORE WITH EXECUTE TRAP

An Execute trap can occur at different times in relation to a memory reference e.g. a page fault at cache access time, an ECCU during a cache refill.

The FPU supports the same continue model as the IP i.e. the trapped memory request is continued after the trap handling, the instruction in the shadow is continued if a memory request but if a register to register operation, it completes. All other requests in the pipe are aborted and restarted after the trap handling.

The memory requests are continued in the same manner as the IP by having the memory descriptor state loaded in the TRAP and TRAP LAST regs by an MTPR. This is an FP style MTPR, as described in chapter 4. The same MTPR will simultaneously write the TRAP and TRAP LAST registers in the IP. The Processor Reg. Address assignment will be that of the IP Trap Stat Queue.

When the SV.BR.SI instruction is decoded, the contents of the TRAP REG are inserted in the pipe and the TRAP REG is updated with the contents of the TRAP LAST REG.This is identical to the IP operation.

FIG 3.4.1 shows a pipe flow diagram of back to back LOAD's with LOAD 1 causing an MMU_ETRAP. LOAD 1 and LOAD 2 will be continued on the return from the trap handling code. Note that LOAD 1's destination is overwritten prior to dispatching to the trap handler.

E_TRAP being asserted will ensure there is no ESTALL and NOP's are inserted in the EX,DC and WL stages.

The NOP's clearing the EX and WL stages will ensure that ESTALL is not asserted after ETRAP is removed. Thus the pipe will continue clocking. IP_ISTALL will keep issuing NOP's into the EX stage

The FP Instruction Register is reloaded when IP_ISTALL is deasserted, but will not dispatch because of IP_NOP being asserted. When IP_NOP is deasserted, the instruction processing continues for the appropriate trap instructions. When the SV.BR.SI is decoded in the FP IR, the TRAP REG contents are inserted in the IO pipe as if they came from the FP IR. This signals an exit from the trap handler. TRAP REG is loaded from TRAP LAST REG and it's contents are inserted in the IO pipe when SV.BR.SI is again decoded in the FP IR.

Fig 3.4.2 shows a resource allocation diagram for an MMU_ETRAP occurring at cache access time.

Fig 3.4.3 shows a resource allocation diagram for an MMU_ETRAP occurring on a LOAD with an ECCU during refill.

## 3.5.0 LOAD/STORE WITH FP EXCEPTION

If an FP Exception occurs the I/O pipe will continue dispatching and executing all valid instructions. The MUL/ALU pipe will however invalidate all dispatched instructions

**FIG. 3.4.1**

**BACK TO BACK LOADS WITH ETRAP**

3-24

DEC 9, 1987

**ALU/MUL PIPE**

| IF | R1 | R2 | R3 | R4 | R5 | | | | | | | | NXT | | | |
|----|----|----|----|----|----|----|----|----|----|----|----|----|----|----|----|----|
| DE | | R1 | R2 | R3 | R4 | | | | | | | NXT | | | | |
| RFR | | | R1 | R2 | R3 | NOP | NOP | NOP | NOP | NOP | NOP | NXT | | | | |
| EXC | | | | R1 | R2 | NOP | NOP | NOP | NOP | NOP | NOP | NOP | NXT | | | |
| RFW | | | | | R1 | R2 | NOP | NOP | NOP | NOP | NOP | NOP | NOP | NXT | | |

**IO PIPE**

| IF | L1 | L2 | L3 | L4 | L5 | | | | | | | | | | | |
|----|----|----|----|----|----|----|----|----|----|----|----|----|----|----|----|----|
| DE (OF) | | L1 | L2 | L3 | L4 | | | | | | | NXT | | | | |
| RFR (EX) | | | L1 | L2 | L3 | NOP | NOP | NOP | NOP | NOP | NOP | NXT | | | | |
| CDOUT(DC) | | | | L1 | L2 | NOP | NOP | NOP | NOP | NOP | NOP | NOP | NXT | | | |
| WL | | | | | L1 | NOP | NOP | NOP | NOP | NOP | NOP | NOP | NOP | NXT | | |

MMU_EVALID

MMU_EASRCBUSY

MMU_ETRAP

E_STALL

IP_ISTALL

IP_TRAP_DSP

IP_NOP

## ETRAP AT CACHE ACCESS TIME
### FIG 3.4.2

Note: If L1 OR L2 were M*PR's
they would complete

NXT= next instruction that can be decoded and dispatched.

3-25

DEC 9, 1987

ALU/MUL PIPE

| IF | R1 | R2 | R3 | R4 | R5 | R5 | R5 | R5 | | | | | | | |
|---|---|---|---|---|---|---|---|---|---|---|---|---|---|---|---|
| DE | | R1 | R2 | R3 | R4 | R4 | R4 | R4 | | | | | | | |
| RFR | | | R1 | R2 | R3 | R3 | R3 | R3 | NOP | NOP | NOP | NOP | | | |
| EXC | | | | R1 | R2 | NOP | NOP | NOP | NOP | NOP | NOP | NOP | | | |
| RFW | | | | | R1 | R2 | NOP | NOP | NOP | NOP | NOP | NOP | | | |

IO PIPE

| IF | L1 | L2 | L3 | L4 | L5 | L5 | L5 | L5 | | | | | | | |
|---|---|---|---|---|---|---|---|---|---|---|---|---|---|---|---|
| DE (OP) | | L1 | L2 | L3 | L4 | L4 | L4 | L4 | | | | | | | |
| RFR (EX) | | | L1 | L2 | L3 | L3 | L3 | L3 | NOP | NOP | NOP | NOP | | | |
| CDOUT(DC) | | | | L1 | L2 | L2 | L2 | L2 | NOP | NOP | NOP | NOP | | | |
| WL | | | | | L1 | L1 | L1 | L1 | NOP | NOP | NOP | NOP | | | |

MMU_EVALID

MMU_EASRCBUSY

↑ FREEZE PIPE

↑ UNFREEZE PIPE

MMU_ETRAP

IP_ISTALL

E_STALL

ETRAP ON LOAD WITH ECCU DURING REFILL
FIG 3.4.3

instructions.

### 3.6.0 IO PIPELINE REGISTER CONTROL

FIG 3.6.0 shows the pipeline registers and their stall controls. The V1 and V2 fields control whether an operation will complete. The V1 (MPR_V and associated address and write enable bits ) field will validate an FP M*PR or an IP M*PR. The V2 (MEMR_V and associated address and write enable or store valid bits) field will validate an FP or IP LOAD or STORE .

The MPR_V, MEMR_V, write enable and store valid bits are set to zero for a NOP to flow through the pipe. The MPR_V and MEMR_V bits are used to determine E_STALLS and WL_STALLS.

Note that there are no stalls or NOP's on the V1 field (MPR) after it has passed the EX stage i.e. it will always complete. The V2 field (MEMR) however, can be held at the DC or WL stage with a WL STALL and also NOPPED with an MMU_ETRAP.

ISTALL = MMU_IVALID.(MMU_PCSRC_BUSY + IP_ISTALL + FP_ISTALL
    + FP_]TRAP + E_STALL

WL_STALL = ( V2 SET IN WL STAGE).!MMU_EVALID.!MMU_ETRAP

E_STALL = [( V1 OR V2 SET IN EX STAGE). MMU_EASRCBUSY.!MMU_ETRAP
    + WL_STALL

ISSUE NOP 1 = ISTALL + !MMU_IVALID + IP_NOP + MMU_ETRAP

ISSUE NOP 2 = MMU_ETRAP + E_STALL

ISSUE NOP 3 = E_STALL

ISSUE NOP 4 = MMU_ETRAP

V1 = VALID FP OR IP M*PR OPERATION FIELD
V2 = VALID FP OR IP LOAD OR STORE OPERATION FIELD

### IO PIPELINE STALL CONTROL
### FIG 3.6.0

DEC 9, 1987

## 4. FP Instruction Architecture

All instructions are either 32 bits or 64 bits in length. All 32 bit instructions are Integer Processor (IP) instructions, and they can be on any longword boundary. All 64 bit instructions are defined as IP-FP instruction pairs which are quadword aligned with the even (left) longword the IP part and the odd (right) longword the FP part. If an instruction is in the even half of the I Cache, then the F bit (the most significant bit) signifies whether that instruction is 32 or 64 bits long. F bit = 0 means it's an IP instruction (32 bits long) and the following odd longword, which must have its F bit = 0, is a second IP instruction. F bit = 1 (the most significant bit) means it's an IP-FP instruction pair (64 bits long), and the odd longword is the FP part of that IP-FP instruction pair.

Instruction Architecture

even longword    odd longword

| 0 | IP 0 | 0 | IP 1 |

two IP Instructions, 32 bits each
F bit = 0 for both

or

| 1 | IP 0 | FP 0 |

one IP-FP Instruction Pair, 64 bits
F bit = 1

or

| 0 | IP 0 | 1 | IP 1 |

illegal instruction
second IP Instruction cannot have F bit = 1

If the instruction is in the odd half or the even half with F bit = 0, then that longword can be any IP instruction. If it's an FP instruction, then there are restrictions.

Possible Opcodes for each half on an FP Instruction (IP-FP Pair)

even longword

| IP |

or | FP LOAD |

or | FP STORE |

or | FP MxPR |

odd longword

| FP 0-3OP |

or | FP 5OP |

or | FP MxPR |

where IP = IP RR, BRANCH, CALL, IP LOAD, IP STORE, or MxPR not with the FP, and FP 0-3OP = FP floating point (0 to 3 operand) and FP integer instructions.

Legal Pairs

even longword    odd longword

| 1 | IP | FP |

or | 1 | FP LOAD | FP |

or | 1 | FP STORE | FP |

or | 1 | FP MxPR | FP MxPR |

Illegal Pairs

even longword    odd longword

| 1 | IP | FP MxPR |

or | 1 | FP LOAD | FP MxPR |

or | 1 | FP STORE | FP MxPR |

or | 1 | FP MxPR | FP |

or | 1 | BR FP cc | FP cc |

where FP = FP floating point (0 to 3 operand), FP integer instructions, and FP 5 operand instructions.

## ILLEGAL REGISTER SPECIFIERS

If you consider the CPU as 4 separate pipes, the IP, Mul, Alu and IO, where in the IO pipe LOADs have destinations only and STOREs have only sources, then the rule is as follows. ONE PIPE'S DESTINATION CANNOT EQUAL ANOTHER PIPE'S DESTINATION OR SOURCE. (An instruction cannot both branch on FP condition codes and set FP condition codes too.) The following examples illustrate these combinations of register specifiers which are illegal for FP instructions. Because the FPU will not detect these cases, the results are undefined.

---

5OP    FRe FRd FRc FRb FRa

For any 5OP instruction, letting both halves have the same destination is meaningless. The second restriction is due to future implementations which write the result of the 5OP half which didn't generate an exception. If a 5OP traps on an FP exception, and the half that finished wrote over one of the excepting half's sources, then the operand needed for exception trap processing is lost. In summary, FRc cannot equal FRd or FRe, and FRe cannot equal FRa, FRb or FRc.

---

LOAD FRx        Alu or Mul    FRa FRb FRc or
LOAD FRx        5OP    FRa FRb FRc FRd FRe

Similar to the above case, letting the LOAD's destination equal the FP instruction's destination or destinations is meaningless. The second restriction, letting the LOAD's destination equal any of the FP instruction's sources, is for the following reason. If the FP instruction traps on an FP exception, the LOAD will have written over one of the source operands needed for exception trap processing. So in addition to the 5OP restrictions above, FRx cannot equal FRa, FRb, FRc, FRd or FRe.

---

STORE FRx       Alu or Mul    FRa FRb FRc or
STORE FRx       5OP    FRa FRb FRc FRd FRe

Letting the STORE's source equal the FP instruction's destination or destinations is a restriction for the following reason. If the FP instruction finishes and the STORE is aborted and continued later, then the STORE's data is overwritten and lost, not good. So in addition to the 5OP restrictions above, FRx cannot equal FRc or FRe.

## INSTRUCTION CACHE

Instruction Cache

The diagram above would execute as follows. When IP 0 is fetched, the register is loaded with IP 1. During the next cycle, instead of fetching IP 2, IP 1 is fetched from the register and the fetch of IP 2 is stalled.

| Fetch | FE 0 | FE 2 | FE 2 | FE 4 | FE 5 |
| --- | --- | --- | --- | --- | --- |
| | | (FE 1) | | | |
| Decode | | DE 0 | DE 1 | DE 2 | DE 4 | DE 5 |
| Execute | | | EX 0 | EX 1 | EX 2 | EX 4 | EX 5 |

While the IP is decoding IP 1, the FP will see FP 2 but it will see F bit = 0 from the Prefetch IR so the FPU will abort FP 2 during that cycle. The FP will correctly decode FP 2 in the next cycle while the IP is decoding IP 2 because the FPU will see F bit = 1 from the I Cache. The FP will only see FP loads and stores from the tristated devices and never directly from the I Cache.

# 5. Stalls, Exceptions & Traps

Section 5.1 concentrates on Istalls, Estalls and Etraps, 5.2 talks about FP Exceptions, and 5.3 discusses FP Itraps.

## 5.1 Istalls, Estalls & Etraps

Sections 5.1.1 through 5.1.11 discuss stalls due to internal resource conflicts and external factors. Sections 5.1.12 and 5.1.13 talk about FP Branches stalling due to condition code updating and FP BRUN Exceptions.

### 5.1.12 External Stalls

An Istall holds the instruction at the DE stage in the FP IR but lets all FP instructions past the DE stage complete. The IP behaves similarly. An Istall can be caused by factors external to the FPU, or an Istall can be generated by the FPU if an FP instruction in its DE stage cannot progress, in which case the FP will assert FP_ISTALL in the DE stage of the stalling instruction. When the FP instruction can progress, FP_ISTALL will go low. Regarding FP instructions that Istall due to register conflicts, a double precision register can overlap two single precision registers. The Match Logic equates DP register n with SP register n and n+1. The equation for Istall is below.

Istall = MMU_IVALID * (MMU_PCSRC_BUSY + IP_ISTALL + FP_ISTALL + FP_ITRAP + Estall)

An Estall, or Execute stall, will cause an Istall. A WL Estall will freeze all FP instructions in the Mul & Alu pipelines except ones past the RFR stage, and it will freeze all LOADs, STOREs and MxPRs in the IO pipeline. An EX Estall will freeze all FP instructions in the Mul & Alu pipelines except ones past the RFR stage, and it will freeze all LOADs, STOREs and MxPRs in the IO pipeline except ones past the RFR, or EX, stage. If an IP LOAD or STORE has an Estall, the FP will have to track the I Stream and recognize the Estall. The equation for Estall is below. The EX Cycle is any LOAD, STORE or MxPR in the EX stage. The WL Cycle is any LOAD or STORE in the WL stage. Notice that an Etrap releases an Estall.

Estall = ( EX Cycle * MMU_EASRC_BUSY + WL Cycle * MMU_EVALID ) $\overline{\text{MMU\_ETRAP}}$

The example below shows a stream of 64 bit instructions which have a LOAD, STORE or MxPR component called Lx, and an FP instruction component called Rx. L1 causes a WL Estall in cycle . The IO pipeline freezes due to the WL Estall, but the FP instructions past the RFR stage complete, which in this case are R1 & R2. (In this example, L1 can never be an MxPR.)

| | 1 | | 2 | | 3 | | 4 | | 5 | | 6 | | 7 | |
|---|---|---|---|---|---|---|---|---|---|---|---|---|---|---|
| DE/OF | L1 | R1 | L2 | R2 | L3 | R3 | L4 | R4 | L4 | R4 | L4 | R4 | L5 | R5 |
| RFR/EX | | | L1 | R1 | L2 | R2 | L3 | R3 | L3 | R3 | L3 | R3 | L4 | R4 |
| FEX/DC | | | | | L1 | R1 | L2 | R2 | L2 | nop | L2 | nop | L3 | R3 |
| RFW/WL | | | | | | | L1 | R1 | L1 | R2 | L1 | nop | L2 | nop |

WL Estall

The example below shows a similar stream of 64 bit instructions. The difference here is that L3 causes an EX Estall in cycle 4. All FP instructions past the RFR stage complete, which in this case are L1-R1 and L2-R2. The Mul & Alu pipelines behave the same way for both types of Estalls.

| | 1 | | 2 | | 3 | | 4 | | 5 | | 6 | | 7 | |
|---|---|---|---|---|---|---|---|---|---|---|---|---|---|---|
| DE/OF | L1 | R1 | L2 | R2 | L3 | R3 | L4 | R4 | L4 | R4 | L4 | R4 | L5 | R5 |
| RFR/EX | | | L1 | R1 | L2 | R2 | L3 | R3 | L3 | R3 | L3 | R3 | L4 | R4 |
| FEX/DC | | | | | L1 | R1 | L2 | R2 | nop | nop | nop | nop | L3 | R3 |
| RFW/WL | | | | | | | L1 | R1 | L2 | R2 | nop | nop | nop | nop |

EX Estall

The model for Etraps, or Execute traps, is the following when an instruction takes an Etrap. All LOADs and STOREs in the pipeline are aborted. All FP register to register instructions and MxPRs past the RFR stage are completed. This means that any MxPR in the DC, or FEX, stage is completed. In cycle 4 of the example below, L1 takes an Etrap. If L2 isn't an MxPR, L1 & L2 are aborted and later continued using the FP TRAP and FP TRAP_LAST registers. If L2 is an MxPR, it's completed and L1 is aborted and later continued. R1 & R2 are always completed. L3_R3 and L4_R4 are always aborted, and upon trap return the instruction stream will branch to them. (In this example, L1 can never be an MxPR.)

| | 1 | | 2 | | 3 | | 4 | | 5 | | 6 | | 7 | |
|---|---|---|---|---|---|---|---|---|---|---|---|---|---|---|
| DE/OF | L1 | R1 | L2 | R2 | L3 | R3 | L4 | R4 | L5 | R5 | L6 | R6 | L7 | R7 |
| RFR/EX | | | L1 | R1 | L2 | R2 | L3 | R3 | nop | nop | L5 | R5 | L6 | R6 |
| FEX/DC | | | | | L1 | R1 | L2 | R2 | nop | nop | nop | nop | L5 | R5 |
| RFW/WL | | | | | | | L1 | R1 | nop | R2 | nop | nop | nop | nop |

MMU_ETRAP

### 5.1.1 LOAD/STORE followed by a STORE/LOAD

Assume a LOAD is followed by a STORE whose source matches the LOAD's destination. The STORE Istalls in cycle 3 by issuing a NOP. If the LOAD takes a Cache miss or TB miss (an Estall), then all the pipes freeze until the Estall is over. If the LOAD takes an Etrap during the Estall, it is aborted and later continued as above. All instructions dispatched in the FP after the LOAD are aborted in the FP, and upon return from the trap the instruction stream will branch to them while the LOAD is continued.

```
                    1     2     3     4     5     6

1   LOAD  FRa      | IF | DE |RFR| DC |CDin|

2   STORE FRa           | IF | DE | DE |RFR| CD  |
                                              out
                                          ^
        cache miss or TB miss _____|
```

---

Assume a STORE is followed by a LOAD whose source matches the STORE's destination. The LOAD Istalls in cycle 3 by issuing a NOP. If the STORE takes a TB miss (an Estall), then all the pipes freeze until the Estall is over. If the STORE takes an Etrap during the Estall, it is aborted and later continued as above. All instructions dispatched in the FP after the STORE are aborted in the FP, and upon return from the trap the instruction stream will branch to them while the STORE is continued.

```
                    1     2     3     4     5     6     7

1   STORE FRa      | IF | DE |RFR| CD  |
                                    out

2   LOAD  FRa           | IF | DE | DE |RFR| DC |CDin|
                                        ^
                    TB miss _____|
```

---

Assume a STORE is followed by a LOAD whose source matches the STORE's destination. The LOAD Istalls in cycle 3 by issuing a NOP. If the STORE takes a Cache miss (an Estall), then all the pipes freeze until the Estall is over. This case never traps so we can never have an Etrap during the Estall.

Apollo Confidential                5-3                        Feb 18, 1988

| | | 1 | 2 | 3 | 4 | 5 | 6 | 7 |
|---|---|---|---|---|---|---|---|---|
| 1 | STORE FRa | IF | DE | RFR | CD out | | | |
| 2 | LOAD FRa | | IF | DE | DE | RFR | DC | CDin |

cache miss

---

## 5.1.2 LOAD or STORE followed by MxPR

If a LOAD is followed by an MFPR from FP REG with the same FP Register File location, the MFPR from FP REG will follow the same model as the STORE in 5.1.1 and Istall 1 cycle. If a STORE is .followed by an MTPR to FP REG with the same FP Register File location, the MTPR to FP REG will follow the same model as the LOAD in 5.1.1 and Istall 1 cycle. MxPRs with FP CSR and FP PSW will not Istall because LOADs and STOREs do not affect these registers.

## 5.1.3 LOAD or STORE followed by Arithmetic Operations

Assume a LOAD is followed by an arithmetic operation whose source matches the LOAD's destination. The arithmetic operation Istalls in cycle 3 by issuing a NOP, and it uses bypass circuitry in cycle 5 to get the data early. If the LOAD takes a Cache miss or TB miss (an Estall), then all the pipes freeze until the Estall is over. If the LOAD takes an Etrap during the Estall, it is aborted and later continued as above. All instructions dispatched in the FP after the LOAD are aborted in the FP, and upon return from the trap the instruction stream will branch to them while the LOAD is continued.

| | | 1 | 2 | 3 | 4 | 5 |
|---|---|---|---|---|---|---|
| 1 | LOAD FRa | IF | DE | RFR | DC | CDin |
| 2 | ADD/MUL FRa x y | | IF | DE | DE | RFR |

cache miss or TB miss

---

Assume a LOAD is followed by an arithmetic operation whose destination matches the LOAD's destination. The arithmetic operation Istalls in cycle 3 by issuing a NOP. If the LOAD takes a Cache miss or TB miss (an Estall), then all the pipes freeze until the Estall is over. If the LOAD takes an Etrap during the Estall, it is aborted and later continued as

above. All instructions dispatched in the FP after the LOAD are aborted in the FP, and upon return from the trap the instruction stream will branch to them while the LOAD is continued.

```
                    1     2     3     4     5
1   LOAD  FRa      | IF | DE |RFR| DC |CDin|

2   ADD/MUL x y FRa    | IF | DE | DE |RFR|
                                        ↑
          cache miss or TB miss ————————
```

-------------------------------------------------------------------------------

Assume a STORE is followed by an arithmetic operation whose destination matches the STORE's source. The arithmetic operation Istalls in cycle 3 by issuing a NOP. If the STORE takes a TB miss (an Estall), then all the pipes freeze until the Estall is over. If the STORE takes an Etrap during the Estall, it is aborted and later continued as above. All instructions dispatched in the FP after the STORE are aborted in the FP, and upon return from the trap the instruction stream will branch to them while the STORE is continued.

```
                    1     2     3     4     5
1   STORE  FRa     | IF | DE |RFR| CD  |   |
                                   out

2   ADD/MUL x y FRa    | IF | DE | DE |RFR|
                                        ↑
                 TB miss ————————————————
```

-------------------------------------------------------------------------------

Assume a STORE is followed by an arithmetic operation whose destination matches the STORE's source. The arithmetic operation Istalls in cycle 3 by issuing a NOP. If the STORE takes a Cache miss (an Estall), then all the pipes freeze until the Estall is over. This case never traps so we can never have an Etrap during the Estall.

```
                    1     2     3     4     5
                  |     |     |     | CD  |     |
1    STORE FRa    | IF  | DE  | RFR | out |     |

                        |     |     |     |     |
2    ADD/MUL x y FRa    | IF  | DE  | DE  | RFR |
                                             ↑
                              cache miss ────┘
```

--------------------------------------------------------------------

a STORE is followed by an arithmetic operation whose source matches the STORE's source. The arithmetic operation Istalls in cycle 3 by issuing a NOP. If the STORE takes a TB miss (an Estall), then all the pipes freeze until the Estall is over. If the STORE takes an Etrap during the Estall, it is aborted and later continued as above. All instructions dispatched in the FP after the STORE are aborted in the FP, and upon return from the trap the instruction stream will branch to them while the STORE is continued.

```
                    1     2     3     4     5
                  |     |     |     | CD  |     |
1    STORE FRa    | IF  | DE  | RFR | out |     |

                        |     |     |     |     |
2    ADD/MUL FRa x y    | IF  | DE  | RFR | FEX |
                                             ↑
                                TB miss ─────┘
```

--------------------------------------------------------------------

Assume a STORE is followed by an arithmetic operation whose source matches the STORE's source. The arithmetic operation Istalls in cycle 3 by issuing a NOP. If the STORE takes a Cache miss (an Estall), then all the pipes freeze until the Estall is over. This case never traps so we can never have an Etrap during the Estall.

```
                    1     2     3     4     5
                  |     |     |     | CD  |     |
1    STORE FRa    | IF  | DE  | RFR | out |     |

                        |     |     |     |     |
2    ADD/MUL FRa x y    | IF  | DE  | RFR | FEX |
                                             ↑
                              cache miss ────┘
```

### 5.1.4  MxPR followed by LOAD or STORE

If an MTPR to FP REG is followed by a STORE from the same FP Register File location, the STORE will follow the same model as the STORE in 5.1.1 and Istall 1 cycle. If an MFPR from FP REG is followed by a LOAD to the same FP Register File location, the LOAD will follow the same model as the LOAD in 5.1.1 and Istall 1 cycle.

If an MxPR with FP CSR or FP PSW is followed by a LOAD or STORE, the LOAD or STORE will not Istall because LOADs and STOREs do not affect these registers.

### 5.1.5  MxPR followed by MxPR

If an MTPR to FP REG is followed by an MFPR from FP REG with the same location, the MFPR from FP REG will follow the same model as the STORE in 5.1.1 and Istall 1 cycle. If an MFPR from FP REG is followed by an MTPR to FP REG with the same location, the MTPR to FP REG will follow the same model as the LOAD in 5.1.1 and Istall 1 cycle.

If an MxPR with FP CSR or FP PSW is followed by an MxPR with FP CSR or FP PSW, it will Istall 1 cycle. The IO Logic will generate the bypassing and stalling signals.

### 5.1.6  MxPR followed by an FP Instruction

If an MTPR to FP REG is followed by an FP Instruction whose sources or destination match the MTPR's address, the FP Instruction will follow the same model as the FP Instruction in 5.1.3 and Istall 1 cycle. If an MFPR from FP REG is followed by an FP Instruction whose destination matches the MFPR's address, the FP Instruction will follow the same model as the FP Instruction in 5.1.3 and Istall 1 cycle.

If an MxPR with FP CSR or FP PSW is followed by an FP Instruction, the FP Instruction will not Istall because the MxPR is guaranteed to finish before the FP instruction can update FP CSR or FP PSW.

### 5.1.7   FP Instruction followed by LOAD or STORE

FP Excepting instructions include all register–register instructions except integer instructions. The following examples illustrate why we must Istall assuming we could but do not have an FP Exception on the first instruction. For the case when we do have an FP Exception, see FP Exceptions (5.2). Remember that these examples illustrate the number of Istalls when Instruction #1 is not a DIV or SQRT instruction. DIVs and SQRTs will cause longer Istalling.

Assume an ADD is followed by a LOAD whose destination matches the ADD's destination. The LOAD Istalls 3 cycles until we know that the ADD has finished without taking an FP exception in the RFW cycle.

```
                    1    2    3    4    5    6    7    8    9   10

1   ADD  x  y  FRa   | IF | DE |RFR|FEX|RFW|

2   LOAD FRa              | IF | DE | DE | DE | DE |RFR| DC |CDin|

                                        /\
                    FP exception _____/
```

---

Assume an ADD is followed by a STORE whose source matches the ADD's destination. The STORE Istalls 3 cycles until we know that the ADD has finished without taking an FP exception in the RFW cycle.

```
                    1    2    3    4    5    6    7    8    9

1   ADD  x  y  FRa   | IF | DE |RFR|FEX|RFW|

2   STORE  FRa           | IF | DE | DE | DE | DE |RFR| CD |
                                                      | out |

                                        /\
                    FP exception _____/
```

---

Assume an ADD is followed by a LOAD whose destination matches one of the ADD's source operands. The LOAD Istalls 3 cycles until we know that the ADD has finished without taking an FP exception in the RFW cycle.

```
                    1    2    3    4    5    6    7    8    9   10

1   ADD  FRa  x  y   | IF | DE |RFR|FEX|RFW|

2   LOAD FRa             | IF | DE | DE | DE | DE |RFR| DC |CDin|

                                        /\
                    FP exception _____/
```

---

Assume an ADD is followed by a STORE whose source matches one of the ADD's source operands. If the ADD takes an FP exception, the STORE will complete with no Istalling.

```
              1    2    3    4    5    6

1   ADD  FRa  x  y   | IF | DE | RFR | FEX | RFW |

2   STORE  FRa        | IF | DE | RFR | CD  |     |
                                       out

                     FP exception _____↑
```

### 5.1.8  FP Instruction followed by MxPR

If an FP Instruction is followed by an MTPR to FP REG whose destination matches one of the FP Instruction's source operands or destination, the MTPR to FP REG will follow the same model as the LOAD in 5.1.7 and Istall. If an FP Instruction is followed by an MFPR from FP REG whose address matches the FP Instruction's destination, the MFPR from FP REG will follow the same model as the STORE in 5.1.7 and Istall.

If an FP Instruction is followed by an MxPR with FP CSR or FP PSW, the MxPR will Istall until all FP instructions in the Mul & Alu pipelines are finished. This guarantees that these MxPRs will complete sequentially in case the FP instruction takes an FP Exception Trap.

### 5.1.9  FP Instruction followed by FP Instruction

FP Excepting instructions include all register-register instructions except integer instructions. The following examples illustrate why we must Istall assuming we could but do not have an FP Exception on the first instruction. For the case when we do have an FP Exception, see FP Exceptions (5.2). Remember that these examples illustrate the number of Istalls when Instruction #1 is not a DIV or SQRT instruction. DIVs and SQRTs will cause longer Istalling.

Assume an ADD is followed by a MUL whose destination matches the ADD's destination. If the ADD takes an FP exception, then the MUL is inhibited from writing and will be done again because it is in the FP PC Queue.

```
                   1    2    3    4    5    6    7

1    ADD  x  y  FRa     | IF | DE |RFR|FEX|RFW|

2    MUL  x  y  FRa          | IF | DE |RFR|FEX|RFW|
                                         ⤒
                   FP exception on ADD ____⌐
```

Assume an ADD is followed by a MUL whose source matches the ADD's destination. The MUL Istalls in cycles 3 & 4, and uses bypass circuitry around the Register File during the MUL's RFR cycle to get the data early. If the ADD takes an FP exception, then the MUL is inhibited from writing and will be done again because it is in the FP PC Queue.

```
                   1    2    3    4    5    6    7    8    9

1    ADD  x  y  FRa     | IF | DE |RFR|FEX|RFW|

2    MUL  FRa  x  y          | IF | DE | DE | DE |RFR|FEX|RFW|
                                        ⤒
                   FP exception on ADD ____⌐
```

Assume an ADD is followed by a MUL whose destination matches one of the ADD's source operands. If the ADD takes an FP exception, then the MUL is inhibited from writing and will be done again because it is in the FP PC Queue.

```
                   1    2    3    4    5    6    7

1    ADD  FRa  x  y     | IF | DE |RFR|FEX|RFW|

2    MUL  x  y  FRa          | IF | DE |RFR|FEX|RFW|
                                         ⤒
                   FP exception on ADD ____⌐
```

Assume an ADD is followed by a MUL whose source matches one of the ADD's source operands. If the ADD takes an FP exception, then the MUL is inhibited from writing and will be done again because it is in the FP PC Queue.

Notice that there is a critical timing problem. The status from a RFW cycle comes from the ALU & MUL Chips to the Control Chip. This information must be decoded, and if there is an FP exception, the Write Enable signal must be deasserted and sent to the FRF Chip in order to stop the operation from writing.

```
                            1    2    3    4    5    6    7

1    ADD  FRa  x  y        | IF | DE | RFR| FEX|RFW|

2    MUL  FRa  x  y              | IF | DE | RFR| FEX|RFW|
                                                  ↑
              FP exception on ADD _____|
```

### 5.1.10  DIV/SQRT – FP OP Istall

Due to sequentiality, any FP instructions issued after a DIV or SQRT instruction will Istall while the DIV or SQRT instruction is in its RFR stage PLUS its first $N-2$ FEX stages for a total of $N-1$ cycles. All 32 bit IP instructions will not Istall except FP LOADs, FP STOREs and MxPRs with the FP Register File that have register conflicts.

```
                      1    2    3    4            n    n+1  n+2  n+3

1    DIV or SQRT     | IF | DE | RFR| FEX  ...  FEX| FEX| FEX|RFW|

2    FP Instruction       | IF | DE | DE   ...  DE | DE | RFR| FEX|RFW|

     FP_ISTALL      _____|‾‾‾‾‾‾//‾‾‾‾‾‾|_____
```

### 5.1.11  FP PC Queue Full

Whenever there are 0,1 or 2 available entries left in the FP PC Queue, the MMU will assert MMU_FPPC_FULL. This mechanism is for a low end implementation which could have significantly more instructions in progress at once. Because this implementation only needs a much shorter queue, it can and will ignore MMU_FPPC_FULL.

### 5.1.12  Branch Istall

If any FP Branch, Aware or Unaware, is in the Decode stage, and the FP has an instruction executing which sets the FP CCs, the FP will Istall until the FP CCs have been updated in the IP's Current FCC Register. The FP will assert FP_ISTALL during the DE stage of the FP Branch.

| | | 1 | 2 | 3 | 4 | 5 | 6 | 7 | 8 |
|---|---|---|---|---|---|---|---|---|---|
| 1 | ADD.s cc | IF | DE | RFR | FEX | RFW | CC Reg | IP Cur | |
| 2 | FP BRANCH | | IF | DE | DE | DE | DE | DE | |
| 3 | SHADOW OF BR | | | IF | IF | IF | IF | IF | DE |

FP_ISTALL ‾‾‾‾‾‾‾‾‾‾‾‾‾‾‾‾‾⎍‾‾‾‾‾‾‾⎍‾‾‾‾‾‾

## 5.1.13 BRUN Istall

A Branch on Unordered (BRUN) Trap is an Unaware Branch with the NAN bit set. All FP Exceptions must be recorded sequentially. If the logic decodes an Unaware Branch, the FPU will Istall until the pipes and the FP PC Queue are empty so that all FP Exceptions from earlier instructions have been posted. When the FP is empty and there are no FP Exception Traps from prior instructions, the BRUN Trap is signaled during the Istalled DE stage by asserting FP_ISTALL for 1 cycle and FP_EXCEP. BRUN doesn't set the MA field, nor does it load the FP PC Queue. BRUN sets the B bit in FP CSR.

| | | 1 | 2 | 3 | 4 | 5 | 6 | 7 | 8 | 9 |
|---|---|---|---|---|---|---|---|---|---|---|
| 1 | ADD.s | IF | DE | RFR | FEX | RFW | | | | |
| 2 | FP BRANCH | | IF | DE | DE | DE | DE | DE | DE | DE |

Any ADD.s Exceptions known here in FP ⎯⎯⎯⎯↑

FP_ISTALL (due to BR stalling) ⎯⎯⎯⎯⎍‾‾‾‾‾‾‾‾‾‾‾‾‾⎍⎯⎯⎯

FP_ISTALL (due to BRUN Exception Trap) ⎯⎯⎯⎯⎯⎯⎯⎯⎯⎯⎍‾‾⎍⎯⎯⎯

FP_EXCEP ⎯⎯⎯⎯⎯⎯⎯⎯⎯⎯⎯⎯⎯⎯⎯⎍‾‾‾‾‾‾‾

IP_ISTALL ⎯⎯⎯⎯⎯⎯⎯⎯⎯⎯⎯⎯⎯⎯⎯⎯⎯⎯⎍‾‾‾‾

## 5.2 FP Exception Traps

The model for FP Exception Traps is that the FP instruction causing the FP Exception Trap will not have its destination updated in the Register File. All other register–register FP instructions past the DE stage will be aborted by inhibiting further writes to the Register File, FP CSR and FP PSW. The PCs of all instructions that were aborted will be held in the FP PC Queue. (See Chapter 6 as to how the FP PC Queue is handled.) The FP will assert FP_EXCEP the cycle after it knows that there was an FP Exception Trap, and will keep it high until cleared by an MTPR to FP CSR or FP USER CSR. FP_ISTALL is

asserted for 1 cycle. When we enter trap code, IP_ISTALL is deasserted but IP_TRAP_DISP is asserted for 1 cycle. Due to IP_NOP, the FP will abort the instruction stuck in the FP IR (R5) and the instruction started 1 cycle later (R6). All MxPRs, LOADs and STOREs will complete if they're in the piplines during the FP Exception or issued later by trap code.

| | | | 1 | 2 | 3 | 4 | 5 | 6 | ... | n | n+1 | n+2 | n+3 |
|---|---|---|---|---|---|---|---|---|---|---|---|---|---|
| DE | | | R1 | R2 | R3 | R4 | R5 | R5 | | R5 | R6 | T1 | T2 |
| RFR | | | | R1 | R2 | R3 | R4 | | | | nop | nop | T1 |
| FEX | | | | | R1 | R2 | R3 | R4 | | | | nop | nop |
| RFW | | | | | | R1 | R2 | R3 | R4 | | | | nop |

FP Exception on R1 known here ⟋⟍

FP_EXCEP

FP_ISTALL

IP_ISTALL

IP_TRAP_DSP

IP_NOP

## 5.3 Traps

### 5.3.1 Entering Trap Code

When we enter the trap code, IP_ISTALL is deasserted but IP_TRAP_DISP is asserted for 1 cycle and IP_NOP is assserted for 2 cycles. The FP will NOP instruction (#1) and instruction (#2).

| | 1 | 2 | 3 | 4 | 5 |
|---|---|---|---|---|---|
| DE | 1 | 1 | 2 | T1 | T2 |
| RFR | | | nop | nop | T1 |
| FEX | | | | nop | nop |

IP_ISTALL

IP_TRAP_DISP

IP_NOP

### 5.3.2 Leaving Trap Code

When we leave trap code, FP Instructions in the pipes which have register conflicts with the FP instructions in the TRAP and TRAP_LAST registers T1 & T2 are outlawed. We

don't have the time to mux the addresses in the TRAP and TRAP_LAST registers into the Match Logic.

### 5.3.3 FP Owner Trap & Illegal FP Instruction

An FP Owner Violation or Illegal FP Instruction is detected during the DE cycle. FP_ITRAP is asserted in the DE stage for 1 cycle. If MMU_IVALID is deasserted or IP_NOP is asserted, FP_ITRAP and FP_ISTALL may bounce up and down, but the IP will ignore these signals. When FP_ITRAP is deasserted, it will not be asserted again until DLY IP_TRAP_DISP has been asserted. When we enter the trap code, IP_ISTALL is deasserted, IP_TRAP_DISP is asserted for 1 cycle, and IP_NOP is asserted for 2 cycles.

## 5.4 Stall Chart

| | DST–DST match | DST–SRC match | SRC–DST match | SRC–SRC match |
|---|---|---|---|---|
| MEM MEM | LD/MTPR FRa<br>LD/MTPR FRa<br><br>1 | LD/MTPR FRa<br>ST/MFPR FRa<br><br>1 | ST/MFPR FRa<br>LD/MTPR FRa<br><br>1 | ST/MFPR FRa<br>ST/MFPR FRa<br><br>0 |
| MEM FP OP | LD/MTPR FRa<br>ADD x y FRa<br><br>1 | LD/MTPR FRa<br>ADD FRa x y<br><br>1 | ST/MFPR FRa<br>ADD x y FRa<br><br>1 | ST/MFPR FRa<br>ADD FRa x y<br><br>0 |
| FP OP MEM | ADD x y FRa<br>LD/MTPR FRa<br><br>N+2 | ADD x y FRa<br>ST/MFPR FRa<br><br>N+2 | ADD FRa x y<br>LD/MTPR FRa<br><br>N+2 | ADD FRa x y<br>ST/MFPR FRa<br><br>0 |
| FP OP FP OP | ADD x y FRa<br>MUL x y FRa<br><br>0 | ADD x y FRa<br>MUL FRa x y<br><br>N+1 | ADD FRa x y<br>MUL x y FRa<br><br>0 | ADD FRa x y<br>MUL FRa x y<br><br>0 |

| MxPR with CSR/PSW | MTPR CSR<br>MFPR CSR<br><br>1 | MTPR PSW<br>MFPR PSW<br><br>1 | MxPR<br>FP MEM or FP OP<br><br>3 | FP OP<br>MxPR<br><br>N+2 | MxPR<br>FP BRANCH<br><br>4 |
|---|---|---|---|---|---|

| Misc | DIV/SQRT<br>FP OP<br><br>N–1 | FP OP.cc<br>FP BRANCH<br><br>N+3 | FP OP<br>FP Unaware Branch<br><br>N+3 |
|---|---|---|---|

STALL
CONDITION

Penalty Cycles

N equals the number from the
chart below for the first instruction.

See Chapter 8 for further details as to which FP opcodes are considered single, double and integer operations.

| Operation | Single | Double | Integer |
|---|---|---|---|
| Alu | 1 | 1 | 1 |
| Mul | 1 | 1 | 1 |
| DIV | 4 | 6 | 13 |
| SQRT | 6 | 12 | |

## 6. Floating Point Processor Registers

The FP contains twelve sets of Processor Registers: the FP Register File, two FP Mode Registers, two FP Interrupt Register, two FP Flag registers, the FP CSR Register, the FP PSW Register, the FP TRAP & FP TRAP_LAST Registers, and the FP PC Queue. The FP Register File is located in the two FRF chips. The FP CSR, FP PSW, FP TRAP & FP TRAP_LAST Registers are in FPC. The ALU & MUL Chips contain a Mode, Interrupt and Flag register each. The FP PC Queue is in the MMU due to pin considerations. The IP will assure that MxPRs with the FPU that are valid only in Supervisor Mode are not dispatched in User Mode. The table below shows which FP MxPRs are legal in User Mode and Supervisor Mode, and their addresses.

|  | User Mode | Supervisor Mode | Address (hex) |
| --- | --- | --- | --- |
| MxPR FP REGISTER FILE | R/W | R/W | 100 – 1FC |
| MTPR FP/IP TRAP STAT QUEUE | – | W | A10 |
| MxPR FP CSR | – | R/W | A04 |
| MxPR FP USER CSR | R/W | R/W | 204 |
| MxPR FP PSW | R/W | R/W | 200 |
| MFPR FP PC QUEUE (in MMU) | – | R | C40 |

### 6.1 Floating Point Register File (FP REG)

The FP Register File is located in the two FRF chips. There are a total of 64 single precision registers, or 32 double precision registers depending on how you look at it. Even longword addresses of single precision registers are the most significant bits of a double precision register.

### Floating Point Register File Organization

| 31    00 | 31    00 | 31    00 |
| --- | --- | --- |
| MS *Double Precision*<br>LS *Reg 00* | *Single Precision Reg 00*<br>*Single Precision Reg 01* | *MTPR/MFPR Reg 256*<br>*MTPR/MFPR Reg 260* |
| MS *Double Precision*<br>LS *Reg 02* | *Single Precision Reg 02*<br>*Single Precision Reg 03* | *MTPR/MFPR Reg 264*<br>*MTPR/MFPR Reg 268* |
| . | . | . |
| MS *Double Precision*<br>LS *Reg 62* | *Single Precision Reg 62*<br>*Single Precision Reg 63* | *MTPR/MFPR Reg 504*<br>*MTPR/MFPR Reg 508* |

Note: All numbers are in decimal.

### 6.2 Floating Point Mode Registers (FP MMODE & FP AMODE)

The ALU and MUL chips each contain a Mode Register. Both Mode Registers normally have the Overflow and Underflow bits set. The Rounding Mode bits are updated ap-

propriately by the Interlude Handler. All other bits are cleared. The opcodes which transfer data between the Mode Registers and the Register File are not supported instructions and are intended for the Interlude Handler and other nonportable code only.

**Floating Point ALU Mode Register**

08 07 06 05 04 03 02 01 00

| 0 | 0 | R | R | 1 | 1 | 0 | 0 | 0 |
|---|---|---|---|---|---|---|---|---|

BIT 08 = 0
BIT 07 = 0
BIT 06 = ROUNDING MODE
BIT 05 = ROUNDING MODE
BIT 04 = 1 -> IEEE OVERFLOW MODE
BIT 03 = 1 -> IEEE UNDERFLOW MODE
BIT 02 = 0
BIT 01 = 0
BIT 00 = 0

**Floating Point MUL Mode Register**

08 07 06 05 04 03 02 01 00

| 0 | 0 | R | R | 1 | 1 | 0 | 0 | 0 |
|---|---|---|---|---|---|---|---|---|

BIT 08 = 0
BIT 07 = 0
BIT 06 = ROUNDING MODE
BIT 05 = ROUNDING MODE
BIT 04 = 1 -> IEEE OVERFLOW MODE
BIT 03 = 1 -> IEEE UNDERFLOW MODE
BIT 02 = 0
BIT 01 = 0
BIT 00 = 0

## 6.3  Floating Point Interrupt Registers (FP MINTR & FP AINTR)

The ALU and MUL chips each contain an Interrupt Register. They determine when the result for that instruction is written into the Register File and the FP PSW. If an interrupt bit is set and the corresponding flag bit in that chip is set, then all writes to the Register File and FP PSW are inhibited for that instruction only. FPC must inhibit further writes. Several bits in the ALU Interrupt Register are normally set, except Inexact which is a variable. All other bits are cleared. Several bits in the MUL Interrupt Register are normally set, except Inexact which is a variable. All other bits are cleared. The opcodes which transfer data between the Interrupt Registers and the Register File are not supported instructions and are intended for the Interlude Handler and other nonportable code only.

**Floating Point ALU Interrupt Register**

13 12 11 10 09 08 07 06 05 04 03 02 01 00

| 0 | 0 | 0 | 0 | 1 | 0 | X | 1 | 1 | 1 | 0 | 0 | 0 | 1 |
|---|---|---|---|---|---|---|---|---|---|---|---|---|---|

BIT 13 = 0
BIT 12 = 0
BIT 11 = 0
BIT 10 = 0
BIT 09 = 1 -> NAN INTERRUPT ENABLE
BIT 08 = 0
BIT 07 = INEXACT INTERRUPT ENABLE
BIT 06 = 1 -> IOP INTERRUPT ENABLE
BIT 05 = 1 -> UNDERFLOW INTERRUPT ENABLE
BIT 04 = 1 -> OVERFLOW INTERRUPT ENABLE
BIT 03 = 0
BIT 02 = 0
BIT 01 = 0
BIT 00 = 1 -> MASTER INTERRUPT ENABLE

**Floating Point MUL Interrupt Register**

13 12 11 10 09 08 07 06 05 04 03 02 01 00

| 0 | 1 | 0 | 1 | 1 | 0 | X | 1 | 1 | 1 | 0 | 0 | 0 | 1 |
|---|---|---|---|---|---|---|---|---|---|---|---|---|---|

BIT 13 = 0
BIT 12 = 1 -> DIVZ INTERRUPT ENABLE
BIT 11 = 0
BIT 10 = 1 -> DENORM INTERRUPT ENABLE
BIT 09 = 1 -> NAN INTERRUPT ENABLE
BIT 08 = 0
BIT 07 = INEXACT INTERRUPT ENABLE
BIT 06 = 1 -> IOP INTERRUPT ENABLE
BIT 05 = 1 -> UNDERFLOW INTERRUPT ENABLE
BIT 04 = 1 -> OVERFLOW INTERRUPT ENABLE
BIT 03 = 0
BIT 02 = 0
BIT 01 = 0
BIT 00 = 1 -> MASTER INTERRUPT ENABLE

## 6.4 Floating Point Flag Registers (FP MFLAG & FP AFLAG)

The ALU and MUL chips each contain a Flag Register. The Flag Register in the ALU chip is needed for unwrapping a wrapped result. If the Interlude Handler needs to unwrap a result, it must first read FP CSR and update the Inexact and Roundup bits in FP AFLAG immediately prior to issuing the unwrap opcode. After an FP Exception, both Flag Registers are undefined because we are not running in Freeze Mode. The opcodes which transfer data between the Flag Registers and the Register File are not supported instructions and are intended for the Interlude Handler and other nonportable code only.

**Floating Point ALU Flag Register**

| 13 | 12 | 11 | 10 | 09 | 08 | 07 | 06 | 05 | 04 | 03 | 02 | 01 | 00 |
|---|---|---|---|---|---|---|---|---|---|---|---|---|---|
| cry | | dy | dx | nan | rnd | inx | inv | uf | ov | zr | n | pe | int |

BIT 13 = CARRY
BIT 12 = don't care
BIT 11 = DENORM Y INPUT
BIT 10 = DENORM X INPUT
BIT 09 = NAN
BIT 08 = ROUND UP
BIT 07 = INEXACT
BIT 06 = IOP
BIT 05 = UNDERFLOW
BIT 04 = OVERFLOW
BIT 03 = ZERO RESULT
BIT 02 = NEGATIVE RESULT
BIT 01 = PARITY ERROR, not used
BIT 00 = INTERRUPT

**Floating Point MUL Flag Register**

| 13 | 12 | 11 | 10 | 09 | 08 | 07 | 06 | 05 | 04 | 03 | 02 | 01 | 00 |
|---|---|---|---|---|---|---|---|---|---|---|---|---|---|
| | dz | dy | dx | nan | rnd | inx | inv | uf | ov | zr | n | pe | int |

BIT 13 = don't care
BIT 12 = DIVZ
BIT 11 = DENORM Y INPUT
BIT 10 = DENORM X INPUT
BIT 09 = NAN
BIT 08 = ROUND UP
BIT 07 = INEXACT
BIT 06 = IOP
BIT 05 = UNDERFLOW
BIT 04 = OVERFLOW
BIT 03 = ZERO RESULT
BIT 02 = NEGATIVE RESULT
BIT 01 = PARITY ERROR, not used
BIT 00 = INTERRUPT

## 6.5 Floating Point Control Status Register (FP CSR)

The 32 bit FP CSR is located in FPC. It contains the status and control bits for the FPU. Duplicates of the Rounding Mode bits reside in the Mode Registers of the ALU & MUL Chips. The Interlude Handler will update these bits in the ALU & MUL Chips' Mode Registers when these bits in FP CSR are updated. Scan path will initialize the FP CSR to the IEEE standard's recommended default modes (Rounding Mode = Round to Nearest, Trap Enable Bits = all zeros). Also scan path will initialize the ALU & MUL Chips' Mode Registers similarly.

Whenever a bit is set in the MAB field, the FPU will inhibit FP instructions from updating the FP Status bits (FP CSR 12:00) in the following cycles in order to save exception data for the Interlude Handler, and the FPU will inhibit writes into the FP Register File from the Mul and Alu chips. Also a DIVG, FNOP, FP Integer instruction, or instruction which reads or writes the ALU or MUL Chips' three registers will inhibit updating FP Status. But an MTPR to FP CSR or MTPR to FP USER CSR will update FP CSR unconditionally. The MTPR to FP USER CSR writes only to the bits shown in the diagram below labeled MTPR FP USER CSR.

Apollo Confidential                6-3                Feb 18, 1988

## Floating Point Control Status Register

| 31 30 | 29 28 27 | 26 25 | 24 | 23 22 21 20 19 18 17 | 16 15 | 14 | 13 12 | 11 | 10 09 | 08 07 | 06 05 04 03 02 01 00 |
|---|---|---|---|---|---|---|---|---|---|---|---|
| T L | V L I | R Q | | TRAP ENAB | R M | F | M A | B | D R | U | EXC BITS |

←——————————————— FP USER CSR ———————————————→

←——————— FP STATUS ———————→

**TL - FP OWNER THRESHOLD LEVEL**

| | |
|---|---|
| 00 | NO TRAP |
| 01 | TRAP ON ACCESS TO FP DP REG's 8-14 |
| 10 | TRAP ON ACCESS TO FP DP REG's 16-62 |
| 11 | TRAP ON ACCESS TO FP DP REG's 8-62 |

**VL - FP OWNER VIOLATION LEVEL**

| | |
|---|---|
| 00 | NO EXCEPTION |
| 01 | FP OWNER EXCEPTION (DP REG's 8-14) |
| 10 | FP OWNER EXCEPTION (DP REG's 16-62) |
| 11 | FP OWNER EXCEPTION (DP REG's 8-62) |

I = 1 -> ILLEGAL FP INSTRUCTION

R = 1 -> INHIBIT FP EXCEPTIONS
Q = 1 -> INHIBIT FP EXCEPTIONS

**TRAP ENABLES**

BIT 23 = 1 -> TRAP ON BRUN
BIT 22 = 1 -> TRAP ON NAN
BIT 21 = 1 -> TRAP ON OPERR
BIT 20 = 1 -> TRAP ON OVERFLOW
BIT 19 = 1 -> TRAP ON UNDERFLOW
BIT 18 = 1 -> TRAP ON DIVIDE BY ZERO
BIT 17 = 1 -> TRAP ON INEXACT RESULT

**RM - ROUNDING MODE**

| | |
|---|---|
| 00 | -> ROUND TO NEAREST |
| 01 | -> ROUND TO ZERO |
| 10 | -> ROUND TO MINUS INFINITY |
| 11 | -> ROUND TO PLUS INFINITY |

F = 1 -> FAST MODE
M = 1 -> FP EXCEPTION IN MUL
A = 1 -> FP EXCEPTION IN ALU
B = 1 -> BRUN EXCEPTION
D = 1 -> DENORMALIZED INPUT

**RU - ROUNDUP FIELD**

| | |
|---|---|
| 00 | NO MUL OR ALU ROUNDUP |
| 01 | NO MUL ROUNDUP, ALU ROUNDUP |
| 10 | MUL ROUNDUP, NO ALU ROUNDUP |
| 11 | MUL & ALU ROUNDUP |

**EXCEPTION BITS**

BIT 06 = 1 -> BRUN
BIT 05 = 1 -> NAN
BIT 04 = 1 -> OPERR
BIT 03 = 1 -> OVERFLOW
BIT 02 = 1 -> UNDERFLOW
BIT 01 = 1 -> DIVIDE BY ZERO
BIT 00 = 1 -> INEXACT RESULT

| 31 30 29 28 27 26 25 24 | 23 22 21 20 19 18 17 | 16 15 | 14 | 13 12 | 11 | 10 09 | 08 07 | 06 05 04 03 02 01 00 |
|---|---|---|---|---|---|---|---|---|
| R Q | TRAP ENAB | R M | F | M A | B | D R | U | EXC BITS |

MTPR FP USER CSR

### 6.5.1 FP Owner Threshold Level

FP Owner Threshold tells which registers, if any, a process will trap on if an instruction tries to reference those registers. The instruction can be a LOAD, STORE or MxPR with the FP Register File, or any FP register to register operation.

### 6.5.2 FP Owner Violation Level

FP Owner Violation contains the status as to why there was an FP Registerfile Owner Trap according to the encoding above. (DP registers 8 to 14 are the same as SP registers 8 to 15, and DP registers 16 through 62 are the same as SP registers 16 to 63). This trap is signaled during the DE stage by asserting FP_ITRAP for 1 cycle. FP Owner Violation is loaded when the following conditions exist: the instruction in the DE stage is not an Illegal FP Instruction, the instruction has an FP Owner Violation, FP Itrap is enabled,

MMU_IVALID is asserted and IP_NOP is deasserted. Once FP_ITRAP has been issued. FP Owner Violation and the I bit [29:27] will not be updated again until two cycles after the FP receives IP_TRAP_DISP, and the conditions exist again either for an FP Owner Violation or an Illegal FP Instruction.

### 6.5.3 Illegal FP Instruction

The FPU will not catch every undefined opcode. It will detect the instructions labeled "unused" and "Extended OPs" in Chapter 8. The trap is signaled during the DE stage, just as in the FP Registerfile Owner Trap case, by asserting FP_ITRAP for 1 cycle. The I bit is loaded when the following conditions exist: the instruction in the DE stage is an Illegal FP Instruction, FP Itrap is enabled, MMU_IVALID is asserted and IP_NOP is deasserted. Once FP_ITRAP has been issued, FP Owner Violation and the I bit [29:27] will not be updated again until two cycles after the FP receives IP_TRAP_DISP, and the conditions exist again either for an FP Owner Violation or an Illegal FP Instruction.

### 6.5.4 R Bit

When set, the R bit deasserts the FP_EXCEP signal to the IP. The R bit is useful for restarting the FPU pipe after an exception. During restart FP Registerfile Owner Traps and Illegal FP Instruction Trap will always be taken, but FP Exception Traps wont be taken until the R bit is cleared. If a restarted FP instruction has an FP Exception, it and any subsequent FP instructions wont update the FP Register File.

### 6.5.5 Q Bit

When set, the Q bit deasserts the FP_EXCEP signal to the IP, asserts ALLOW_RFW to the FRF chips, and allows the FP CSR & PSW to be updated. When servicing a trap, the Interlude Handler may want to execute a MULWN but doesn't want to take a second trap such as an Underflow, Overflow or Inexact trap. The Interlude Handler can set the Q bit, run the FP Instruction and be assured that 1) the FPU will not take an FP Exception Trap and 2) the FP Instruction will write into the FP Register File, CSR & PSW. See below how the Q bit interacts with the BRUN Trap Enable bit. There are two traps which cannot be disabled by the user: FP Registerfile Owner Trap, and Illegal FP Instruction Trap.

### 6.5.6 Trap Enable Bits

The Trap Enable Bits specify which traps the user wishes to enable/disable for each type of floating point exceptions. As far as the FPU hardware is concerned, all the Trap Enable Bits except BRUN don't directly affect its hardware or operation, but they do affect the Interlude Handler's operation. Instead the FPU is affe :ec' by how the bits in the Alu & Mul's Interrupt Registers are configured.

The BRUN Trap Enable bit deser_es special mention. A BRUN updates the three bits below in the FP STATUS and FP PSW after the pipes are empty. It does NOT clear the

previous values of the other bits in FP STATUS. Those values remain the same and the Interlude Handler must clear them. The chart below summarizes the different scenarios following a BRUN.

| BRUN Trap Enable bit | Q bit | | B bit | BRUN Exception bit | Accrued Invalid Op bit | FP Exception Trap |
|---|---|---|---|---|---|---|
| 0 | 0 | ~ | 0 | 1 | 1 | no |
| 0 | 1 | | 0 | 1 | 1 | no |
| 1 | 0 | | 1 | 1 | 1 | yes |
| 1 | 1 | | 1 | 1 | 1 | no |

### 6.5.7  Rounding Mode

The Rounding Mode field specifies the user-selectable rounding mode. The IEEE standard requires four rounding modes. They are Round to Nearest (RN), Round toward Zero (RZ), Round toward Minus Infinity (RM), and Round toward Plus Infinity (RP). As far as the FPU hardware is concerned, the Rounding Mode field doesn't directly affect its operation

### 6.5.8  Fast Mode

As far as the FPU hardware is concerned, the Fast Mode bit doesn't affect its operation because Fast Mode is an option which is not supported in this implementation. But the F bit is needed in order to conform with the Programer's Model, or Level 1.

### 6.5.9  MAB Field

The M bit indicates an FP Exception Trap in the MUL pipeline. The A bit indicates an FP Exception Trap in the ALU pipeline. The B bit is set when there's an Unaware Branch, the NAN bit is set, there's no valid FP Instructions in the pipes, and the BRUN Trap Enable bit is set. (This state is otherwise known as an Enabled BRUN Trap.) The MAB field is updated simultaneously with all the FP Status bits. Whenever the M, A or B bit is set, the FPU freezes the FP PSW in that cycle, and in the following cycle freezes the FP Status bits (FP CSR 12:00) and inhibits writes into the FP Register File from the Mul and Alu chips. FP Status is frozen in order to save exception data for the Interlude Handler. The equations below show how the MAB field is set. Setting these bits with an MTPR will immediately post the FP Exception Trap.

```
M = M_INTRPT
A = A_INTRPT * not CLASS
B = Unaware Branch*NAN CC*no valid FPOP in pipes*BRUN Trap Enabled
```

### 6.5.10  Denormalized Input

Because the MUL chip cannot process denormalized numbers directly, de ior alized inputs must be specially processed for floating point MUL, DIV & SQRT. The D bit is the MUL Denorm status. Whenever the D bit is set the M bit is set too. The D bit, along with all the FP Status bits, is updated when the instruction is at the end of the RFW stage.

### 6.5.11 Roundup Field

The two respective Roundup bits are set whenever the corresponding Mul or Alu result is rounded away from zero. The Interlude Handler uses these bits to correctly unwrap wrapped results. This field, along with all the FP Status bits, is updated when the instruction is at the end of the RFW stage.

### 6.5.12 Exception Bits (EXC)

The Exception Bits contain a bit for each floating point exception type which may have occurred on the last FP Instruction. These bits, along with all the FP Status bits, are updated when the instruction is at the end of the RFW stage. When an FP Exception is detected, the corresponding bit within the Exception Bits is set according to the diagram below. The Alu chip can never have DIVZ, and CLASS always clears the Exception Bits. See also the Trap Enable Bits section for how a BRUN is handled.

FP CSR

Enable FP STATUS = (Q + !M*!A*!B) !DIVG !FNOP !INTEGER !AMIRO + MTPR CSR
   + Unaware Branch * NAN CC * no valid FPOP in pipes

FP CSR

M_INTRPT — M
not CLASS * A_INTRPT — A
Unaware Branch * NAN CC * no valid FPOP in pipes*BRUN Trap Enabled — B

FP_EXCEP

not Q*not R

not CLASS*ALU EXC — 1
MUL EXC — 0

ALU 3 OP

PRIN — 1
MUL EXC — 0

PRIN SEL

3 OP

EXCEPTION BITS

not Q * M
not Q * A
not Q * B
DIVG
FNOP
INTEGER
AMIRO

en
CKE

Disable FP STATUS

FP STATUS = FP CSR 12:00
AMIRO = Alu or Mul Internal Reg Ops
CKE = 50 ns

FP PSW 00

ALU INEX — 1
MUL INEX — 0

ALU 3 OP

MUL INEX — 1
ALU INEX+MUL INEX — 0

M_INTRPT+A_INTRPT

3 OP

PRIN — 1
0

PRIN SEL

FP PSW

en
CKE

Accrued Inexact

not Q * M_INTRPT
not Q * A_INTRPT
Disable FP STATUS

Disable ACCRUED INEXACT

Enable Accrued Inexact = (Q + !M*!A*!M_INTRPT*!A_INTRPT) !DIVG !FNOP !INTEGER !AMIRO + MTPR PSW
   = (Q + !M*!A) (Q + !M_INTRPT*!A_INTRPT) !DIVG !FNOP !INTEGER + MTPR PSW

## 6.6  FP Processor Status Word (FP PSW)

The 32 bit FP PSW is located in FPC. It contains four FP Condition Code bits, twelve Graphic Clip bits, and five Accrued Exception bits. The FP PSW 31:00, along with all the FP Status bits, is updated when the instruction is written into the register file at the end of the RFW stage. An FP instruction is inhibited from writing into FP PSW 31:16 when the Mul chip is asserting M_INTRPT, or the Alu chip is asserting A_INTRPT and the instruction is not CLASS, when the M or A bit is set, or when the C bit is cleared. CLASS is documented to never take an FP Exception Trap. But because the Alu chip uses its PASSX opcode which can assert A_INTRPT, CLASS must inhibit A_INTRPT.

The Accrued Inexact bit is inhibited whenever FP Status is inhibited, or when M_INTRPT

or A_INTRPT are asserted. The logic for Accrued Inexact is shown earlier for the Inexact Exception bit. An MTPR to FP PSW will update FP PSW 31:00 unconditionally.

## Floating Point PSW

| 31 30 29 28 | 27 26 25 24 23 22 21 20 19 18 17 16 | 15 14 13 12 11 10 09 08 07 06 05 | 04 03 02 01 00 |
|---|---|---|---|
| N Z I Na | Q5 Q4 Q3 Q2 Q1 Q0 P5 P4 P3 P2 P1 P0 | ///////////////// | AEXC |

N = NEGATIVE
Z = ZERO
I = INFINITY
Na = NOT A NUMBER

Qn = Graphics Clip bits Q5:Q0
Pn = Graphics Clip bits P5:P0

BIT 04 = 1 -> INVALID OPERATION
BIT 03 = 1 -> OVERFLOW
BIT 02 = 1 -> UNDERFLOW
BIT 01 = 1 -> DIVIDE BY ZERO
BIT 00 = 1 -> INEXACT RESULT

FP CONDITION CODE BITS          GRAPHIC CLIP BITS          ACCRUED EXCEPTION BITS

### FP PSW 31:16

Enable PSW 31:28 = (Q + !M*!A*!M_INTRPT*!A_INTRPT + !M*!A*!M_INTRPT*Class) CC + MTPR PSW
Enable PSW 27:16 = (Q + !M*!A*!M_INTRPT*!A_INTRPT + !M*!A*!M_INTRPT*Class) CC*CMPG + MTPR PSW

Black Box = Combinatorial Logic

## 6.6.1  FP PSW FP Condition Code Bits

The FP Condition Code Bits are composed of four bits: N, Z, I and NAN. The FP PSW is always valid so the IP can continuously update its register which contains the FP condition codes  The I bit is only defined after a CLASS instruction.

The FP doesn't generate integer condition codes. For DIV.i, the user who cares is expected to test in the IP for a zero divisor, and the most negative number divided by –1.

## 6.6.2 FP PSW Graphic Clip Bits 0/1 (GCB)

The Graphic Clip bits record the status for the last twelve CMPG operations. A CMPG updates P0 with the Alu's Negative Condition Code bit and shifts the Graphics Clip bits left by one bit. (Q5 is not shifted into the NAN bit!) A trivial accept or trivial reject of this vector can be performed by a single branch instruction. When all twelve bits are cleared, then the vector is inside the clipping box (frustrum). This is otherwise known as the trivial accept test. When any corresponding pair of bits are both set (P0 and Q0, or P1 and Q1, etc...), then the vector is outside the clipping box. This is the trivial reject test. CMPG is the only instruction which can update the Graphic Clip bits in addition to the rest of FP PSW, while CMP updates just the 4 FP Condition Code bits.

## 6.6.3 Accrued Exception Bits (AEXC)

The Floating Point Accrued Exception Bits contain the five exception flags required by the IEEE standard. They are sticky exception bits which contain the history of all floating point exceptions which have occurred since the user last cleared the AEXC Bits. As far as the FPU is concerned, the only ones affected by hardware are the Accrued Invalid Operation bit during a BRUN and Accrued Inexact bit. The other three bits are updated by the Interlude Handler. See also the Trap Enable Bits section for how a BRUN is handled.

## 6.7 FP TRAP & TRAP_LAST Registers

The FP TRAP & TRAP_LAST Registers are located in FPC. Normally, they are loaded with the instruction data necessary to continue LOADs and STOREs which have been aborted due to Etraps. The MFPR to FP TRAP STAT QUEUE loads the Data Cache into the FP TRAP_LAST Register and simultaneously loads the FP TRAP_LAST Register's data into the FP TRAP Register.

**FP TRAP & TRAP_LAST Register Contents:**

```
BIT
BIT 20 =    VALID MEMORY REQUEST        used by FPU
BIT 19 =    PROBE REQUEST
BIT 18 =    UNLOCK REQUEST
BIT 17 =    LOCK REQUEST
BIT 16 =    PHYSICAL REFERENCE
BIT 15 =    OP SIZE 1
BIT 14 =    OP SIZE 0                   used by FPU
BIT 13 =    LOAD                        used by FPU
BIT 12 =    LOAD cc
BIT 11 =    FP OPERATION                used by FPU
BIT 10:6 =  RA 4:0
BIT 05 =    EX_FPADDR_ODD               FP Register File Address Bit 0
BIT 4:0 =   RC 4:0                      FP Register File Address 5:1
```

FP Register File Address Bit 0 = not [(IR 26 * IR 30) + (IR 11 * not IR 30)]

## 6.8  FP PC QUEUE

The FP PC Queue is a FIFO queue of seven 30 bit registers, 29 bits of PC [31:03] and a valid bit [00] where V=0 means an invalid PC and V=1 means a valid PC. It is physically in the MMU but controlled by the FPU. The addresses are quadword pointers. The queue doesn't contain the PCs for any FNOPs, MxPRs, LOADs, or STOREs. It only contains FPU floating point instructions and FPU integer instructions, collectively called "FP instructions" in this section.

There are two control signals: FP_LOAD_FPPC and FP_UNLOAD_FPPC. When a valid FP instruction at the RFR stage wants to advance into its FEX stage, we want to load its valid PC into the FP PC Queue. The MMU must condition Load with "not ETRAP * not Estall". When a valid FP instruction is one cycle after the RFW stage (in the ULD cycle) and didn't take an FP Exception Trap, we want to unload, or invalidate, its valid PC in the FP PC Queue. (Unloading shouldn't be confused with reading the PC onto the Data Bus via an MFPR.) Unload can only be asserted when FP_EXCEP is deasserted, so the FPU will condition Unload with not FP_EXCEP. The MMU generates MMU_FPPC_FULL which is asserted when the FP PC Queue has 0, 1 or 2 empty locations available. Because for this implementation we only need a queue length of four, the FPU will ignore this signal. But the FPU must not hang the machine if the FPU incorrectly tries to load a PC when the FP PC Queue is full! The single known scenario where this could happen is when FP_EXCEP is asserted and the FPU incorrectly continues to receive FP instructions. This causes the FPU to stop unloading the FP PC Queue but to continue loading it.

If an FP instruction takes an FP Exception Trap, that FP instruction will not update the Register File and FP PSW, and all the following dispatched FP instructions in the FPU are aborted. The FP PC Queue holds the PC of the excepting FP instruction and the PCs of any dispatched/aborted FP instructions past the DE stage (in other words, FP instructions in the RFR, FEX and RFW stages). In order to recover the instruction stream, the following steps must take place. The excepting FP instruction is processed via the Interlude Handler. Next, In Trap must be asserted in the IP. The instruction stream for the dispatched/aborted FP instructions must be rebuilt as wired code so that no page faults can happen. Now the wired code stream can be started. If any of these FP instructions have an exception, the IP will ignore FP_EXCEP until In Trap is cleared upon trap return. Also, if any of these FP instructions have an exception, the FP PC Queue will continue to be loaded but it won't be unloaded because FP_EXCEP inhibits Unloading.

The FP PC Queue is read via an MFPR which serially advances the seven entries of the FP PC Queue onto the Data Bus. The PC of the excepting FP instruction is the first MFPR with the valid bit set. Further  alid MFPRs, if any, represent the PCs of the dispatched/ aborted FP instructions. After all seven entries have been read, the FP PC Queue will contain seven invalid entries. Below is the FP PC Queue implementation.

Apollo Confidential                    6-11                    Feb 18, 1988

# FP PC QUEUE IMPLEMENTATION

Inst Cache Bus

Estall = EX cycle*MMU_EASRC_BUSY + WL cycle*MMU_EVALID-

V = Valid bit

0 -> invalid instruction
1 -> valid instruction

# 7.0 FLOATING POINT SIGNAL DESCRIPTION

## 7.1 FPU EXTERNAL PINS

### 7.1.1 FPU TO AND FROM MMU

MMU_IVALID                          input                          1

      Asserted by the MMU whenever the instruction, loaded at the last clock edge, in the FPU instruction register is valid. This signal goes to the FPC.
      FPU ACTION
      The floating point control will continue to enable clocking data into the instruction register but will issue a NOP to be loaded in the RFR stage pipe during instruction decode time.

MMU_PCSRC_BUSY                      input                          1

      Asserted by the MMU when gaining control of the PCSRC BUS during an external I cache invalidate. This signal goes to the FPC.
      FPU ACTION
      The cycle in which MMU_PCSRC_BUSY is asserted, the FPU will issue a NOP to be loaded in the RFR stage pie. The IR will not be reloaded until the next clock edge after MMU_PCSRC_BUSY is deasserted.
The cycle in which MMU_PCSRC_BUSY is deasserted, the FPU may dispatch a valid instruction from the FP IR.

MMU_EVALID                          input                          1
      Deasserted by the MMU the cycle after data on the data cache bus was invalid. This can happen on a LOAD cache miss for example. Asserted by the MMU on the cycle after valid data was on the data cache bus. This signal goes to the FPC and both FRF chips.
      FPU ACTION
      1. If there is a valid FP or IP LOAD/STORE in it's WL stage, then the FP IO pipe will stall and the MUL and ALU pipes will stall in the DEC and RFR stages. Any instructions in the MUL/ALU pipes past the RFR stage will complete.

MMU_ETRAP                           input                          1
      Asserted by the MMU whenever an access violation, unaligned error or region/seg/page fault is detected. The access violation and data alignment traps are determined at address translation time and MMU_ETRAP is asserted in the cycle following the attempted memory access. The MMU_ETRAP can be asserted as a result of an IP LOAD/

STORE or an FP LOAD/STORE. If the MMU_ETRAP is asserted due to a region/seg/ page/access violation while walking the tables, then the FPU sees the signal at some indeterminant time after a TB miss. Note that during this time the FPU is doing an E_STALL. This signal goes to the FPC and to both FRF chips.

FPU ACTION

1. When MMU_ETRAP is asserted, any FP or IP LOAD/STORE in it's WL or DC stage is cancelled and will be continued later after the trap handler routine is finished. The continue is achieved by loading the TRAP and TRAP LAST registers in both the FP and IP with information from the Memory Descripter registers located in the IP.This is done with an MTPR. The TRAP and TRAP LAST regs are sequentially dispatched when the FPU decodes the Branch.sa instruction .

2. Any FP or IP LOAD/STORE in it's RFR or DECODE stage will be aborted. These will be restarted after the trap handler has completed.

3. Any FP register to register operation after it's RFR stage will complete i.e. in it's FEX or RFW stage. Register to register operation in it's DEC or RFR stage will be aborted.

| MMU_EASRC_BUSY | input | 1 |
|---|---|---|

Asserted by the MMU unless the IP is requesting the data cache bus and has been granted it. The FPU can only proceed with a STORE, LOAD or M*PR in it's EXC stage if MMU_EASRC_BUSY is deasserted. Note that the FPU keeps track of IP STORE/LOAD or M*PR so it can stall in unison. This signal is also used to control enabling the tristate drivers on the cache data bus, a registered version of MMU_EASRC_BUSY is used for this purpose. This signal goes to the FPC and both FRF chips.

FPU ACTION

1. If MMU_EASRC_BUSY is asserted and the FPU has an FPU or IP LOAD/STORE or M*PR valid bit in it's EXC stage, then the DEC and EXC stage of the IO pipe will stall and the DC and WL stages will complete. The MUL and ALU pipes will stall in the DEC and RFR stages, any register to register operations past this stage will complete.

2. Whenever MMU_EASRC_BUSY is asserted, the following cycle the cache data bus drivers will be tri-stated.

| MMU_CDIN_EN | input | 1 |
|---|---|---|

Asserted by the MMU to the FRF. When asserted, the information on the cache data bus is loaded into the CDIN_SAVE reg and held when deasserted. Used to hold data destined for the write buffer, but the write buffer is unable to accept any more data. The MMU controls inserting data from CDIN_SAVE onto the cache data bus with the signal MMU_REISSUE_N.

**MMU_REISSUE-**        input        1

Asserted by the MMU to the FRF. When asserted, the information in the CDIN_SAVE reg is asserted on the cache data bus. Used in conjunction with MMU_CDIN_EN.

**FP_LOAD_FPPC**        output        1

Asserted by the FPC in the RFR cycle of an instruction. The MMU uses this signal to load the PC address from it's EX stage (equivalent to RFR stage in the FPU) into the FP TRAP PC Queue which resides in the MMU. If an ETRAP or ESTALL occurs, then the PC Queue is not to be loaded. i.e. the MMU must condition the FP_LOAD_FPPC signal with !ETRAP or !ESTALL.This signal is from the FPC to the MMU.

**FP_UNLOAD_FPPC**        output        1

Asserted by the FPC in the cycle after the RFW stage. The MMU uses this signal to unload the oldest valid PC address (i.e. the retired instruction) from the FP TRAP PC Queue which resides in the MMU. If an FP_EXCEP occurs then the FP_UNLOAD_FPPC signal will be inhibited in the FPC. This signal is from the FPC to the MMU.

**INST[31:00]**        input        32

Data is transferred from the I CACHE to the Instruction register inside the Floating Point Control. The instruction is considered valid if MMU_IVALID is asserted, IP_NOP and IP_ISTALLFP are deasserted, and the op code is for the FPU. These signals go to the FPC.

**INST_INT-[31:20,15,13:11]**        input        16

Part of the instruction field received by the IP. The FPU decodes these lines to determine whether the IP or FP is dispatching a LOAD/STORE, M*PR or SVBR. If it's a FP LOAD/STORE , then bits 25:21 are the source or destination address. If it's a FP M*PR then the source or destination address is determined by INST[12:0].

The FP keeps track of both FP LOAD/STORE's and IP LOAD/STORES in order to determine when to execute stall in concert with the IP. The same is true of M*PR's.

These bits are also used to determine if the FPU received an illegal instruction, in which case FP_ITRAP will be asserted. The instruction is considered valid if MMU_IVALID is asserted, IP_NOP and IP_ISTALLFP are deasserted, and the op code is for the FPU. These signals go to the FPC.

**DATA[63:00]**        bi-directional        64

Bi-directional BUS that is used for the following purposes:-
1. To send to the IP the contents of registers internal to the FPC and FRF chips. i.e.

MFPR's.

2. To send to the data cache the contents of registers in the FRF chips. i.e. STORE's.

3. To receive data from the IP to update registers internal to the FPC and FRF chips. i.e. MTPR's.

4. To receive data from the data cache to update the contents of the registers internal to the FRF chips. i.e. LOAD's.

DATA[31:00] goes to the FPC. DATA[63:48, 31:16] goes to FRFU, and DATA[47:32, 15:00] goes to FRFL.

## 7.1.2  FPU TO AND FROM THE IP

IP_ISTALL_FP                    input                    1

Asserted by the IP whenever an IP resource conflict occurs. This signal goes to the FPC.

FPU ACTION

The FPU stops clocking the instruction register and inhibits instruction dispatch but allows the pipelines to drain.

IP_NOP                    input                    1

Asserted by the IP to indicate that the instruction in the FPU instruction register is interpreted as a NOP. Used if the instruction in the shadow of a branch should not be executed. It is also used on a trap dispatch where IP_TRAP_DISP and IP_NOP are asserted in the same cycle, but IP_NOP remains asserted for a minimum of two cycles. This signal goes to the FPC.

FPU ACTION

The FPU allows the instruction register to keep loading but dispatches a NOP.

IP_TRAP_DISP                    input                    1

Asserted by the IP for a TRAP dispatch. It is asserted for one cycle i.e. when the IP does a hardware CALL to save the PC and NXT PC to the IP register file. This signal goes to the FPC.

FPU ACTION

If the FPU asserts FP_ITRAP for one cycle and MMU_IVALID is asserted, then no more FP_ITRAP's can be signalled until the FPU receives IP_TRAP_DISP indicating the trap handler is t :ir.; entered.

FP_FCC[5:0]                    output                    6

Sent from the FPC to the IP to indicate the condition code results of the

last floating point operation. These signals are always valid.

The coding for these signals is as follows:

| FP_CC | ASSIGNMENT |
|-------|------------|
| 5 | N |
| 4 | Z |
| 3 | I |
| 2 | NAN |
| 1 | TRIV ACPT |
| 0 | TRIV REJ |

**FP_EXCEP**                              output                              1

This signal is asserted by the FPC and sent to the IP whenever a Floating Point exception is encountered. This is determined in the RFW stage and sent to the IP in the following cycle.

The FPU will inhibit writing the result of the operation into the register file and will NOP all subsequent RR operations. The pipelines will not stall. All FP LOAD/STORE's and M*PR's will continue to be processed. RR operations will be processed only after the M and A bits in FP STATUS register are cleared. The FP PC QUEUE is loaded with the address of the excepting instruction, and the one in the RFW, FEX and RFR stages.

The FP_EXCEPTION signal is cleared with an MTPR to the FP STATUS register setting the A and M bits to zero.

**FP_ITRAP**                              output                              1

This signal is asserted by the FPC and sent to the IP if an FP OWNER violation or Illegal instruction is found at the DEC stage.

The FP OWNER violation is a result of an access to floating point registers above the threshold determined by bits 31:30 of the FP STATUS Register. This access can be a LOAD/STORE, M*PR or register to register operation.

The Illegal Instruction trap is a result of decoding an instruction falling in the illegal space at the DEC stage. Note that not all illegal instructions are caught.

The FPU will assert FP_ITRAP for one cycle if MMU_IVALID is asserted. FP_ISTALL is also asserted in the same one cycle. The FPU expects IP_ISTALLFP to be asserted in the same cycle that FP_ISTALL is deasserted. No more FP_ITRAP's will be issued until FP_TRAP_DISP is received by the FPU. If MMU_IVALID is deasserted the FP_ITRAP and FP_ISTALL will be up for more than one cycle. In this event it is expected that the IP will ignore these signals because it is also looking at MMU_IVALID.

**EASRCBD[2]**                              input                              1

This signal is issued by the IP or MMU and received by the FRF chips. The FPU uses this signal in conjunction with the IP_OPSIZE(0) bit to determine data

rotation on a LOAD operation.

| IP_OPSIZE[0] | input | 1 |
|---|---|---|

This signal is issued by the IP or MMU and received by the FRF chips. The FPU uses this signal in conjunction with EASRCBD(2) to determine data rotation on a LOAD operation as follows:-

| IP_OPSIZE[0] | EASRCBD[2] | ACTION |
|---|---|---|
| 0 | 0 | DATA [63:32] duplicated on lsw inputs to CDIN REG. Longword operation. Byte is an illegal FP opsize. |
| 0 | 1 | DATA [31:0] duplicated on msw inputs to CDIN REG. Longword operation. Byte is an illegal FP opsize. |
| 1 | 0 | DATA [63:0] on inputs to CDIN REG. Quadword operation. Word is an illegal FP opsize. |
| 1 | 1 | DATA [63:0] on inputs to CDIN REG. Illegal operation. i.e. Quadword to odd address boundary or Word operation which is an illegal opsize. |

| FP_M_ISTALL-, FP_I_ISTALL- | output | 2 |
|---|---|---|

FP_M_ISTALL- and FP_I_ISTALL indicates to the IP and MMU that the FPU is stalled due to a FP resource conflict. These signals are also asserted for one cycle for FP_ITRAP or FP_EXCEP. For timing considerations, there are separate copies for the IP and MMU. This means the FPU cannot accept any more instructions in it's instruction register. The MMU copy will inhibit loading the PC ADR register.

## 7.1.3 FPU TO AND FROM SCAN

| FPC_SCAN[6:0] | input | 6 |
|---|---|---|
| | output | 1 |

These signals are to and from the FPC.

| FRFU_SCAN[6:0] | input | 6 |
|---|---|---|
| | output | 1 |

These signals are to and from the FRFU.

| | | |
|---|---|---|
| FRFL_SCAN[6:0] | input | 6 |
| | output | 1 |

These signals are to and from the FRFL.

| | | |
|---|---|---|
| FALU_SCAN[3:0] | input | 3 |
| | output | 1 |

These signals are to and from the FALU chip.

| | | |
|---|---|---|
| FMPY_SCAN[3:0] | input | 3 |
| | output | 1 |

These signals are to and from the FMPY chip.

| | | |
|---|---|---|
| FPC_CLK50 | input | 1 |

Load is 2 pins of CMOS gate array.

| | | |
|---|---|---|
| FPC_CLK25 | input | 1 |

Load is 2 pins of CMOS gate array.

| | | |
|---|---|---|
| FRFU_CLK25 | input | 1 |

Load is 3 pins of CMOS gate array.

| | | |
|---|---|---|
| FRFL_CLK25 | input | 1 |

Load is 3 pins of CMOS gate array.

| | | |
|---|---|---|
| FRF_CLK50 | input | 1 |

Load is 1 pin of TTL input delay line.

| | | |
|---|---|---|
| FALU_RST | input | 1 |
| FMPY_RST | input | 1 |

## 7.2 FPU INTERNAL PINS

### 7.2.1 INTERNAL SIGNAL DEFINITION

ASTAT[9:0]                                    FALU–FPC                                    10

    Status and exception information from FALU.
    BIT           DEFINITION.
    9             CARRY
    8             DENORM
    7             NAN
    6             ROUND UP
    5             INEXACT RESULT
    4             INVALID OP
    3             UNDERFLOW
    2             OVERFLOW
    1             ZERO
    0             NEGATIVE


MSTAT[9:0]                                    FMPY–FPC                                    10

    Status and exception information from FMPY.
    BIT           DEFINITION.
    9             DIVIDE BY ZERO
    8             DENORM
    7             NAN
    6             ROUND UP
    5             INEXACT RESULT
    4             INVALID OP
    3             UNDERFLOW
    2             OVERFLOW
    1             ZERO
    0             NEGATIVE


AX_ADR[5:1], AY_ADR[5:1]            FPC–FRF                                    10


    The address of the register file to be read for an ALU operation.
The AX and MX addresses are multiplexed inside the FRF chips for the X read port. The
AY and MY addresses are multiplexed inside the FRF chips for the Y read port. Note that
address bits 5:1 select a 64 bit DP or SP odd–even pair. The correct odd or even register
content is selected on it's way to the FALU by AX_LSW_SEL and AY_LSW_SEL.


MX_ADR[5:1], MY_ADR[5:1]            FPC–FRF                                    10


7–8                    Feb 18, 1988

— 107 —

The address of the register file to be read for an MPY operation.
The AX and MX addresses are multiplexed inside the FRF chips for the X read port. The AY and MY addresses are multiplexed inside the FRF chips for the Y read port. Note that address bits 5:1 select a 64 bit DP or SP odd-even pair.The correct odd or even register content is selected on it's way to the FMPY by MX_LSW_SEL and MY_LSW_SEL.

AX_LSW_SEL, AY_LSW_SEL          FPC-FRF                      2

These control whether the LSW or MSW of the operand read from the register file is sent to the FALU in the correct time slot of the msw/lsw transfer. Address bit 0 of the source operand is OR'd with Double Precision operation to form this signal.

| Adr 0 | DP | *_LSW_SEL |
|-------|-----|-----------|
| 0 | 0 | 0 |
| 0 | 1 | 1 |
| 1 | 0 | 1 |
| 1 | 1 | 1 |

MX_LSW_SEL,MY_LSW_SEL          FPC-FRF                      2

These control whether the LSW or MSW of the operand read from the register file is sent to the FMPY in the correct time slot of the msw/lsw transfer. Address bit 0 of the source operand is OR'd with Double Precision operation to form this signal.

| Adr 0 | DP | *_LSW_SEL |
|-------|-----|-----------|
| 0 | 0 | 0 |
| 0 | 1 | 1 |
| 1 | 0 | 1 |
| 1 | 1 | 1 |

AZ_ADR[5:1]                    FPC-FRF                      5

The address of the DP or SP odd/even pair of the register file that is to be written with the results of a FALU operation.
The write to a SP odd/even pair is controlled by AZ_WREN[1:0] .

MZ_ADR[5:1]                    FPC-FRF                      5

The address of the DP or SP odd/even pair of the register file that is to be written with the results of a FMPY operation.
The write to a SP odd/even pair is controlled by MZ_WREN[1:0].

SL_ADR[5:1]                        FPC-FRF                        5

The address of the DP or SP odd/even pair of the register file that is the destination of a LOAD, or the source of a STORE.

The LD_WREN[1:0] bits validate a LOAD and determine if it is a DP or SP odd/even pair write.

The ST_V[1:0] bits validate a STORE and determine the rotation of data to the CDOUT REG as well as enabling the tristate output onto the cache data bus.

Internally to the FRF chips the Load address is muxed with the MZ_ADR and shares the MZIN write port of the register file. i.e. alternate 25ns time slots are allocated to a MUL result and a LOAD.

AZ_WREN[1:0]                       FPC-FRF                        2

Enables the register file write of the AZ port that is addressed by AZ_ADR[5:1] for a FALU operation result.
These enable bits are also used to validate the address compare that activates the bypass circuitry in the FRF chips.

| CODE | ACTION |
|------|--------|
| 0 | no write |
| 1 | write ls 32 bits. |
| 2 | write ms 32 bits |
| 3 | write 64 bits |

MZ_WREN[1:0]                       FPC-FRF                        2

Enables the register file write of the MZ port that is addressed by MZ_ADR[5:1] for a FMPY result . The write enable bits are also used to validate the address compare that activates the bypass circuitry in the FRF chips.

| CODE | ACTION |
|------|--------|
| 0 | no write |
| 1 | write ls 32 bits. |
| 2 | write ms 32 bits |
| 3 | write 64 bits |

LD_WREN[1:0]                       FPC-FRF                        2

Enables the register file write of the MZIN write port,in it's appropriate 25ns time slⁱ. that is addressed by LD_ADR[5:1] during a LOAD operation.
These bits are also used to validate the address compare that activates the bypass circuitry in the FRF chips.

Apollo Confidential              7-10              Feb 18, 1988

| CODE | ACTION |
|------|--------|
| 0 | no write |
| 1 | write ls 32 bits. |
| 2 | write ms 32 bits |
| 3 | write 64 bits |

**ALLOW_RFW**  FPC–FRF  1

When set, indicates that the AZ_WREN 1:0 or MZ_WREN 1:0 bits are for an integer operation. Thus if an overflow occurred for the integer operation, then the write to the register file would take place instead of being inhibited by M_INTRPT or A_INTRPT.

**ST_V[1:0]**  FPC–FRF  2

These bits determine the rotation of data read from the register file and loaded in CDOUT REG during a STORE operation. The bits validate that the SL_ADR[5:1] address is for a STORE operation. Either of these bits set will enable the tri state drivers of the cache data bus during the DC stage. These signals are from the FPC chip to the FRF chips.

| CODE | ACTION |
|------|--------|
| 0 | Store not valid. |
| 1 | Store valid. Duplicate the SP odd contents in the msw bits of CDOUT REG[63:32]. |
| 2 | Store valid. Duplicate the SP even contents in the lsw bits of CDOUT REG[31:0]. |
| 3 | Store valid. Load CDOUT REG with contents of DP reg. |

**MEMR_V**  FPC–FRF  1

This bit indicates that a valid STORE or LOAD request has been dispatched. This can be an IP or FPU STORE or LOAD. This signal is used for the stall logic in the FRF.

**MPR_V**  FPC–FRF  1

This bit indicates that a valid MTPR or MFPR to the register file has been dispatched. This can be an IP or FPU MTPR or MFPR. This signal is used for the stall logic in the FRF.

| AFTN[7:0] | FPC-FALU | 8 |
|---|---|---|

Determines the op code for the FALU.

| MFTN[7:0] | FPC-FMPY | 8 |
|---|---|---|

Determines the op code for the FMPY.

| DIV_MODE_SEL | FPC-FRF | 1 |
|---|---|---|

Used in the integer divide operation. This operation converts the operands to double precision floating point format, performs a DP floating point divide, then converts the result from from floating point to integer. The first convert is done on the divisor and held in the INT DIV REG for one cycle. The DIV_MODE_SEL signal is asserted at this time to select the INT DIV REG for the MX operand. The MY operand conversion is available at the same time and the FP divide is started.

| MPLEN- | FPC-FMPY | 1 |
|---|---|---|

This signal is used to enable the clocking of the FMPY MX and MY regs. Asserting MPLEN- disables the clocking when an operation taking more than one cycle is initiated. i.e. DIV or SQRT. This signal is connected to FMPY_XEN and FMPY_YEN.

| M_INTRPT, A_INTRPT | FMPY,FALU-FRF,FPC | 2 |
|---|---|---|

These M_INTRPT is from the FMPY and the A_INTRPT is from the FALU. They are asserted if an operation has an exception requiring the result not to be written in the FRF. The signals going to the FPC will inhibit loading the PSW and ACCR INEX bit. The conditions when these signals are asserted are listed in section 6.4.

| AX_DATA[31:16] OR AX_DATA[15:0] | FRF-FALU | 16 |
|---|---|---|

AX operand for the FALU.

| AY_DATA[31:16] OR AY_DATA[15:0] | FRF-FALU | 16 |
|---|---|---|

AY operand for the FALU.

| MX_DATA[31:16] OR MX_DATA[15:0] | FRF-FMPY | 16 |
|---|---|---|

MX operand for the FMPY.

MY_DATA[31:16] OR MY_DATA[15:0]        FRF–FMPY        16

MY operand for the FMPY.

AZ_DATA[31:16] OR AZ_DATA[15:0]        FALU–FRF        16

AZ result from FALU.

MZ_DATA[31:16] OR MZ_DATA[15:0]        FMPY–FRF        16

MZ result from FMPY.

## 7.2.2  FPC SIGNALS

MMU_IVALID                        input                        1

       For definition see FPU EXTERNAL PINS

MMU_PCSRC_BUSY                    input                        1
       For definition see FPU EXTERNAL PINS

MMU_EVALID                        input                        1
       For definition see FPU EXTERNAL PINS

MMU_ETRAP                         input                        1
       For definition see FPU EXTERNAL PINS

MMU_EASRC_BUSY                    input                        1
       For definition see FPU EXTERNAL PINS

FP_LOAD_FPPC                      output                       1
       For definition see FPU EXTERNAL PINS

FP_UNLOAD_FPPC                    output                       1
       For definition see FPU EXTERNAL PINS

INST[31:00]                       input                        32
       For definition see FPU EXTERNAL PINS

INST_INT-[31:20,15,13:11]         input                        16
       For definition see FPU EXTERNAL PINS

DATA[31:00]                       bi-directional               32
       For definition see FPU EXTERNAL PINS

IP_ISTALL_FP                      input                        1
       For definition see FPU EXTERNAL PINS

IP_NOP                            input                        1
       For definition see FPU EXTERNAL PINS

-//3 -

IP_TRAP_DISP                         input                              1

> For definition see FPU EXTERNAL PINS

FP_FCC[5:0]                          output                             6
> For definition see FPU EXTERNAL PINS

FP_EXCEP                             output                             1
> For definition see FPU EXTERNAL PINS

FP_ITRAP                             output                             1

> For definition see FPU EXTERNAL PINS

FP_M_ISTALL-, FP_I_ISTALL-        output                              2
> For definition see FPU EXTERNAL PINS

ASTAT[9:0]                           input                             10
> For definition see FPU INTERNAL PINS, 7.2.1

MSTAT[9:0]                           input                             10

> For definition see FPU INTERNAL PINS, 7.2.1

AX_ADR[5:1], AY_ADR[5:1], MX_ADR[5:1], MY_ADR[5:1]        output   20
> For definition see FPU INTERNAL PINS, 7.2.1

AX_LSW_SEL, AY_LSW_SEL,MX_LSW_SEL,MY_LSW_SEL         output    4
> For definition see FPU INTERNAL PINS, 7.2.1

AZ_ADR[5:1]                          output                             5
> For definition see FPU INTERNAL PINS, 7.2.1

MZ_ADR[5:1]                          output                             5
> For definition see FPU INTERNAL PINS, 7.2.1

SL_ADR[5:1]                          output                          5
    For definition see FPU INTERNAL PINS, 7.2.1

AZ_WREN[1:0]                         output                          2
    For definition see FPU INTERNAL PINS, 7.2.1

MZ_WREN[1:0]                         output                          2
    For definition see FPU INTERNAL PINS, 7.2.1

LD_WREN[1:0]                         output                          2
    For definition see FPU INTERNAL PINS, 7.2.1

ST_V[1:0]                            output                          2
    For definition see FPU INTERNAL PINS, 7.2.1

ALLOW_RFW                            output                          1
    For definition see FPU INTERNAL PINS, 7.2.1

MEMR_V                               output                          1
    For definition see FPU INTERNAL PINS, 7.2.1

MPR_V                                output                          1
    For definition see FPU INTERNAL PINS, 7.2.1

AFTN[7:0]                            output                          8
    For definition see FPU INTERNAL PINS, 7.2.1

MFTN[7:0]                            output                          8
    For definition see FPU INTERNAL PINS, 7.2.1

DIV_MODE_SEL                         output                          1
    For definition see FPU INTERNAL PINS, 7.2.1

MPLEN-                               output                          1
    For definition see FPU INTERNAL PINS, 7.2.1

M_INTRPT, A_INTRPT                   input                           2
    For definition see FPU IN·E·.·AL PINS, 7.2.1

7-16                  Feb 18, 1988

| FPC_SCAN[6:0] | input | 6 |
| | output | 1 |
| FPC_CLK50 | input | 2 |
| FPC_CLK25 | input | 1 |
| POWER | | 12 |
| GROUND | | 24 |

### 7.2.1.1 FPC PIN COUNT

| INPUTS | | 78 |
| --- | --- | --- |
| OUTPUTS | | 80 |
| BIDIRECTIONAL | | 32 |
| CLOCKS | | 3 |
| SCAN | | 7 |
| POWER | | |
| | GND | 24 |
| | VCC | 12 |
| TOTAL | | 236 |
| PACKAGE | PGA | 256 |

## 7.2.2 FRF SIGNALS

There are two identical FRF chips, one will handle the msw, the other the lsw.

DATA[63:48, 31:16] OR DATA[47:32, 15:0]    bi-directional    32
    For definition see FPU EXTERNAL PINS

MMU_EVALID    input    1
    For definition see FPU EXTERNAL PINS

MMU_ETRAP    input    1
    For definition see FPU EXTERNAL PINS

MMU_EASRC_BUSY    input    1
    For definition see FPU EXTERNAL PINS

MMU_CDIN_EN    input    1
    For definition see FPU EXTERNAL PINS

MMU_REISSUE-    input    1
    For definition see FPU EXTERNAL PINS

EASRCBD[2]    input    1
    For definition see FPU EXTERNAL PINS

IP_OPSIZE[0]    input    1
    For definition see FPU EXTERNAL PINS

A_INTRPT    input    1
    For definition see FPU INTERNAL PINS, 7.2.1

M_INTRPT    input    1
    For definition see FPU INTERNAL PINS, 7.2.1

AX_ADR[5:1], AY_ADR[5:1], MX_ADR[5:1], MY_ADR[5:1]    input    20
    For definition see FPU INTERNAL PINS, 7.2.1

AX_LSW_SEL, AY_LSW_SEL, MX_LSW_SEL, MY_LSW_SEL    input    4
    For definition see FPU INTERNAL PINS, 7.2.1

—//7—

AZ_ADR[5:1]                                     input                    5
    For definition see FPU INTERNAL PINS, 7.2.1

MZ_ADR[5:1]                                     input                    5
    For definition see FPU INTERNAL PINS, 7.2.1

SL_ADR[5:1]                                     input                    5
    For definition see FPU INTERNAL PINS, 7.2.1

AZ_WREN[1:0]                                    input                    2
    For definition see FPU INTERNAL PINS, 7.2.1

MZ_WREN[1:0]                                    input                    2
    For definition see FPU INTERNAL PINS, 7.2.1

LD_WREN[1:0]                                    input                    2
    For definition see FPU INTERNAL PINS, 7.2.1

ALLOW_RFW                                       input                    1
    For definition see FPU INTERNAL PINS, 7.2.1

ST_V[1:0]                                       input                    2
    For definition see FPU INTERNAL PINS, 7.2.1

MEMR_V                                          input                    1
    For definition see FPU INTERNAL PINS, 7.2.1

MPR_V                                           input                    1
    For definition see FPU INTERNAL PINS, 7.2.1

AX_DATA[31:16] OR AX_DATA[15:0]                 output                   16
    For definition see FPU INTERNAL PINS, 7.2.1

AY_DATA[31:16] OR AY_DATA[15:0]                 output                   16
    For definition see FPU INTERNAL PINS, 7.2.1

MX_DATA[31:16] OR MX_DATA[15:0]                 output                   16
    For definition see FPU INTERNAL PINS, 7.2.1

| | | |
|---|---|---|
| MY_DATA[31:16] OR MY_DATA[15:0] | output | 16 |

For definition see FPU INTERNAL PINS, 7.2.1

| | | |
|---|---|---|
| AZ_DATA[31:16] OR AZ_DATA[15:0] | input | 16 |

For definition see FPU INTERNAL PINS, 7.2.1

| | | |
|---|---|---|
| MZ_DATA[31:16] OR MZ_DATA[15:0] | input | 16 |

For definition see FPU INTERNAL PINS, 7.2.1

| | | |
|---|---|---|
| DIV_MODE_SEL | input | 1 |

For definition see FPU INTERNAL PINS, 7.2.1

| | | |
|---|---|---|
| FRF_CLK25 | input | 3 |

One of these clocks is for the GPR .

| | | |
|---|---|---|
| FRF_CLK50D | input | 2 |

This clock is delayed by 9ns from the FRF_CLK50 using a delay line. One input is connected to a clock pin, the other is a normal signal pin whose function is to control the multiplexed msw/lsw transfer to the FMPY.

| | | |
|---|---|---|
| FRF_CLK50DINV | input | 2 |

This clock is the inverted version of FRF_CLK50D. One input is connected to a clock pin, the other is a normal signal pin whose function is to control the multiplexed msw/lsw transfer to the FALU.

| | | |
|---|---|---|
| FRF_SCAN[6:0] | input | 6 |
| | output | 1 |

### 7.2.2.1 FRF PIN COUNT

| | |
|---|---|
| INPUTS | 92 |
| OUTPUTS | 64 |
| BIDIRECTIONAL | 32 |
| CLOCKS | 7 |

SCAN                    7

POWER
              GND      20
              VCC      12

TOTAL                 234

PACKAGE    PGA        256

## 7.2.3 FALU SIGNALS

A_SMODE                                    input                           1

        From SCAN chip, asserted high will configure the on chip registers in the
scan path into a serial shift register.

A_SCLK                                     input                           1

        From SCAN chip, each time it is asserted high data will be shifted into the
registers configured in the scan path.

A_SIN                                      input                           1

        This is the serial in port from the SCAN chip to the registers configured in
the scan path.

A_SOUT ( ASTAT[6] )                        output                          0

        This is the serial output port to the SCAN chip. NOTE that this pin is
shared with the RND UP pin.

ASTAT[9:0]                                 output                          10
        For definition see FPU INTERNAL PINS, 7.2.1

AFTN[7:0]                                  input                           8
        For definition see FPU INTERNAL PINS, 7.2.1

AX_DATA[31:0]                              input                           32
        For definition see FPU INTERNAL PINS, 7.2.1

AY_DATA[31:0]                              input                           32
        For definition see FPU INTERNAL PINS, 7.2.1

AZ_DATA[31:0]                              output                          32
        For definition see FPU INTERNAL PINS, 7.2.1

A_INTRPT                                   output                          1
        For definition see FPU INTERNAL PINS, 7.2.1

A_RESET                                    input                           1

When asserted will asynchronously clear the FALU mode, mask and flag registers. This signal is driven by the SCAN chip.

| FRF_CLK50D | input | 1 |
|---|---|---|

This is a delayed 50ns clock connected to FALU_CK2 and FALU_MSWSEL.

| FRF_CLK50DINV | input | 1 |
|---|---|---|

This is the inverted version of FRF_CLK50D connected to FALU_CK1 and FALU_MSWEN.

## UNUSED SIGNALS

| | |
|---|---|
| FALU_TOEN | always low |
| FALU_FOEN | always low |
| FALU_TSOEN | always low |
| FALU_FSOEN | always low |
| FALU_XSEL | always low |
| FALU_YSEL | always low |
| FALU_XEN | always low |
| FALU_YEN | always low |
| FALU_ZEN | always low |
| FALU_RL1 | always low– AX and AY operate in latch mode. |
| FALU_RL2 | always high–AZ operates in register mode. |
| FALU_PE | not used |
| FALU_AXP[3:0] | not used |
| FALU_AYP[3:0] | not used |
| FALU_AZP[3:0] | not used |

## POWER PINS

| | |
|---|---|
| VCC | 8 logic, 5 output |
| GND | 4 logic, 5output |

TOTAL SIGNALS USED
PACKAGE 169 PIN PGA

| | |
|---|---|
| OUTPUTS | 43 |
| INPUTS | 78 |
| BI-DIRECTIONAL | 0 |
| CLOCKS | 2 |

RESET         1
SCAN          4

## 7.2.3 FMPY SIGNALS

M_SMODE                                     input                    1

From SCAN chip, asserted high will configure the on chip registers in the scan path into a serial shift register.

M_SCLK                                      input                    1

From SCAN chip, each time it is asserted high data will be shifted into the registers configured in the sacn path.

M_SIN                                       input                    1

This is the serial in port from the SCAN chip to the registers configured in the scan path.

M_SOUT ( MSTAT[6] )                         output                   0

This is the serial output port to the SCAN chip. NOTE that this pin is shared with the RND UP pin.

MSTAT[9:0]                                  output                   10
For definition see FPU INTERNAL PINS, 7.2.1

MFTN[7:0]                                    input                    8
For definition see FPU INTERNAL PINS, 7.2.1

MPLEN–                                       input                    1

This signal is used to enable the clocking of the FMPY MX and MY regs. Asserting MPLEN– disables the clocking when an operation taking more than one cycle is initiated. i.e. DIV or SQRT. This signal is connected to FMPY_XEN and FMPY_YEN.

MX_DATA[31:0]                               input                    32
For definition see FPU INTERNAL PINS, 7.2.1

MY_DATA[31:0]                               input                    32
For definition see FPU INTERNAL PINS, 7.2.1

MZ_DATA[31:0]                                    output              32
        For definition see FPU INTERNAL PINS, 7.2.1


M_INTRPT                                         output               1
        For definition see FPU INTERNAL PINS, 7.2.1


M_RESET                                          input                1


        When asserted will asynchronously clear the FALU mode, mask and flag registers. This signal is driven by the SCAN chip.


FMPY_CLK50D                                      input                1


        This is a delayed 50ns clock connected to FMPY_CK1, FMPY_CK2, FMPY_MSWEN, and FMPY_MSWSEL.

UNUSED SIGNALS

|                | |
|----------------|--------------------------------|
| FMPY_TOEN      | always low                     |
| FMPY_FOEN      | always low                     |
| FMPY_TSOEN     | always low                     |
| FMPY_FSOEN     | always low                     |
| FMPY_XSEL      | always low                     |
| FMPY_ZEN       | always low                     |
| FMPY_RL1       | always high– MX, MY in register mode. |
| FMPY_RL2       | always high– MZ in register mode.     |
| FMPY_PE        | not used                       |
| FMPY_MXP[3:0]  | not used                       |
| FMPY_MYP[3:0]  | not used                       |
| FMPY_MZP[3:0]  | not used                       |


POWER PINS


        VCC          8 logic, 5 output
        GND          4 logic, 5output


TOTAL SIGNALS USED
PACKAGE 169 PIN PGA
OUTPUTS          43
INPUTS           78
BI-DIRECTIONAL   0
CLOCKS           1


7–26                    Feb 18, 1988

RESET       1
SCAN        4

-126-

## 8. FP Opcodes

Floating Point Opcode Mapping:

```
31 30 29 28 27 26 25 24 23 22 21 20 19 18 17 16 15 14 13 12 11 10 09 08 07 06 05 04 03 02 01 00
| 0| 0|  FRE     | 0|  FRD    | 0|  FRC    | 0|  FRB    |M|  FRA    |N|   DP 5 OP
```

```
31 30 29 28 27 26 25 24 23 22 21 20 19 18 17 16 15 14 13 12 11 10 09 08 07 06 05 04 03 02 01 00
|M|N|  FRE     | e|  FRD    | d|  FRC    | c|  FRB    |b|  FRA    |a|   SP 5 OP
```

```
31 30 29 28 27 26 25 24 23 22 21 20 19 18 17 16 15 14 13 12 11 10 09 08 07 06 05 04 03 02 01 00
| 0| 0| - - - - -| 0| - - - - -| 0| - - - - -| 1| - - - - -| -| - - - - -| -|   unused
```

```
31 30 29 28 27 26 25 24 23 22 21 20 19 18 17 16 15 14 13 12 11 10 09 08 07 06 05 04 03 02 01 00
| 0| 0| - - - - -| 1| - - - - -| 0| - - - - -| -| - - - - -| -| - - - - -| -|   Extended OPs
```

```
31 30 29 28 27 26 25 24 23 22 21 20 19 18 17 16 15 14 13 12 11 10 09 08 07 06 05 04 03 02 01 00
| 0| 0|X|Y|F|F|F|C|F|F|F|F|F| 1|  FRC    | c|  FRB    |b|  FRA    |a|   0-3 OPs
```

FFFFFFFF = FUNCTION CODE

MN = 5 OP ENCODING FIELD

C = 1 -> SET FP CONDITION CODES

X = 1 -> VALID DESTINATION (FRC)

Y = 1 -> VALID SOURCE OR SOURCES (FRA, FRB)

- = don't care

a = LSB OF FRA IF SINGLE REG SRC, 0 IF DOUBLE PRECISION SRC
b = LSB OF FRB IF SINGLE REG SRC, 0 IF DOUBLE PRECISION SRC
c = LSB OF FRC IF SINGLE REG DST, 0 IF DOUBLE PRECISION DST
d = LSB OF FRD IF SINGLE REG SRC, 0 IF DOUBLE PRECISION SRC
e = LSB OF FRE IF SINGLE REG SRC/DST, 0 IF DOUBLE PRECISION SRC/DST

Floating Point 5 Register, SP:     FRC <- FRB * FRA;   FRE <- FRE op FRD

| 63 62 | | 32 |
|---|---|---|
| 1 | INTEGER INSTRUCTION HALF . . . | |

| 31 30 29 28 27 26 25 | 24 | 23 22 21 20 19 | 18 | 17 16 15 14 13 | 12 | 11 10 09 08 07 | 06 | 05 04 03 02 01 | 00 |
|---|---|---|---|---|---|---|---|---|---|
| M N   FRE | e | FRD | d | FRC | c | FRB | b | FRA | a |

MN

| 01 | = MUL_CVTRZ |
|---|---|
| 10 | = MUL_ADD |
| 11 | = MUL_SUB |

FP CONDITION CODES ARE NOT SET

Floating Point 5 Register, DP:     FRC <- FRB * FRA;    FRE <- FRE op FRD

| 63 62 | | 32 |
|---|---|---|
| 1 | INTEGER INSTRUCTION HALF . . . | |

| 31 30 29 28 27 26 25 | 24 | 23 22 21 20 19 | 18 | 17 16 15 14 13 | 12 | 11 10 09 08 07 | 06 | 05 04 03 02 01 | 00 |
|---|---|---|---|---|---|---|---|---|---|
| 0 0   FRE | 0 | FRD | 0 | FRC | 0 | FRB | M | FRA | N |

MN

| 00 | = MUL_CVTRZ - LSB OF FRE = 0 |
|---|---|
| 01 | = MUL_CVTRZ - LSB OF FRE = 1 |
| 10 | = MUL_ADD |
| 11 | = MUL_SUB |

FP CONDITION CODES ARE NOT SET

## FP 0-3 Operand, dst & src, dyadic     FRC <- FRB op FRA     FRC.cc <- FRB op FRA

| 63 | 62 | | 32 |
|----|----|----|----|
| 1 | INTEGER INSTRUCTION HALF . . . | | |

31 30 29 28 27 26 25 24 23 22 21 20 19 18 17 16 15 14 13 12 11 10 09 08 07 06 05 04 03 02 01 00

| 0 | 0 | 1 | 1 | F | F | F | C | F | F | F | F | F | 1 | FRC | | c | FRB | | b | · FRA | | a |

### FUNCTION CODE

```
0000 0000 = DIV.fs        0010 0000 =        0100 0000 =        0110 0000 =
0000 0001 = DIV.fd        0010 0001 =        0100 0001 =        0110 0001 =
0000 0010 =               0010 0010 =        0100 0010 =        0110 0010 =
0000 0011 =               0010 0011 =        0100 0011 =        0110 0011 =
0000 0100 = MULWN.fs      0010 0100 =        0100 0100 =        0110 0100 =
0000 0101 = MULWN.fd      0010 0101 =        0100 0101 =        0110 0101 =
0000 0110 = MULNW.fs      0010 0110 =        0100 0110 =        0110 0110 =
0000 0111 = MULNW.fd      0010 0111 =        0100 0111 =        0110 0111 =

0000 1000 = MUL.fs        0010 1000 =        0100 1000 =        0110 1000 =
0000 1001 = MUL.fd        0010 1001 =        0100 1001 =        0110 1001 =
0000 1010 =               0010 1010 =        0100 1010 =        0110 1010 =
0000 1011 =               0010 1011 =        0100 1011 =        0110 1011 =
0000 1100 =               0010 1100 =        0100 1100 =        0110 1100 =
0000 1101 =               0010 1101 =        0100 1101 =        0110 1101 =
0000 1110 =               0010 1110 =        0100 1110 =        0110 1110 =
0000 1111 =               0010 1111 =        0100 1111 =        0110 1111 =

0001 0000 =               0011 0000 = ADD.fs 0101 0000 =        0111 0000 =
0001 0001 =               0011 0001 = ADD.fd 0101 0001 =        0111 0001 =
0001 0010 =               0011 0010 = SUB.fs 0101 0010 =        0111 0010 =
0001 0011 =               0011 0011 = SUB.fd 0101 0011 =        0111 0011 =
0001 0100 =               0011 0100 =        0101 0100 =        0111 0100 =
0001 0101 =               0011 0101 =        0101 0101 =        0111 0101 =
0001 0110 =               0011 0110 =        0101 0110 =        0111 0110 =
0001 0111 =               0011 0111 =        0101 0111 =        0111 0111 =

0001 1000 = DIVG.fs       0011 1000 =        0101 1000 =        0111 1000 =
0001 1001 =               0011 1001 =        0101 1001 =        0111 1001 =
0001 1010 =               0011 1010 =        0101 1010 =        0111 1010 =
0001 1011 =               0011 1011 =        0101 1011 =        0111 1011 =
0001 1100 =               0011 1100 =        0101 1100 =        0111 1100 =
0001 1101 =               0011 1101 =        0101 1101 =        0111 1101 =
0001 1110 =               0011 1110 =        0101 1110 =        0111 1110 =
0001 1111 =               0011 1111 =        0101 1111 =        0111 1111 =
```

fs = SINGLE PRECISION FLOATING POINT
fd = DOUBLE PRECISION FLOATING POINT
C = 1 -> SET FP CONDITION CODES

_-129-_

FP 0-3 Operand, dst & src, dyadic:    (contd.)

FUNCTION CODE
_____

| | | | |
|---|---|---|---|
| 1000 0000 = | 1010 0000 = | 1100 0000 = | 1110 0000 = ADD.i |
| 1000 0001 = | 1010 0001 = | 1100 0001 = | 1110 0001 = |
| 1000 0010 = | 1010 0010 = | 1100 0010 = | 1110 0010 = |
| 1000 0011 = | 1010 0011 = | 1100 0011 = | 1110 0011 = |
| 1000 0100 = | 1010 0100 = | 1100 0100 = | 1110 0100 = |
| 1000 0101 = | 1010 0101 = | 1100 0101 = | 1110 0101 = SUB.i |
| 1000 0110 = | 1010 0110 = | 1100 0110 = | 1110 0110 = |
| 1000 0111 = | 1010 0111 = | 1100 0111 = | 1110 0111 = |
| 1000 1000 = | 1010 1000 = | 1100 1000 = | 1110 1000 = |
| 1000 1001 = | 1010 1001 = | 1100 1001 = | 1110 1001 = |
| 1000 1010 = | 1010 1010 = | 1100 1010 = | 1110 1010 = |
| 1000 1011 = | 1010 1011 = | 1100 1011 = | 1110 1011 = |
| 1000 1100 = | 1010 1100 = | 1100 1100 = | 1110 1100 = |
| 1000 1101 = | 1010 1101 = | 1100 1101 = | 1110 1101 = |
| 1000 1110 = | 1010 1110 = | 1100 1110 = | 1110 1110 = |
| 1000 1111 = | 1010 1111 = | 1100 1111 = | 1110 1111 = |
| 1001 0000 = | 1011 0000 = | 1101 0000 = | 1111 0000 = DIV.i |
| 1001 0001 = | 1011 0001 = | 1101 0001 = | 1111 0001 = |
| 1001 0010 = | 1011 0010 = | 1101 0010 = | 1111 0010 = |
| 1001 0011 = | 1011 0011 = | 1101 0011 = OR.i | 1111 0011 = |
| 1001 0100 = | 1011 0100 = | 1101 0100 = | 1111 0100 = |
| 1001 0101 = | 1011 0101 = | 1101 0101 = AND.i | 1111 0101 = |
| 1001 0110 = | 1011 0110 = | 1101 0110 = · | 1111 0110 = |
| 1001 0111 = | 1011 0111 = | 1101 0111 = | 1111 0111 = |
| 1001 1000 = | 1011 1000 = | 1101 1000 = | 1111 1000 = |
| 1001 1001 = | 1011 1001 = | 1101 1001 = | 1111 1001 = |
| 1001 1010 = | 1011 1010 = | 1101 1010 = | 1111 1010 = |
| 1001 1011 = | 1011 1011 = | 1101 1011 = | 1111 1011 = |
| 1001 1100 = | 1011 1100 = | 1101 1100 = | 1111 1100 = MULUL.i |
| 1001 1101 = | 1011 1101 = | 1101 1101 = | 1111 1101 = |
| 1001 1110 = | 1011 1110 = | 1101 1110 = | 1111 1110 = |
| 1001 1111 = | 1011 1111 = | 1101 1111 = XOR.i | 1111 1111 = MULSL.i |

i = INTEGER
FP CONDITION CODES ARE NOT SET

FP 0-3 Operand, dst & src, monadic:     FRC <- op FRA     FRC.cc <- op FRA

| 63 | 62 | | 32 |
|----|-----|---|---|
| 1 | INTEGER INSTRUCTION HALF . . . | | |

31 30 29 28 27 26 25 24 23 22 21 20 19 18 17 16 15 14 13 12 11 10 09 08 07 06 05 04 03 02 01 00

| 0 | 0 | 1 | 1 | F | F | F | C | F | F | F | F | F | 1 | FRC | c | FRB=FRA | b | FRA | a |

FUNCTION CODE

| | | | |
|---|---|---|---|
| 0000 0000 = | 0010 0000 = | 0100 0000 = | 0110 0000 = |
| 0000 0001 = | 0010 0001 = | 0100 0001 = | 0110 0001 = |
| 0000 0010 = SQRT.fs | 0010 0010 = | 0100 0010 = | 0110 0010 = CVT.si |
| 0000 0011 = SQRT.fd | 0010 0011 = | 0100 0011 = | 0110 0011 = CVT.di |
| 0000 0100 = | 0010 0100 = | 0100 0100 = | 0110 0100 = |
| 0000 0101 = | 0010 0101 = | 0100 0101 = | 0110 0101 = |
| 0000 0110 = | 0010 0110 = | 0100 0110 = | 0110 0110 = CVT.is |
| 0000 0111 = | 0010 0111 = | 0100 0111 = | 0110 0111 = CVT.id |
| 0000 1000 = | 0010 1000 = ABS.fs | 0100 1000 = | 0110 1000 = |
| 0000 1001 = | 0010 1001 = ABS.fd | 0100 1001 = | 0110 1001 = |
| 0000 1010 = | 0010 1010 = NEG.fs | 0100 1010 = | 0110 1010 = |
| 0000 1011 = | 0010 1011 = NEG.fd | 0100 1011 = | 0110 1011 = |
| 0000 1100 = | 0010 1100 = MOV.fs | 0100 1100 = | 0110 1100 = |
| 0000 1101 = | 0010 1101 = MOV.fd | 0100 1101 = | 0110 1101 = |
| 0000 1110 = | 0010 1110 = | 0100 1110 = | 0110 1110 = |
| 0000 1111 = | 0010 1111 = | 0100 1111 = | 0110 1111 = |
| 0001 0000 = | 0011 0000 = | 0101 0000 = | 0111 0000 = |
| 0001 0001 = | 0011 0001 = | 0101 0001 = | 0111 0001 = |
| 0001 0010 = | 0011 0010 = | 0101 0010 = | 0111 0010 = CVTRZ.si |
| 0001 0011 = | 0011 0011 = | 0101 0011 = | 0111 0011 = CVTRZ.di |
| 0001 0100 = | 0011 0100 = | 0101 0100 = | 0111 0100 = UNWRAP.fs |
| 0001 0101 = | 0011 0101 = | 0101 0101 = | 0111 0101 = UNWRAP.fd |
| 0001 0110 = | 0011 0110 = | 0101 0110 = | 0111 0110 = CVT.sd |
| 0001 0111 = | 0011 0111 = | 0101 0111 = | 0111 0111 = CVT.ds |
| 0001 1000 = | 0011 1000 = | 0101 1000 = | 0111 1000 = |
| 0001 1001 = | 0011 1001 = | 0101 1001 = | 0111 1001 = |
| 0001 1010 = | 0011 1010 = | 0101 1010 = | 0111 1010 = |
| 0001 1011 = | 0011 1011 = | 0101 1011 = | 0111 1011 = |
| 0001 1100 = | 0011 1100 = | 0101 1100 = | 0111 1100 = IRND.fs |
| 0001 1101 = | 0011 1101 = | 0101 1101 = | 0111 1101 = IRND.fd |
| 0001 1110 = | 0011 1110 = | 0101 1110 = | 0111 1110 = IRNDZ.fs |
| 0001 1111 = | 0011 1111 = | 0101 1111 = | 0111 1111 = IRNDZ.fd |

FRB = FRA
b = a
C = 1 -> SET FP CONDITION CODES

fs = SINGLE PRECISION FLOATING POINT
fd = DOUBLE PRECISION FLOATING POINT
i = INTEGER
si = SINGLE PRECISION SRC & DST
di = DOUBLE PRECISION SRC, SINGLE PRECISION DST
is = SINGLE PRECISION SRC & DST
id = SINGLE PRECISION SRC, DOUBLE PRECISION DST
s. = SINGLE PRECISION SRC, DOUBLE PRECISION DST
d. = DOUBLE PRECISION SRC, SINGLE PRECISION DST

## FP 0-3 Operand, dst & src, monadic:     (contd.)

FUNCTION CODE

| | | | |
|---|---|---|---|
| 1000 0000 = | 1010 0000 = | 1100 0000 = | 1110 0000 = |
| 1000 0001 = | 1010 0001 = | 1100 0001 = | 1110 0001 = |
| 1000 0010 = | 1010 0010 = | 1100 0010 = | 1110 0010 = |
| 1000 0011 = | 1010 0011 = | 1100 0011 = | 1110 0011 = |
| 1000 0100 = | 1010 0100 = | 1100 0100 = | 1110 0100 = |
| 1000 0101 = | 1010 0101 = | 1100 0101 = | 1110 0101 = |
| 1000 0110 = | 1010 0110 = | 1100 0110 = | 1110 0110 = |
| 1000 0111 = | 1010 0111 = | 1100 0111 = | 1110 0111 = NEG.i |
| 1000 1000 = | 1010 1000 = | 1100 1000 = | 1110 1000 = |
| 1000 1001 = | 1010 1001 = | 1100 1001 = | 1110 1001 = |
| 1000 1010 = | 1010 1010 = | 1100 1010 = | 1110 1010 = |
| 1000 1011 = | 1010 1011 = | 1100 1011 = | 1110 1011 = |
| 1000 1100 = | 1010 1100 = | 1100 1100 = | 1110 1100 = |
| 1000 1101 = | 1010 1101 = | 1100 1101 = | 1110 1101 = |
| 1000 1110 = | 1010 1110 = | 1100 1110 = | 1110 1110 = |
| 1000 1111 = | 1010 1111 = | 1100 1111 = | 1110 1111 = |
| 1001 0000 = | 1011 0000 = | 1101 0000 = | 1111 0000 = |
| 1001 0001 = | 1011 0001 = | 1101 0001 = | 1111 0001 = |
| 1001 0010 = | 1011 0010 = | 1101 0010 = | 1111 0010 = |
| 1001 0011 = | 1011 0011 = | 1101 0011 = | 1111 0011 = |
| 1001 0100 = | 1011 0100 = | 1101 0100 = | 1111 0100 = |
| 1001 0101 = | 1011 0101 = | 1101 0101 = | 1111 0101 = |
| 1001 0110 = | 1011 0110 = | 1101 0110 = | 1111 0110 = |
| 1001 0111 = | 1011 0111 = | 1101 0111 = | 1111 0111 = |
| 1001 1000 = | 1011 1000 = | 1101 1000 = | 1111 1000 = |
| 1001 1001 = | 1011 1001 = | 1101 1001 = NOT.i | 1111 1001 = |
| 1001 1010 = | 1011 1010 = | 1101 1010 = COPY.fs | 1111 1010 = |
| 1001 1011 = COPY.fd | 1011 1011 = | 1101 1011 = | 1111 1011 = |
| 1001 1100 = | 1011 1100 = | 1101 1100 = | 1111 1100 = |
| 1001 1101 = | 1011 1101 = | 1101 1101 = | 1111 1101 = |
| 1001 1110 = | 1011 1110 = | 1101 1110 = | 1111 1110 = |
| 1001 1111 = | 1011 1111 = | 1101 1111 = | 1111 1111 = |

i = INTEGER
fs = SINGLE PRECISION FLOATING POINT
fd = DOUBLE PRECISION FLOATING POINT
FP CONDITION CODES ARE NOT SET

## FP 0-3 Operand, src:     NULL.cc <- FRB op FRA

```
63 62                                                                          32
┌───┬──────────────────────────────────────────────────────────────────────────┐
│ 1 │ INTEGER INSTRUCTION HALF . . .                                             │
└───┴──────────────────────────────────────────────────────────────────────────┘
```

```
31 30 29 28 27 26 25 24 23 22 21 20 19 18 17 16 15 14 13 12 11 10 09 08 07 06 05 04 03 02 01 00
┌──┬──┬──┬──┬──┬──┬──┬──┬──┬──┬──┬──┬──┬──┬─────────────┬──┬─────────┬──┬─────────┬──┐
│0 │0 │0 │1 │F │F │F │1 │F │F │F │F │F │1 │  0 0 0 0 0  │0 │  FRB    │b │  FRA    │a │
└──┴──┴──┴──┴──┴──┴──┴──┴──┴──┴──┴──┴──┴──┴─────────────┴──┴─────────┴──┴─────────┴──┘
```

### FUNCTION CODE

| | | | |
|---|---|---|---|
| 0000 0000 = | 0010 0000 = | 0100 0000 = | 0110 0000 = |
| 0000 0001 = | 0010 0001 = | 0100 0001 = | 0110 0001 = |
| 0000 0010 = | 0010 0010 = | 0100 0010 = | 0110 0010 = |
| 0000 0011 = | 0010 0011 = | 0100 0011 = | 0110 0011 = |
| 0000 0100 = | 0010 0100 = | 0100 0100 = | 0110 0100 = |
| 0000 0101 = | 0010 0101 = | 0100 0101 = | 0110 0101 = |
| 0000 0110 = | 0010 0110 = | 0100 0110 = | 0110 0110 = |
| 0000 0111 = | 0010 0111 = | 0100 0111 = | 0110 0111 = |
| 0000 1000 = | 0010 1000 = | 0100 1000 = | 0110 1000 = |
| 0000 1001 = | 0010 1001 = | 0100 1001 = | 0110 1001 = |
| 0000 1010 = | 0010 1010 = | 0100 1010 = | 0110 1010 = |
| 0000 1011 = | 0010 1011 = | 0100 1011 = | 0110 1011 = |
| 0000 1100 = | 0010 1100 = CLASS.fs | 0100 1100 = | 0110 1100 = |
| 0000 1101 = | 0010 1101 = CLASS.fd | 0100 1101 = | 0110 1101 = |
| 0000 1110 = | 0010 1110 = | 0100 1110 = | 0110 1110 = |
| 0000 1111 = | 0010 1111 = | 0100 1111 = | 0110 1111 = |
| 0001 0000 = | 0011 0000 = | 0101 0000 = | 0111 0000 = |
| 0001 0001 = | 0011 0001 = | 0101 0001 = | 0111 0001 = |
| 0001 0010 = | 0011 0010 = | 0101 0010 = | 0111 0010 = |
| 0001 0011 = | 0011 0011 = | 0101 0011 = | 0111 0011 = |
| 0001 0100 = | 0011 0100 = CMPG.fs | 0101 0100 = | 0111 0100 = |
| 0001 0101 = | 0011 0101 = | 0101 0101 = | 0111 0101 = |
| 0001 0110 = | 0011 0110 = CMP.fs | 0101 0110 = | 0111 0110 = |
| 0001 0111 = | 0011 0111 = CMP.fd | 0101 0111 = | 0111 0111 = |
| 0001 1000 = | 0011 1000 = | 0101 1000 = | 0111 1000 = |
| 0001 1001 = | 0011 1001 = | 0101 1001 = | 0111 1001 = |
| 0001 1010 = | 0011 1010 = | 0101 1010 = | 0111 1010 = |
| 0001 1011 = | 0011 1011 = | 0101 1011 = | 0111 1011 = |
| 0001 1100 = | 0011 1100 = | 0101 1100 = | 0111 1100 = |
| 0001 1101 = | 0011 1101 = | 0101 1101 = | 0111 1101 = |
| 0001 1110 = | 0011 1110 = | 0101 1110 = | 0111 1110 = |
| 0001 1111 = | 0011 1111 = | 0101 1111 = | 0111 1111 = |

fs = SINGLE PRECISION FLOATING POINT
fd = DOUBLE PRECISION FLOATING POINT
FP CONDITION CODES ARE SET
FRB = FRA FOR CLASS
b = a  FOR CLASS

## FP 0-3 Operand, src: (contd.)

### FUNCTION CODE

| | | | |
|---|---|---|---|
| 1000 0000 = | 1010 0000 = | 1100 0000 = | 1110 0000 = |
| 1000 0001 = | 1010 0001 = | 1100 0001 = | 1110 0001 = |
| 1000 0010 = | 1010 0010 = | 1100 0010 = | 1110 0010 = |
| 1000 0011 = | 1010 0011 = | 1100 0011 = | 1110 0011 = |
| 1000 0100 = | 1010 0100 = | 1100 0100 = | 1110 0100 = |
| 1000 0101 = | 1010 0101 = | 1100 0101 = | 1110 0101 = |
| 1000 0110 = | 1010 0110 = | 1100 0110 = | 1110 0110 = |
| 1000 0111 = | 1010 0111 = | 1100 0111 = | 1110 0111 = |
| 1000 1000 = | 1010 1000 = | 1100 1000 = | 1110 1000 = |
| 1000 1001 = | 1010 1001 = | 1100 1001 = | 1110 1001 = |
| 1000 1010 = | 1010 1010 = | 1100 1010 = | 1110 1010 = |
| 1000 1011 = | 1010 1011 = | 1100 1011 = | 1110 1011 = |
| 1000 1100 = | 1010 1100 = | 1100 1100 = | 1110 1100 = |
| 1000 1101 = | 1010 1101 = | 1100 1101 = | 1110 1101 = |
| 1000 1110 = | 1010 1110 = | 1100 1110 = | 1110 1110 = |
| 1000 1111 = | 1010 1111 = | 1100 1111 = | 1110 1111 = |
| 1001 0000 = | 1011 0000 = | 1101 0000 = | 1111 0000 = |
| 1001 0001 = | 1011 0001 = | 1101 0001 = | 1111 0001 = |
| 1001 0010 = | 1011 0010 = | 1101 0010 = | 1111 0010 = |
| 1001 0011 = | 1011 0011 = | 1101 0011 = | 1111 0011 = |
| 1001 0100 = | 1011 0100 = | 1101 0100 = | 1111 0100 = |
| 1001 0101 = | 1011 0101 = | 1101 0101 = | 1111 0101 = |
| 1001 0110 = | 1011 0110 = | 1101 0110 = | 1111 0110 = |
| 1001 0111 = | 1011 0111 = | 1101 0111 = | 1111 0111 = |
| 1001 1000 = | 1011 1000 = | 1101 1000 = | 1111 1000 = |
| 1001 1001 = | 1011 1001 = | 1101 1001 = | 1111 1001 = |
| 1001 1010 = | 1011 1010 = | 1101 1010 = | 1111 1010 = |
| 1001 1011 = | 1011 1011 = | 1101 1011 = | 1111 1011 = |
| 1001 1100 = | 1011 1100 = | 1101 1100 = | 1111 1100 = |
| 1001 1101 = | 1011 1101 = | 1101 1101 = | 1111 1101 = |
| 1001 1110 = | 1011 1110 = | 1101 1110 = | 1111 1110 = |
| 1001 1111 = | 1011 1111 = | 1101 1111 = | 1111 1111 = |

## FP 0-3 Operand, dst:    FRC <- REG

| 63 62 | | 32 |
|---|---|---|
| 1 | INTEGER INSTRUCTION HALF . . . | |

| 31 | 30 | 29 | 28 | 27 | 26 | 25 | 24 | 23 | 22 | 21 | 20 | 19 | 18 | 17 | 16 15 14 13 12 | 11 | 10 09 08 07 06 | 05 | 04 03 02 01 00 |
|---|---|---|---|---|---|---|---|---|---|---|---|---|---|---|---|---|---|---|---|
| 0 | 0 | 1 | 0 | F | F | F | 0 | F | F | F | F | F | 1 | | FRC | c | 0 0 0 0 0 | 0 | 0 0 0 0 0 | 0 |

FUNCTION CODE

| | | | |
|---|---|---|---|
| 0000 0000 = | 0010 0000 = | 0100 0000 = | 0110 0000 = |
| 0000 0001 = | 0010 0001 = | 0100 0001 = | 0110 0001 = |
| 0000 0010 = | 0010 0010 = | 0100 0010 = | 0110 0010 = |
| 0000 0011 = | 0010 0011 = | 0100 0011 = | 0110 0011 = |
| 0000 0100 = | 0010 0100 = | 0100 0100 = | 0110 0100 = |
| 0000 0101 = | 0010 0101 = | 0100 0101 = | 0110 0101 = |
| 0000 0110 = | 0010 0110 = | 0100 0110 = | 0110 0110 = |
| 0000 0111 = | 0010 0111 = | 0100 0111 = | 0110 0111 = |
| 0000 1000 = | 0010 1000 = | 0100 1000 = | 0110 1000 = |
| 0000 1001 = | 0010 1001 = | 0100 1001 = | 0110 1001 = |
| 0000 1010 = | 0010 1010 = | 0100 1010 = | 0110 1010 = |
| 0000 1011 = | 0010 1011 = | 0100 1011 = | 0110 1011 = |
| 0000 1100 = | 0010 1100 = | 0100 1100 = | 0110 1100 = |
| 0000 1101 = | 0010 1101 = | 0100 1101 = | 0110 1101 = |
| 0000 1110 = | 0010 1110 = | 0100 1110 = | 0110 1110 = |
| 0000 1111 = | 0010 1111 = | 0100 1111 = | 0110 1111 = |
| 0001 0000 = | 0011 0000 = | 0101 0000 = | 0111 0000 = |
| 0001 0001 = | 0011 0001 = | 0101 0001 = | 0111 0001 = |
| 0001 0010 = | 0011 0010 = | 0101 0010 = AFLAGR | 0111 0010 = |
| 0001 0011 = | 0011 0011 = | 0101 0011 = | 0111 0011 = |
| 0001 0100 = | 0011 0100 = | 0101 0100 = AINTRR | 0111 0100 = |
| 0001 0101 = | 0011 0101 = | 0101 0101 = | 0111 0101 = |
| 0001 0110 = | 0011 0110 = | 0101 0110 = AMODER | 0111 0110 = |
| 0001 0111 = | 0011 0111 = | 0101 0111 = | 0111 0111 = |
| 0001 1000 = | 0011 1000 = | 0101 1000 = | 0111 1000 = |
| 0001 1001 = | 0011 1001 = | 0101 1001 = | 0111 1001 = |
| 0001 1010 = | 0011 1010 = | 0101 1010 = MFLAGR | 0111 1010 = |
| 0001 1011 = | 0011 1011 = | 0101 1011 = | 0111 1011 = |
| 0001 1100 = | 0011 1100 = | 0101 1100 = MINTRR | 0111 1100 = |
| 0001 1101 = | 0011 1101 = | 0101 1101 = | 0111 1101 = |
| 0001 1110 = | 0011 1110 = | 0101 1110 = MMODER | 0111 1110 = |
| 0001 1111 = | 0011 1111 = | 0101 1111 = | 0111 1111 = |

FP CONDITION CODES ARE NOT SET
A = ALU
M = MUL
FLAG = FLAG REG
INTR = INTERRUPT REG
MODE = MODE REG
R = READ REG INTO DST
W = WRITE SRC INTO REG

## FP 0-3 Operand, dst: (contd.)

FUNCTION CODE

| | | | |
|---|---|---|---|
| 1000 0000 = | 1010 0000 = | 1100 0000 = | 1110 0000 = |
| 1000 0001 = | 1010 0001 = | 1100 0001 = | 1110 0001 = |
| 1000 0010 = | 1010 0010 = | 1100 0010 = | 1110 0010 = |
| 1000 0011 = | 1010 0011 = | 1100 0011 = | 1110 0011 = |
| 1000 0100 = | 1010 0100 = | 1100 0100 = | 1110 0100 = |
| 1000 0101 = | 1010 0101 = | 1100 0101 = | 1110 0101 = |
| 1000 0110 = | 1010 0110 = | 1100 0110 = | 1110 0110 = |
| 1000 0111 = | 1010 0111 = | 1100 0111 = | 1110 0111 = |
| 1000 1000 = | 1010 1000 = | 1100 1000 = | 1110 1000 = |
| 1000 1001 = | 1010 1001 = | 1100 1001 = | 1110 1001 = |
| 1000 1010 = | 1010 1010 = | 1100 1010 = | 1110 1010 = |
| 1000 1011 = | 1010 1011 = | 1100 1011 = | 1110 1011 = |
| 1000 1100 = | 1010 1100 = | 1100 1100 = | 1110 1100 = |
| 1000 1101 = | 1010 1101 = | 1100 1101 = | 1110 1101 = |
| 1000 1110 = | 1010 1110 = | 1100 1110 = | 1110 1110 = |
| 1000 1111 = | 1010 1111 = | 1100 1111 = | 1110 1111 = |
| 1001 0000 = | 1011 0000 = | 1101 0000 = | 1111 0000 = |
| 1001 0001 = | 1011 0001 = | 1101 0001 = | 1111 0001 = |
| 1001 0010 = | 1011 0010 = | 1101 0010 = | 1111 0010 = |
| 1001 0011 = | 1011 0011 = | 1101 0011 = | 1111 0011 = |
| 1001 0100 = | 1011 0100 = | 1101 0100 = | 1111 0100 = |
| 1001 0101 = | 1011 0101 = | 1101 0101 = | 1111 0101 = |
| 1001 0110 = | 1011 0110 = | 1101 0110 = | 1111 0110 = |
| 1001 0111 = | 1011 0111 = | 1101 0111 = | 1111 0111 = |
| 1001 1000 = | 1011 1000 = | 1101 1000 = | 1111 1000 = |
| 1001 1001 = | 1011 1001 = | 1101 1001 = | 1111 1001 = |
| 1001 1010 = | 1011 1010 = | 1101 1010 = | 1111 1010 = |
| 1001 1011 = | 1011 1011 = | 1101 1011 = | 1111 1011 = |
| 1001 1100 = | 1011 1100 = | 1101 1100 = | 1111 1100 = |
| 1001 1101 = | 1011 1101 = | 1101 1101 = | 1111 1101 = |
| 1001 1110 = | 1011 1110 = | 1101 1110 = | 1111 1110 = |
| 1001 1111 = | 1011 1111 = | 1101 1111 = | 1111 1111 = |

FP 0-3 Operand, src:       REG <- FRA

63 62                                                                                    32

| 1 | INTEGER INSTRUCTION HALF . . . |
|---|---|

31 30 29 28 27 26 25 24 23 22 21 20 19 18 17 16 15 14 13 12 11 10 09 08 07 06 05 04 03 02 01 00

| 0 | 0 | 0 | 1 | F | F | F | 0 | F | F | F | F | F | 1 | 0 0 0 0 0 | 0 | FRB=FRA | b | FRA | a |
|---|---|---|---|---|---|---|---|---|---|---|---|---|---|---|---|---|---|---|---|

FUNCTION CODE

```
0000 0000 =          0010 0000 =          0100 0000 =          0110 0000 =
0000 0001 =          0010 0001 =          0100 0001 =          0110 0001 =
0000 0010 =          0010 0010 =          0100 0010 =          0110 0010 =
0000 0011 =          0010 0011 =          0100 0011 =          0110 0011 =
0000 0100 =          0010 0100 =          0100 0100 =          0110 0100 =
0000 0101 =          0010 0101 =          0100 0101 =          0110 0101 =
0000 0110 =          0010 0110 =          0100 0110 =          0110 0110 =
0000 0111 =          0010 0111 =          0100 0111 =          0110 0111 =

0000 1000 =          0010 1000 =          0100 1000 =          0110 1000 =
0000 1001 =          0010 1001 =          0100 1001 =          0110 1001 =
0000 1010 =          0010 1010 =          0100 1010 =          0110 1010 =
0000 1011 =          0010 1011 =          0100 1011 =          0110 1011 =
0000 1100 =          0010 1100 =          0100 1100 =          0110 1100 =
0000 1101 =          0010 1101 =          0100 1101 =          0110 1101 =
0000 1110 =          0010 1110 =          0100 1110 =          0110 1110 =
0000 1111 =          0010 1111 =          0100 1111 =          0110 1111 =

0001 0000 =          0011 0000 =          0101 0000 =          0111 0000 =
0001 0001 =          0011 0001 =          0101 0001 =          0111 0001 =
0001 0010 =          0011 0010 =          0101 0010 =          0111 0010 =
0001 0011 =          0011 0011 =          0101 0011 = AFLAGW   0111 0011 =
0001 0100 =          0011 0100 =          0101 0100 =          0111 0100 =
0001 0101 =          0011 0101 =          0101 0101 = AINTRW   0111 0101 =
0001 0110 =          0011 0110 =          0101 0110 =          0111 0110 =
0001 0111 =          0011 0111 =          0101 0111 = AMODEW   0111 0111 =

0001 1000 =          0011 1000 =          0101 1000 =          0111 1000 =
0001 1001 =          0011 1001 =          0101 1001 =          0111 1001 =
0001 1010 =          0011 1010 =          0101 1010 =          0111 1010 =
0001 1011 =          0011 1011 =          0101 1011 = MFLAGW   0111 1011 =
0001 1100 =          0011 1100 =          0101 1100 =          0111 1100 =
0001 1101 =          0011 1101 =          0101 1101 = MINTRW   0111 1101 =
0001 1110 =          0011 1110 =          0101 1110 =          0111 1110 =
0001 1111 =          0011 1111 =          0101 1111 = MMODEW   0111 1111 =
```

FRB = FRA
b = a
FP CONDITION CODES ARE NOT SET
A = ALU
M = MUL
FLAG = FLAG REG
INTR = INTERRUPT REG
MODE = MODE REG
R = READ REG INTO DST
W = WRITE SRC INTO REG

-137-

## FP 0-3 Operand. src:     (contd.)

FUNCTION CODE

| | | | |
|---|---|---|---|
| 1000 0000 = | 1010 0000 = | 1100 0000 = | 1110 0000 = |
| 1000 0001 = | 1010 0001 = | 1100 0001 = | 1110 0001 = |
| 1000 0010 = | 1010 0010 = | 1100 0010 = | 1110 0010 = |
| 1000 0011 = | 1010 0011 = | 1100 0011 = | 1110 0011 = |
| 1000 0100 = | 1010 0100 = | 1100 0100 = | 1110 0100 = |
| 1000 0101 = | 1010 0101 = | 1100 0101 = | 1110 0101 = |
| 1000 0110 = | 1010 0110 = | 1100 0110 = | 1110 0110 = |
| 1000 0111 = | 1010 0111 = | 1100 0111 = | 1110 0111 = |
| 1000 1000 = | 1010 1000 = | 1100 1000 = | 1110 1000 = |
| 1000 1001 = | 1010 1001 = | 1100 1001 = | 1110 1001 = |
| 1000 1010 = | 1010 1010 = | 1100 1010 = | 1110 1010 = |
| 1000 1011 = | 1010 1011 = | 1100 1011 = | 1110 1011 = |
| 1000 1100 = | 1010 1100 = | 1100 1100 = | 1110 1100 = |
| 1000 1101 = | 1010 1101 = | 1100 1101 = | 1110 1101 = |
| 1000 1110 = | 1010 1110 = | 1100 1110 = | 1110 1110 = |
| 1000 1111 = | 1010 1111 = | 1100 1111 = | 1110 1111 = |
| 1001 0000 = | 1011 0000 = | 1101 0000 = | 1111 0000 = |
| 1001 0001 = | 1011 0001 = | 1101 0001 = | 1111 0001 = |
| 1001 0010 = | 1011 0010 = | 1101 0010 = | 1111 0010 = |
| 1001 0011 = | 1011 0011 = | 1101 0011 = | 1111 0011 = |
| 1001 0100 = | 1011 0100 = | 1101 0100 = | 1111 0100 = |
| 1001 0101 = | 1011 0101 = | 1101 0101 = | 1111 0101 = |
| 1001 0110 = | 1011 0110 = | 1101 0110 = | 1111 0110 = |
| 1001 0111 = | 1011 0111 = | 1101 0111 = | 1111 0111 = |
| 1001 1000 = | 1011 1000 = | 1101 1000 = | 1111 1000 = |
| 1001 1001 = | 1011 1001 = | 1101 1001 = | 1111 1001 = |
| 1001 1010 = | 1011 1010 = | 1101 1010 = | 1111 1010 = |
| 1001 1011 = | 1011 1011 = | 1101 1011 = | 1111 1011 = |
| 1001 1100 = | 1011 1100 = | 1101 1100 = | 1111 1100 = |
| 1001 1101 = | 1011 1101 = | 1101 1101 = | 1111 1101 = |
| 1001 1110 = | 1011 1110 = | 1101 1110 = | 1111 1110 = |
| 1001 1111 = | 1011 1111 = | 1101 1111 = | 1111 1111 = |

FP 0-3 Operand, no dst & no src:

| 63 | 62 | | 32 |
|---|---|---|---|
| 1 | INTEGER INSTRUCTION HALF . . . | | |

| 31 | 30 | 29 | 28 | 27 | 26 | 25 | 24 | 23 | 22 | 21 | 20 | 19 | 18 | 17 16 15 14 13 12 | 11 | 10 09 08 07 06 | 05 | 04 03 02 01 00 |
|---|---|---|---|---|---|---|---|---|---|---|---|---|---|---|---|---|---|---|
| 0 | 0 | 0 | 0 | F | F | F | 0 | F | F | F | F | F | 1 | 0 0 0 0 0 | 0 | 0 0 0 0 0 | 0 | 0 0 0 0 0 0 |



| 31 | 30 | 29 | 28 | 27 | 26 | 25 | 24 | 23 | 22 | 21 | 20 | 19 | 18 | 17 16 15 14 13 12 | 11 | 10 09 08 07 06 | 05 | 04 03 02 01 00 |
|---|---|---|---|---|---|---|---|---|---|---|---|---|---|---|---|---|---|---|

FUNCTION CODE

| | | | |
|---|---|---|---|
| 0000 0000 = | 0010 0000 = | 0100 0000 = | 0110 0000 = |
| 0000 0001 = | 0010 0001 = | 0100 0001 = | 0110 0001 = |
| 0000 0010 = | 0010 0010 = | 0100 0010 = | 0110 0010 = |
| 0000 0011 = | 0010 0011 = | 0100 0011 = | 0110 0011 = |
| 0000 0100 = | 0010 0100 = | 0100 0100 = | 0110 0100 = |
| 0000 0101 = | 0010 0101 = | 0100 0101 = | 0110 0101 = |
| 0000 0110 = | 0010 0110 = | 0100 0110 = | 0110 0110 = |
| 0000 0111 = | 0010 0111 = | 0100 0111 = | 0110 0111 = |
| 0000 1000 = | 0010 1000 = | 0100 1000 = | 0110 1000 = |
| 0000 1001 = | 0010 1001 = | 0100 1001 = | 0110 1001 = |
| 0000 1010 = | 0010 1010 = | 0100 1010 = | 0110 1010 = |
| 0000 1011 = | 0010 1011 = | 0100 1011 = | 0110 1011 = |
| 0000 1100 = | 0010 1100 = | 0100 1100 = | 0110 1100 = |
| 0000 1101 = | 0010 1101 = | 0100 1101 = | 0110 1101 = |
| 0000 1110 = | 0010 1110 = | 0100 1110 = | 0110 1110 = |
| 0000 1111 = | 0010 1111 .= | 0100 1111 = | 0110 1111 = |
| 0001 0000 = | 0011 0000 = | 0101 0000 = | 0111 0000 = |
| 0001 0001 = | 0011 0001 = | 0101 0001 = | 0111 0001 = |
| 0001 0010 = | 0011 0010 = | 0101 0010 = | 0111 0010 = |
| 0001 0011 = | 0011 0011 = | 0101 0011 = | 0111 0011 = |
| 0001 0100 = | 0011 0100 = | 0101 0100 = | 0111 0100 = |
| 0001 0101 = | 0011 0101 = | 0101 0101 = | 0111 0101 = |
| 0001 0110 = | 0011 0110 = | 0101 0110 = | 0111 0110 = |
| 0001 0111 = | 0011 0111 = | 0101 0111 = | 0111 0111 = |
| 0001 1000 = | 0011 1000 = | 0101 1000 = FNOP | 0111 1000 = |
| 0001 1001 = | 0011 1001 = | 0101 1001 = | 0111 1001 = |
| 0001 1010 = | 0011 1010 = | 0101 1010 = | 0111 1010 = |
| 0001 1011 = | 0011 1011 = | 0101 1011 = | 0111 1011 = |
| 0001 1100 = MxPR | 0011 1100 = | 0101 1100 = | 0111 1100 = |
| 0001 1101 = | 0011 1101 = | 0101 1101 = | 0111 1101 = |
| 0001 1110 = | 0011 1110 = | 0101 1110 = | 0111 1110 = |
| 0001 1111 = | 0011 1111 = | 0101 1111 = | 0111 1111 = |

FP CONDITION CODES ARE NOT SET

## FP 0-3 Operand, no dst & no src:     (contd.)

FUNCTION CODE

| | | | |
|---|---|---|---|
| 1000 0000 = | 1010 0000 = | 1100 0000 = | 1110 0000 = |
| 1000 0001 = | 1010 0001 = | 1100 0001 = | 1110 0001 = |
| 1000 0010 = | 1010 0010 = | 1100 0010 = | 1110 0010 = |
| 1000 0011 = | 1010 0011 = | 1100 0011 = | 1110 0011 = |
| 1000 0100 = | 1010 0100 = | 1100 0100 = | 1110 0100 = |
| 1000 0101 = | 1010 0101 = | 1100 0101 = | 1110 0101 = |
| 1000 0110 = | 1010 0110 = | 1100 0110 = | 1110 0110 = |
| 1000 0111 = | 1010 0111 = | 1100 0111 = | 1110 0111 = |
| 1000 1000 = | 1010 1000 = | 1100 1000 = | 1110 1000 = |
| 1000 1001 = | 1010 1001 = | 1100 1001 = | 1110 1001 = |
| 1000 1010 = | 1010 1010 = | 1100 1010 = | 1110 1010 = |
| 1000 1011 = | 1010 1011 = | 1100 1011 = | 1110 1011 = |
| 1000 1100 = | 1010 1100 = | 1100 1100 = | 1110 1100 = |
| 1000 1101 = | 1010 1101 = | 1100 1101 = | 1110 1101 = |
| 1000 1110 = | 1010 1110 = | 1100 1110 = | 1110 1110 = |
| 1000 1111 = | 1010 1111 = | 1100 1111 = | 1110 1111 = |
| 1001 0000 = | 1011 0000 = | 1101 0000 = | 1111 0000 = |
| 1001 0001 = | 1011 0001 = | 1101 0001 = | 1111 0001 = |
| 1001 0010 = | 1011 0010 = | 1101 0010 = | 1111 0010 = |
| 1001 0011 = | 1011 0011 = | 1101 0011 = | 1111 0011 = |
| 1001 0100 = | 1011 0100 = | 1101 0100 = | 1111 0100 = |
| 1001 0101 = | 1011 0101 = | 1101 0101 = | 1111 0101 = |
| 1001 0110 = | 1011 0110 = | 1101 0110 = | 1111 0110 = |
| 1001 0111 = | 1011 0111 = | 1101 0111 = | 1111 0111 = |
| 1001 1000 = | 1011 1000 = | 1101 1000 = | 1111 1000 = |
| 1001 1001 = | 1011 1001 = | 1101 1001 = | 1111 1001 = |
| 1001 1010 = | 1011 1010 = | 1101 1010 = | 1111 1010 = |
| 1001 1011 = | 1011 1011 = | 1101 1011 = | 1111 1011 = |
| 1001 1100 = | 1011 1100 = | 1101 1100 = | 1111 1100 = |
| 1001 1101 = | 1011 1101 = | 1101 1101 = | 1111 1101 = |
| 1001 1110 = | 1011 1110 = | 1101 1110 = | 1111 1110 = |
| 1001 1111 = | 1011 1111 = | 1101 1111 = | 1111 1111 = |

MxPR detail:

| 63 | 62 | 61 | 60 | 59 | 58 | 57 56 55 54 53 52 51 | 50 49 48 | 47 | 46 | 45 | 44 43 42 41 40 39 38 37 36 35 34 33 32 |
|---|---|---|---|---|---|---|---|---|---|---|---|
| 1 | 1 | 1 | 1 | 1 | 1 | RC | RB | 0 | C | D | IP Processor Register Address |

| 31 | 30 | 29 | 28 | 27 | 26 | 25 | 24 | 23 22 21 20 19 18 17 | 16 15 14 13 12 | 11 10 09 08 07 06 05 04 03 02 01 00 |
|---|---|---|---|---|---|---|---|---|---|---|
| 0 | 0 | 0 | 0 | 0 | 0 | 0 | 0 | 1 1 1 0 0 1 | 0 0 0 0 0 | FP Processor Register Address |

FP CONDITION CODES ARE NOT SET

CD
‾‾
00   = MTPR
01   = MFPR
10
11   = MFPR, set condition codes in IP

| FP PROCESSOR REGISTER | USER MODE | SUPERVISOR MODE | ADDRESS (hex) |
|---|---|---|---|
| MxPR FP REGISTER FILE | R/W | R/W | 100 – 1FC |
| MTPR FP/IP TRAP STAT QUEUE | - | W | A10 |
| MxPR FP CSR | - | R/W | A04 |
| MxPR FP USER CSR | R/W | R/W | 204 |
| MxPR FP PSW | R/W | R/W | 200 |
| MFPR FP PC QUEUE (in MMU) | - | R | C40 |

For 64 bit MxPR instructions, the IP Processor Register Address equals the FP Processor Register Address except for an MTPR to the FP/IP TRAP STAT QUEUE where the IP Processor Register Address = 810, and the FP Processor Register Address = A10.

## Superposition of all FP 0-3 Operand opcodes:

63 62                                                                                          32

| 1 | INTEGER INSTRUCTION HALF . . . |
|---|---|

31 30 29 28 27 26 25 24 23 22 21 20 19 18 17 16 15 14 13 12 11 10 09 08 07 06 05 04 03 02 01 00

| 0 | 0 | X | Y | F | F | F | C | F | F | F | F | F | 1 | FRC | c | FRB | b | FRA | a |
|---|---|---|---|---|---|---|---|---|---|---|---|---|---|---|---|---|---|---|---|

### FUNCTION CODE

| | | | |
|---|---|---|---|
| 0000 0000 = DIV.fs | 0010 0000 = | 0100 0000 = | 0110 0000 = |
| 0000 0001 = DIV.fd | 0010 0001 = | 0100 0001 = | 0110 0001 = |
| 0000 0010 = SQRT.fs | 0010 0010 = | 0100 0010 = · | 0110 0010 = CVT.si |
| 0000 0011 = SQRT.fd | 0010 0011 = | 0100 0011 = | 0110 0011 = CVT.di |
| 0000 0100 = MULWN.fs | 0010 0100 = | 0100 0100 = . | 0110 0100 = |
| 0000 0101 = MULWN.fd | 0010 0101 = | 0100 0101 = | 0110 0101 = |
| 0000 0110 = MULNW.fs | 0010 0110 = | 0100 0110 = | 0110 0110 = CVT.is |
| 0000 0111 = MULNW.fd | 0010 0111 = | 0100 0111 = | 0110 0111 = CVT.id |
| | | | |
| 0000 1000 = MUL.fs | 0010 1000 = ABS.fs | 0100 1000 = | 0110 1000 = |
| 0000 1001 = MUL.fd | 0010 1001 = ABS.fd | 0100 1001 = | 0110 1001 = |
| 0000 1010 = | 0010 1010 = NEG.fs | 0100 1010 = | 0110 1010 = |
| 0000 1011 = | 0010 1011 = NEG.fd | 0100 1011 = | 0110 1011 = |
| 0000 1100 = | 0010 1100 = Mov/Class.fs | 0100 1100 = | 0110 1100 = |
| 0000 1101 = | 0010 1101 = Mov/Class.fd | 0100 1101 = | 0110 1101 = |
| 0000 1110 = | 0010 1110 = | 0100 1110 = | 0110 1110 = |
| 0000 1111 = | 0010 1111 = | 0100 1111 = | 0110 1111 = |
| | | | |
| 0001 0000 = | 0011 0000 = ADD.fs | 0101 0000 | 0111 0000 = |
| 0001 0001 = | 0011 0001 = ADD.fd | 0101 0001 = | 0111 0001 = |
| 0001 0010 = | 0011 0010 = SUB.fs | 0101 0010 = AFLAGR | 0111 0010 = CVTRZ.si |
| 0001 0011 = | 0011 0011 = SUB.fd | 0101 0011 = AFLAGW | 0111 0011 = CVTRZ.di |
| 0001 0100 = | 0011 0100 = CMPG.fs | 0101 0100 = AINTRR | 0111 0100 = UNWRAP.fs |
| 0001 0101 = | 0011 0101 = | 0101 0101 = AINTRW | 0111 0101 = UNWRAP.fd |
| 0001 0110 = | 0011 0110 = CMP.fs | 0101 0110 = AMODER | 0111 0110 = CVT.sd |
| 0001 0111 = | 0011 0111 = CMP.fd | 0101 0111 = AMODEW | 0111 0111 = CVT.ds |
| | | | |
| 0001 1000 = DIVG.fs | 0011 1000 = | 0101 1000 = FNOP | 0111 1000 = |
| 0001 1001 = | 0011 1001 = | 0101 1001 = | 0111 1001 = |
| 0001 1010 = | 0011 1010 = | 0101 1010 = MFLAGR | 0111 1010 = |
| 0001 1011 = | 0011 1011 = | 0101 1011 = MFLAGW | 0111 1011 = |
| 0001 1100 = MxPR | 0011 1100 = | 0101 1100 = MINTRR | 0111 1100 = IRND.fs |
| 0001 1101 = | 0011 1101 = | 0101 1101 = MINTRW | 0111 1101 = IRND.fd |
| 0001 1110 = | 0011 1110 = | 0101 1110 = MMODER | 0111 1110 = IRNDZ.fs |
| 0001 1111 = | 0011 1111 = | 0101 1111 = MMODEW | 0111 1111 = IRNDZ.fd |

— 142 —

## Superposition of all FP 0-3 Operand opcodes:    (contd.)

FUNCTION CODE

| | | | |
|---|---|---|---|
| 1000 0000 = | 1010 0000 = | 1100 0000 = | 1110 0000 = ADD.i |
| 1000 0001 = | 1010 0001 = | 1100 0001 = | 1110 0001 = |
| 1000 0010 = | 1010 0010 = | 1100 0010 = | 1110 0010 = |
| 1000 0011 = | 1010 0011 = | 1100 0011 = | 1110 0011 = |
| 1000 0100 = | 1010 0100 = | 1100 0100 = | 1110 0100 = |
| 1000 0101 = | 1010 0101 = | 1100 0101 = | 1110 0101 = SUB.i |
| 1000 0110 = | 1010 0110 = | 1100 0110 = | 1110 0110 = |
| 1000 0111 = | 1010 0111 = | 1100 0111 = | 1110 0111 = NEG.i |
| 1000 1000 = | 1010 1000 = | 1100 1000 = | 1110 1000 = |
| 1000 1001 = | 1010 1001 = | 1100 1001 = | 1110 1001 = |
| 1000 1010 = | 1010 1010 = | 1100 1010 = | 1110 1010 = |
| 1000 1011 = | 1010 1011 = | 1100 1011 = | 1110 1011 = |
| 1000 1100 = | 1010 1100 = | 1100 1100 = | 1110 1100 = |
| 1000 1101 = | 1010 1101 = | 1100 1101 = | 1110 1101 = |
| 1000 1110 = | 1010 1110 = | 1100 1110 = | 1110 1110 = |
| 1000 1111 = | 1010 1111 = | 1100 1111 = | 1110 1111 = |
| 1001 0000 = | 1011 0000 = | 1101 0000 = | 1111 0000 = DIV.i. |
| 1001 0001 = | 1011 0001 = | 1101 0001 = | 1111 0001 = |
| 1001 0010 = | 1011 0010 = | 1101 0010 = | 1111 0010 = |
| 1001 0011 = | 1011 0011 = | 1101 0011 = OR.i | 1111 0011 = |
| 1001 0100 = | 1011 0100 = | 1101 0100 = | 1111 0100 = |
| 1001 0101 = | 1011 0101 = | 1101 0101 = AND.i | 1111 0101 = |
| 1001 0110 = | 1011 0110 = | 1101 0110 = | 1111 0110 = |
| 1001 0111 = | 1011 0111 = | 1101 0111 = | 1111 0111 = |
| 1001 1000 = | 1011 1000 = | 1101 1000 = | 1111 1000 = |
| 1001 1001 = | 1011 1001 = | 1101 1001 = NOT.i | 1111 1001 = |
| 1001 1010 = | 1011 1010 = | 1101 1010 = COPY.fs | 1111 1010 = |
| 1001 1011 = COPY.fd | 1011 1011 = | 1101 1011 = | 1111 1011 = |
| 1001 1100 = | 1011 1100 = | 1101 1100 = | 1111 1100 = MULUL.i |
| 1001 1101 = | 1011 1101 = | 1101 1101 = | 1111 1101 = |
| 1001 1110 = | 1011 1110 = | 1101 1110 = | 1111 1110 = |
| 1001 1111 = | 1011 1111 = | 1101 1111 = XOR.i | 1111 1111 = MULSL.i |

## 9.0 REGISTER FILE CHIP (FRF)

### 9.1 GENERAL

The requirements for the register file is to have 64 locations each 32 bits wide. The size of the general purpose register file and the number of signals required dictates using two identical chips. One chip will handle the upper half of a 32 bit word and the other chip will handle the lower half. The register file can be read and written in 25ns. This feature will be used to obtain the highest bandwidth in order to run the FMUL and FALU at their highest rates.

### 9.2 SIMPLE OVERVIEW

FIG 9.1 shows a simplified block diagram of the register files connected to the FMUL and FALU. The register file has two write ports and three read ports. The X and Y read ports will be read in a 25ns cycle with data being held in the AX,AY, MX,MY HOLD REGS. This allows a 5OP double precision or single precision operation to take place with the results of the FALU and FMUL being available to write into the register file at the same time. The 5OP double precision timing is used as a template for all operations. This is shown in FIG 2.4 titled 'STREAM OF DP 5 – OP INSTRUCTIONS'.

Bypassing paths are provided both in the register file (internal bypass), and through the external bypass muxes.

The third read port is dedicated solely to STORES. This port directly feeds the CDOUT REG.

There are only two write ports and the results of the FALU and FMUL must be written simultaneously. This leaves the LOAD with no port. The register file can be written in 25ns and therefore the MZIN port is time shared.

There are two identical Floating Point Register File chips which together form a 64 location by 32 bit file.

FIG 9.1

FLOATING POINT REG
FILE, FALU AND FMPY
BLOCK DIAGRAM

FLOATING POINT REGIS'
FILE SLICE

FIG 9.3

## 9.3 REGISTER FILE ORGANIZATION

The register file is organized as 32 words by 64 bits, this is the size of a DP operand (see below). A read to the register file will always read a 64 bit quantity, i.e. that needed for a DP operand. If a SP operand is required then it is selected by an appropriate mux level.

The cache data bus is mapped to the register file as shown below. If the

msw bits of the cache data bus are to be written into an odd SP register, then the data rotator before CDIN REG duplicates the msw on the lsw bits. The write is controlled by the appropriate write enables.

| CACHE DATA BUS | | bits 63:32 | bits 31:0 | |
| REGISTER FILE  SP | | SP0 | | SP1 | |
| REGISTER FILE DP | | | DP0 | | |

A write to the register file is performed by loading the AZIN or MZIN with 64 bits of data and asserting the appropriate write enable bits for a SP or DP operation.

. The following table lists the various write operations for AZIN

AZIN REG CONTENTS

| |UPPER 32 BITS| | |LOWER 32 BITS| | |WREN[1:0] BITS| | |
| --- | --- | --- | --- |
| msw | lsw | 3 | DP operation |
| lsw | lsw | 1 | SP operation to odd reg |
| lsw | lsw | 2 | SP operation to even reg. |
| x | x | 0 | no write. |

## 9.3 DATA PATH FLOW

FIG 9.3 shows the data path registers and muxes for an FRF slice. The following is an explanation of the functions  of each part.

## 9.3.1 AZIN AND MZIN PATHS

The AZ MSW and MZ MSW registers are there to hold the msw, transferred in the first 25ns time slot, for a DP transfer from the FALU AZ REG and FMUL MZ REG. The second 25ns time slot transfers the lsw, and the msw and lsw are clocked into the AZRES and MZRES REGS. 25 ns later the contents of the AZRES and MZRES regs are clocked into the AZIN and MZIN regs of the GPR. Note that for a SP operation the lsw is transferred from the FALU AZ REG and FMUL MZ REG in both the first and second 25ns time slots. The lsw is therefore loaded in the msw reg, i.e. duplicating the lsw in both halves of the RES regs, and thus the lsw data can be written to either the odd or even SP REG depending on the write enables.

There is one mux in the MZIN path whose purpose is to time multiplex the MZ result write with a LOAD write. i.e create another write port to the GPR.

## 9.3.2 AX,AY,MX,MY PATHS

The HLD registers are used to hold the source operand for 50ns for the subsequent msw/lsw transfer to the FALU and FMUL. These registers will hold the results of the register file read if an E_STALL occurs. The input mux to the MX and MY

HLD regs is to bypass load data required for the operand of a MUL operation under certain bypass and stall conditions.

There are two types of DLY registers which contain the required source operand. The RES DLY reg holds either the AZ RES or MZ RES result which may be bypassed to the appropriate operand. The AX,AY,MX,MY DLY regs contain data from a load operation, data from the GPR register or data bypassed through the GPR because it is not yet available from the GPR reg. The DLY regs have a delayed clock to match the timing transfer of data to the FALU and FMUL.

The first muxes after the HLD regs are external bypass muxes for load data being bypassed to the DLY regs.

The first mux after the DLY regs selects the ALU or MUL RES to be bypassed or the HLD reg.

The second mux after the DLY regs controls the msw/lsw data transmission to the FALU and FMUL chips. This is always selecting msw/lsw for DP operations and SP operations using an odd register. The transfer will be lsw/lsw for a SP operation using an even register. This transfer is controlled by the same clock that loads the MX,MY or AX,AY regs in the FMUL and FALU chips respectively.

### 9.3.3 DATA IN, DATA OUT PATHS

The data in path has a data rotator that for single precision operations duplicates either the lsw or msw portions of the cache data for loading into CDIN REG. The data rotator is controlled by EASRCBD 2 and IP_OPSIZE 0 sourced by the IP or MMU. The WREN signals control whether the odd or even SP register is written.

The data out path has a data rotator whose function is the same as the data in rotator. The rotation is controlled by the ST_V 1:0 bits from the FPC. This means that the data from the odd or even SP reg is duplicated in CDOUT REG such that the cache data bus msw is the same as the lsw.

### 9.4 BYPASSING

Bypassing is needed when a source operand is required that is not yet available from the register file but is available from the AZ RES, MZ RES, AZ IN, MZ IN or CDIN register. Instead of waiting to read the data from the register file after it is written, the data is bypassed to it's target before or at the same time it is being written. There are two ways of bypassing used, one is the internal bypassing of the GPR, the second is external bypassing. FIG 9.4 shows the important features of the bypassing circuitry.

The following table lists the bypassing modes and which muxes are selected.

FIG. 9.4

F BYPASSING

| OPERATION | MUX |
|---|---|
| MUL – MUL | EXT MUX –MZ2MX,MY, RES2MX,MY |
| MUL – MUL | INT MUX – X,Y FROM RFILE, X,Y FROM MUL |
| ALU – ALU | EXT MUX – AZ2AX,AY, RES2AX,AY |
| ALU – ALU | INT MUX – X,Y FROM RFILE, X,Y FROM MUL |
| MUL – ALU | EXT MUX – AZ2AX,AY, RES2AX,AY |
| MUL – ALU | INT MUX – X,Y FROM RFILE, X,Y FROM MUL |
| ALU – MUL | EXT MUX – AZ2MX,MY, RES2MX,MY |
| ALU – MUL | INT MUX – X,Y FROM RFILE, X,Y FROM MUL |
| LOAD – MUL | EXT MUX – CD2MX,MY, CD2MX,MY_LB2,LB3 |
| LOAD – MUL | INT MUX – X,Y FROM RFILE, X,Y FROM MUL |
| LOAD – ALU | EXT MUX – CD2AX,AY |
| LOAD – ALU | INT MUX – X,Y FROM RFILE, X,Y FROM MUL |

## 9.4.1 COMPARE CIRCUITRY

The bypass circuitry is activated whenever a valid AZ, MZ ADR or LD ADR compares with an operand address. There are no valid bits associated with the operand address because if the bypass is invoked and the address is invalid, then it's a don't care.

Thus as long as the addresses into the FRF chip are in the correct time slots then the bypass circuitry is automatically activated. An example for the MUL – MUL operation is shown below.

MZ_ADR 5:1 compares to MX,MY ADR 5:1

| MZ_WREN 1:0 | MX,MY LSW_SEL | |
|---|---|---|
| 00 | – | No bypass, MZ_ADR not valid |
| 01 | 0 | Bypass lsw, not used, only SP ODD required |
| 01 | 1 | Bypass lsw, used for SP ODD |
| 10 | 0 | Bypass msw, used for SP EVEN |
| 10 | 1 | Bypass msw, not used, only SP EVEN required |
| 11 | 1 | Bypass msw and lsw, DP operation |

Note for DP operation MX,MY LSW_SEL is always set to a one for the correct msw/lsw transfer to the FALU and FMUL. If a double precision LOAD contains the source operand required by a single precision MUL, then the address compare enabled with MZ_WREN 1:0 will bypass the correct 32 bits. i.e. the other 32 bits are not bypassed. The same is true with a single precision being passed to a double precision, the appropriate 32

bit bypass is controlled by the write enables.

All the other compares follow the same pattern.

FIG 9.4.1 shows the source and destination address pipes that are used for activating the bypass paths.

FIG 9.4.2 shows which addresses are compared to determine which bypass muxes are selected. Each compare block is for a given bypass case. i.e. M – M is the result of a MUL operation being bypassed as the source of a following MUL. Each compare is validated by the write enable signals.

FIG 9.4.3 shows how the compare results of FIG 9.4.2 are used to obtain the external bypass mux control signals. Note that an ESTALL will cause a different compare result to be checked for bypass. This is because the address in the decode stage that is used for the compare with no ESTALL is moved to the RFR stage after an ES-TALL occurs.

FIG 9.4.4 shows how the compare results of FIG 9.4.2 are used to obtain the internal GPR bypass controls.

The LOAD to MUL bypass presents a different situation than the other operations because the bypass is completed before an E_STALL is determined. The by-pass compare must be saved until the LOAD data is signalled valid. The LOAD data is bypassed to the DLY REG in case the mul pipe starts . The LOAD data is also bypassed to the HLD REG (and held there) in case the mul pipe stalls for n cycles before proceeding.

## 9.5 INTEGER DIVIDE

This is handled by converting the integer operands and then performing an FP double precision divide, then converting back to integer, as described in Chapter 2, Section 2.1.3, Divide/Sqare Root Control.

The FPC has a sequencer that controls all the necessary operations. The FRF has the converted MX operand in the AZIN REG and the converted MY operand in the AZRES REG when both operands have to be bypassed simultaneously to start the DP divide.

The DIV_MODE_SEL signal from the FPC indicates that a DIVI is in progress. The FRF derives the source and result bypass from a timing chain activated by the DIV_MODE_SEL signal. The signals DIV_SRC_BYP and DIV_RES_BYP must over-ride any pipeline disables, (caused by an E_STALL), that would prevent the integer divide from completing if it has progressed past it's RFR stage.

MUL, ALU SRC ADR PIPE

LOAD DEST, STORE SRC ADR PIPE

MUL DEST ADR PIPE

ALU DEST ADR PIPE

CKE = 50NS

LOCATION OF FUNCTION

FPC

FRF

SRC AND DEST ADR PIPES FOR BYPASS        FIG 9.4.1

— /52 —

BYPASS COMPARE AND ENABLE

FIG 9.4.2

9-10

Feb 18, 1988

-153-

**GENERATION OF EXTERNAL BYPASS MUX CONTROL**

**FIG 9.4.3**

WL PLEN

CD2AX,AY DEC

CD2AX,AY RFR

ESTALL

AX,AY FROM MZIN

DIV SRC BYP
(X FROM MUL ONLY)

MX,MY FROM AZIN
MX,MY FROM MZIN
MX,MY ADR LSB

COMB
LOGIC

OR

AZ2MX,MY
MZ2MX,MY
MX,MY ADR RFR LSB

COMB
LOGIC

ESTALL

FIRST HALF

X,Y FROM MUL

AX,AY FROM MZIN

MX,MY FROM AZIN
MX,MY FROM MZIN
DIV SRC BYP
(X FROM RFILE ONLY)

COMB
LOGIC

RES2MX,MY

ESTALL

FIRST HALF

X,Y FROM RFILE

GENERATION OF INTERNAL GPR BYPASS CONTROL

FIG 9.4.4

9-12     Feb 18, 1988

— 155 —

# 10. TIMING CONSIDERATIONS

## 10.1 GENERAL

In order to take advantage of the speed capabilities of the FMUL and FALU, the register file read and write must be performed at 25ns. The register file chips are CMOS gate arrays with a large clock tree skew and they interface to TTL FMUL and FALU chips whose internal logic is ECL. The clock skews of the TTL chips is far less than the CMOS. In order to meet the timing, a delay line is used to delay the clocks to the FALU and FMUL. This helps the critical path timing of 25ns data transfers to and from the FRF and the FALU and FMUL chips.

## 10.2 DATA TRANSFER FROM FALU AND FMUL TO FRF

The clock tree in the FRF causes the hold time of the AZRES, MZRES and associated MSW regs to be a problem when transferring data from the FALU and FMUL chips. In order to rectify this, the clock loading the AZ and MZ regs in the FALU and FMUL chips will be delayed with respect to the 25ns clock loading the MSW reg and the 50ns clock loading AZRES and MZRES. See FIG 10.2.2. The AZ and MZ regs will therefore be clocked with a 50ns clock delayed by 9ns. This is indicated by CK50D in FIG 10.2.2

The 32 bit data path to the FRF is time multiplexed for DP transfers. i.e. the msw is transferred in the first 25ns and held in the msw register in the FRF chips. The second 25ns transfers the lsw and at the end of a 50ns clock period the lsw and msw are simultaneously written into AZRES or MZRES regs. The switching of the mux must be closely tied to the clocking of the AZ and MZ regs. To achieve this, the same clock CK50D is connected to the mux control. The aspect ratio of the clock must be closely controlled for the msw/lsw transfer.

### 10.2.1 SETUP TIMING

Consider the following parameters:-
Clk to output of FMUL = 3ns min, 15ns max (0 – 70 degrees C, 4.75V–5.25V, 30pf)
Clk tree delay min = 4.2ns (Tj=30 degrees C, 5.25V)
Clk tree delay max = 10.6ns (Tj=70 degrees C, 4.75V)
CLK50D = CLK50 + (10ns max, 8ns min).
CLK25 skew to CLK50 is 2ns.
Junction temperature range for FRF is 30 – 70 degrees C.
Difference in delay between two similar paths is 15% max.
Worst case setup is with slowest FRF. (4.75V, 70 degrees C)

input
pin

DATA
PATH

**FMUL TO FRF
PATH**

MSW ◁ —— CLK TREE —— CK25

MZRES ◁ —— CLK TREE —— CK50

**FIG 10.2**

MZ ◁ —— CK50D

—— CK50D

output pin

DLY REG ◁ —— CLK TREE —— CK50D

**FRF TO FMUL
PATH**

bypass mux

**FIG 10.3**

CK50D    msw/lsw mux

output pin

input
pin

effective capacitance = 30pf max
10pf min

CK50D —▷ MZ

MZ ◁ —— CK50D

**MAX DATA PATH + SET UP < MIN CLOCK PATH**
**10ns (clock dly)+15ns(FMUL)+4ns(data path) + SET UP < −2ns(clk skew)+(10.6 x**
**.85)(clk tree)+25ns(cycle time)**

$$29.0ns + SET\ UP < 32ns$$

There are 3.0ns available to cover set up and pulse width variation.

## 10.2.2 HOLD TIMING

The hold timing is worst for the slow FRF case.

$$MIN\ DATA\ PATH > MAX\ CLK\ PATH + HOLD$$

8ns(clk dly)+3ns(FMUL)+(4ns x .85)(data path) > 2ns(clk skew)+10.6ns(clock tree)+HOLD

$$14.4ns > 12.6ns + HOLD$$

This allows 1.8ns for the hold and clock width variation.

## 10.3 DATA TRANSFER FROM FRF TO FMUL

The path for the transfer of data from the FRF to the FMUL is shown in FIG 10.3. The FMUL performs operations in 50ns or multiples of 50 ns. This fixes the MY and MX regs to use CLK50D the same as the MZ REG. The data for a DP operation is transferred with the msw in the first 25ns and the lsw in the second 25ns. The msw is held in a latch in the FMUL until the lsw is valid and then both are written into the MX and MY regs. For skew reasons the msw latch and the msw mux must all use the same clock. Note that this gives a guarantee on meeting the hold time of the msw latch.

The source DLY registers are all clocked with CLK50D so the data transfer is related to the same clock.

## 10.3.1 SETUP TIMING

The worst set up will be the slow FRF from the source register to the msw latch. This assumes that the mux selects will be designed to be no worse than the data path.

The FMUL setup time is 2ns and the hold time is 1ns over worst case conditions.

$$MAX\ DATA\ PATH + SETUP < MIN\ CLOCK\ PATH$$

10.6ns (clock tree) + max data path + 2ns (setup) < 25ns

$$12.6ns + max\ data\ path < 29ns$$

This leaves 16.4ns for the data path and clock width variation.

## 10.3.2 HOLD TIMING

The same clock is used for transmitting and receiving data, and the clock line will be run to the FMUL and FALU chips first, so th: guarantees that hold time will be met.

## 10.4 DATA TRANSFER FROM FRF TO FALU

The same problems apply as described in 10.3. In addition the FALU operation, DP or SP, is performed in 25ns. AX and AY are latches, and must use a different clock from the AZ reg. CLK50DI is therefore an inverted version of CLK50D. For the same reasons as described in 10.3, the msw latch and msw mux must all use CLK50DI.

## 10.5 DATA TRANSFER TO AND FROM THE CACHE DATA BUS

The CDOUT REG and CDIN REG must send and receive data to registers clocked at 50ns. Therefore all data transfers to chips outside the FPU will be done with the standard 50ns clock. The translation to CLK50D and CLK50DI will be done inside the FRF.

## 10.6 REGISTER CLOCK ALLOCATION

FIG 10.6 shows the registers in the data paths and the type of clock allocated to each register

## 10.7 CLOCK DISTRIBUTION REQUIREMENTS

FIG 10.7 shows the required clock distribution from the scan chip

FIG 10.6

FPU CLOCK ALLOC.

CKE = 50NS CLOCK
CKO = 50NS CLOCK DLYD 25NS
CK25 = 25NS CLOCK
CK50D= 50NS CLOCK DLYD 5NS
CK50DI = 50NS CLOCK DLYD AND INVERTED

CLOCK REQUIREMENTS
CK50D delayed 9ns + or − 1ns, pulse width 25ns + or − 1ns, LOAD = 10
LOAD = 6
All other clocks + or − 2ns skew at chip.

FIG 10.7

FPU CLOCKS

10-6                    Feb 18, 1988